(19) Europäisches Patentamt
European Patent Office
Office européen des brevets

(11) EP 3 306 487 A1

(12) # EUROPEAN PATENT APPLICATION
published in accordance with Art. 153(4) EPC

(43) Date of publication:
**11.04.2018 Bulletin 2018/15**

(21) Application number: **15894152.6**

(22) Date of filing: **01.06.2015**

(51) Int Cl.:
***G06F 17/30** (2006.01)*

(86) International application number:
**PCT/JP2015/065812**

(87) International publication number:
**WO 2016/194117 (08.12.2016 Gazette 2016/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Fujitsu Limited**
**Kawasaki-shi, Kanagawa 211-8588 (JP)**

(72) Inventor: **OHBITSU, Toshiro**
**Kawasaki-shi**
**Kanagawa 211-8588 (JP)**

(74) Representative: **Haseltine Lake LLP**
**Lincoln House, 5th Floor**
**300 High Holborn**
**London WC1V 7JH (GB)**

(54) **INFORMATION PROCESSING DEVICE AND FACILITY INFORMATION PROVISION PROGRAM**

(57) An information processing apparatus (101) calculates based on a position, traveling speed and traveling direction of the information processing apparatus (101) at a current time point ($t_0$), a position of the information processing apparatus (101) at a time point (t) subsequent to the current point ($t_0$). The information processing apparatus (101) sets for the position (P) calculated for the time point (t), a region that is enlarged according to a temporal difference (T) of the current time point (to) and the time point (t). The information processing apparatus (101) outputs information related to a facility present in the set region. As a result, even when a user of the information processing apparatus (101) is traveling by car, etc., information may be provided to the user effectively.

FIG.1

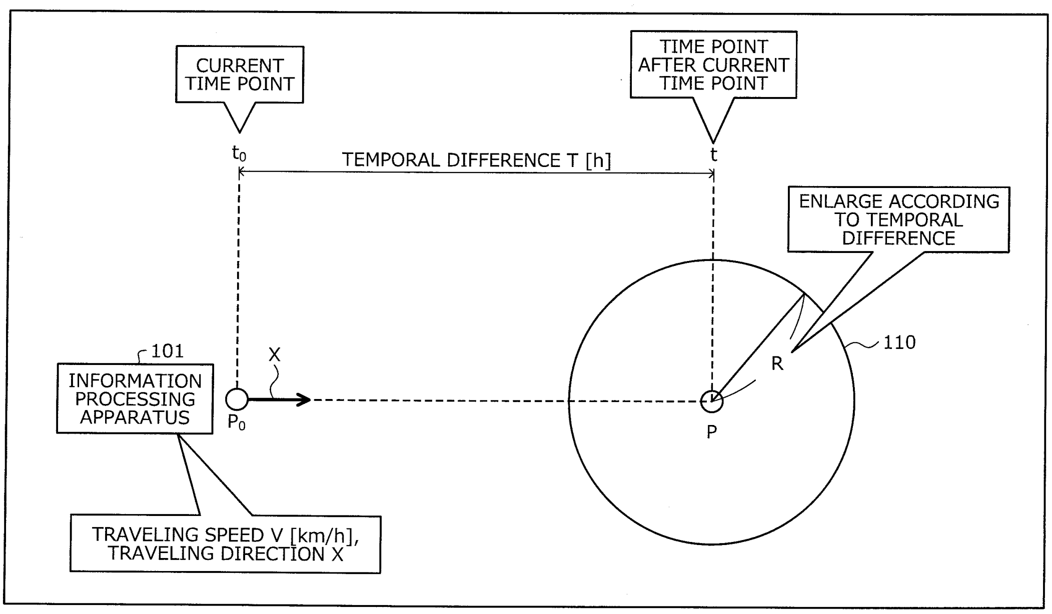


EP 3 306 487 A1

## Description

TECHNICAL FIELD

The present invention relates to an information processing apparatus and a facility information providing program.

BACKGROUND ART

Recently, with the spread of a function called geo-fence that utilizes position information of terminal devices, geo-fence applications are also being provided. Geo-fence is a word that means a geographical border (fence) and is a function of detecting entrance into and exiting from a virtual region configured on a map defined by geo-fence boundaries.

One example of a service utilizing geo-fence configures, as a geo-fence border, a virtual circle centered about a store on a map and delivers coupon information, etc. for the store to terminal devices that enter the geo-fence border. A server on the service provider side, for example, detects through the Internet, position information that is transmitted from the terminal devices and thereby detects entering and exiting with respect to the geo-fence border to provide information to the terminal devices entering the geo-fence border.

According to one related technique, at a mobile device, corresponding to a determination that a dynamic user profile representing the current inferable user behavior context should transition from a first state to a second state, transition is caused and one or more functions are affected to be operable. There is also a technique for generating with high precision even in locations with a complex spatial structure, neighboring regions defined for each mobile object and having a continuous distribution.

According to another technique, a first group of pseudo distance measurements received by a geo-fence device is used to determine an immediate reference point, a dynamic geo-fence area referring to the immediate reference point is specified, and a position determined using a second group of pseudo distance measurements is compared with the geo-fence area. There is also an entrance and exit test of comparing a position fix with various thresholds and parameters to determine whether an asset has entered or exited a geographical border.

Patent Document 1: Published Japanese-Translation of PCT Application, Publication No. 2014-510429
Patent Document 2: Japanese Laid-Open Patent Publication No. 2013-246113
Patent Document 3: Japanese Laid-Open Patent Publication No. 2014-013586
Patent Document 4: Published Japanese-Translation of PCT Application, Publication No. 2012-505481

DISCLOSURE OF INVENTION

PROBLEM TO BE SOLVED BY THE INVENTION

However, with the conventional techniques, when information is provided using a geo-fence, in some instances, the information may not be effectively provided to users that are traveling by car, for example.

According to one aspect of the present invention, an object is to provide an information processing apparatus and a facility information providing program that effectively provide information to users.

MEANS FOR SOLVING PROBLEM

According to one aspect of the present invention, an information processing apparatus and a facility information providing program are proposed that calculate based on a first position, a traveling speed, and a traveling direction of the information processing apparatus at a current time point, a second position of the information processing apparatus at a time point subsequent to the current time point; set a region for the second position calculated for the time point, the region being enlarged according to a temporal difference of the current time point and the time point; and output information related to a facility present within the set region.

According to another aspect of the present invention, an information processing apparatus and a facility information providing program are proposed that obtain acceleration information that may identify acceleration of a mobile terminal apparatus in a direction toward a specific facility; set based on the acceleration information and for a position of the specific facility, a first region that is enlarged or reduced according a magnitude of the acceleration in the direction toward the specific facility; and transmit facility information related to the specific facility to the mobile terminal apparatus, when the set first region and a second region set for a position of the mobile terminal apparatus intersect.

EFFECT OF THE INVENTION

According to an embodiment of the present invention, an effect is achieved in that information may be effectively provided to users.

BRIEF DESCRIPTION OF DRAWINGS

FIG. 1 is a diagram of one example of an information processing apparatus 101 according to a first embodiment;
FIG. 2 is a diagram depicting an example of system configuration of an information providing system 200 according to the first embodiment;
FIG. 3 is a block diagram depicting an example of hardware configuration of a mobile terminal apparatus 201;
FIG. 4 is a block diagram depicting an example of hardware configuration of a management server 202, etc.;
FIG. 5 is a diagram depicting an example of contents stored by a user ID management DB 220;
FIG. 6 is a diagram depicting an example of contents stored by a registered building management DB 230;
FIG. 7 is a diagram depicting an example of contents stored by a map information management DB 240;
FIG. 8 is a diagram depicting an example of contents stored by an event information DB 250;
FIG. 9 is a diagram depicting an example of contents stored by a facility/position information management DB 260;
FIG. 10 is a diagram depicting an example of a particular-event input screen;
FIG. 11 is a block diagram depicting an example of functional configuration of the mobile terminal apparatus 201;
FIG. 12 is a block diagram depicting an example of functional configuration of the management server 202;
FIG. 13 is a diagram depicting an example of setting geo-fence borders;
FIG. 14 is a diagram (part 1) depicting an example of setting geo-fence borders during route guidance;
FIG. 15 is a diagram (part 2) depicting an example of setting geo-fence borders during route guidance;
FIG. 16 is a diagram (part 3) depicting an example of setting geo-fence borders during route guidance;
FIG. 17 is a diagram depicting an example of a notification screen;
FIG. 18 is a flowchart (part 1) depicting an example of a procedure of a facility information providing process by the mobile terminal apparatus 201 according to the first embodiment;
FIG. 19 is a flowchart (part 2) depicting an example of the procedure of the facility information providing process by the mobile terminal apparatus 201 according to the first embodiment;
FIG. 20 is a flowchart depicting an example of a detailed procedure of a target facility setting process;
FIG. 21 is a flowchart depicting an example of a detailed procedure of a geo-fence creating process;
FIG. 22 is a flowchart (part 1) depicting an example of a procedure of a facility information providing process by the management server 202 according to the first embodiment;
FIG. 23 is a flowchart (part 2) depicting an example of the procedure of the facility information providing process by the management server 202 according to the first embodiment;
FIG. 24 is a diagram of one example of an information processing apparatus 2401 according to a second embodiment;
FIG. 25 is a diagram depicting an example of system configuration of an information providing system 2500 according to the second embodiment;
FIG. 26 is a diagram depicting an example of contents stored by an event information DB 2510;
FIG. 27 is a block diagram depicting an example of functional configuration of a mobile terminal apparatus 2502;
FIG. 28 is a diagram depicting a setting example of a terminal geo-fence;
FIG. 29 is a block diagram depicting an example of functional configuration of a management server 2501;
FIG. 30 is a diagram (part 1) depicting a setting example of a facility geo-fence;
FIG. 31 is a diagram (part 2) depicting a setting example of the facility geo-fence;
FIG. 32 is a diagram depicting an example of intersection of the terminal geo-fence and the facility geo-fence;
FIG. 33 is a diagram (part 1) depicting an example of screen transition of the mobile terminal apparatus 2502;
FIG. 34 is a diagram (part 2) depicting an example of screen transition of the mobile terminal apparatus 2502;
FIG. 35 is a flowchart (part 1) depicting an example of a procedure of a facility information providing process by the mobile terminal apparatus 2502 according to the second embodiment;
FIG. 36 is a flowchart (part 2) depicting an example of the procedure of the facility information providing process by the mobile terminal apparatus 2502 according to the second embodiment;
FIG. 37 is a flowchart (part 3) depicting an example of the procedure of the facility information providing process by the mobile terminal apparatus 2502 according to the second embodiment;
FIG. 38 is a flowchart (part 1) depicting an example of a procedure of a facility information providing process by the management server 2501 according to the second embodiment;
FIG. 39 is a flowchart (part 2) depicting an example of the procedure of the facility information providing process by the management server 2501 according to the second embodiment; and

FIG. 40 is a flowchart (part 3) depicting an example of the procedure of the facility information providing process by the management server 2501 according to the second embodiment.

BEST MODE(S) FOR CARRYING OUT THE INVENTION

Embodiments of an information processing apparatus and a facility information providing program will be described in detail with reference to the accompanying drawings.

(First embodiment)

FIG. 1 is a diagram of one example of an information processing apparatus 101 according to a first embodiment. In FIG. 1, the information processing apparatus 101 is a computer that outputs facility related information. For example, the information processing apparatus 101 is a terminal device such as smartphone, tablet terminal, note personal computer (PC), etc. A facility is, for example, an eating establishment, a gas station, an amusement park, a movie cinema, or the like.

In this regard, there is a function called geo-fence that with respect to a point on a map, configures a region centered about the point, a so-called geo-fence border, and detects entrance into and exiting from the geo-fence border. According to one service utilizing the geo-fence function, for example, coupon information for a store is delivered to a terminal device that has entered a geo-fence border configured to be centered about the store on a map.

Coupon information for a store and the like is often dynamic information that is updated from time to time and managed by a server on the service provider side. Thus, for example, there is a system in which a server on the service provider side detects through the Internet, position information transmitted from terminal devices and thereby detects entrance into and exiting from a geo-fence border to provide information to a terminal device that has entered inside the geo-fence border.

However, in a case where the user of a terminal device is traveling such as by car or motorcycle, when the terminal device is detected by the server side to have entered inside the geo-fence border and information is transmitted, the terminal device may be positioned outside the geo-fence border. In other words, the user is provided information, etc. for a store that the user has already passed.

Although it is conceivable for the geo-fence border to be configured to cover a wide range with consideration of the terminal device traveling at a high speed, when the geo-fence border is configured to cover a wide range, information for a distant location is provided to the user and thus, a large amount of information is provided whereby the user may become confused.

When information is provided using geo-fence in this manner, the information may not be effectively provided to a user that is traveling such as by car or motorcycle.

Thus, in the present embodiment, a facility information providing method of effectively providing information to a user that is traveling by, for example, car or motorcycle will be described. Here, a processing example of the information processing apparatus 101 will be described.

(1) The information processing apparatus 101 calculates the position of the information processing apparatus 101 at a time point t subsequent to the current time point $t_0$, based on the position, traveling speed, and traveling direction of the information processing apparatus 101 at the current time point $t_0$. Here, the position of the information processing apparatus 101 is expressed by, for example, latitude and longitude specifying 1 point on a map.

The position at the current time point $t_0$ may be identified from, for example, position information from a Global Positioning System (GPS) unit or position information obtained from a short-range, wireless communications device. An example of short-range, wireless communication includes, for instance, communication that utilizes a wireless local area network (LAN), Bluetooth (registered trademark), or the like.

The traveling speed is identified from, for example, a value output by a speedometer. The traveling direction may be obtained from, for example, the position at a time before the current time point $t_0$ and the position at the current time point $t_0$. When route guidance to a destination is being given, the information processing apparatus 101 may identify the direction along the guided route as the traveling direction.

In the example depicted in FIG. 1, a temporal difference of the current time point $t_0$ and a time point t is denoted as "T[h]", the traveling speed is denoted as "speed V[km/h]", and the traveling direction is denoted as "direction X". Further, the position at the current time point $t_0$ is denoted as "position $P_0$", the position at a time point t is denoted as "position P". In this case, the information processing apparatus 101 may calculate as the position P at a time point t, a position reached by traveling from the position $P_0$ at the current time point $t_0$ in the direction X for a distance $(V \times T)$[km].

(2) The information processing apparatus 101 configures for the position P calculated for the time point t, a larger region according to the temporal difference T of the current time point $t_0$ and the time point t. In particular, for example, the information processing apparatus 101 configures, as a geo-fence border 110, a circular region that is centered about the position P on a map and has a radius R, where the radius R is a value that increases according to the temporal difference T of the current time point $t_0$ and the time point t.

(3) The information processing apparatus 101 outputs information related to a facility present within the set region. Here, information related to a facility may be, for example, basic information such as the name, address, telephone number, etc. of the facility or may be a coupon that may be used at the facility, event information for an event being held, etc.

In particular, for example, first, the information processing apparatus 101 determines whether a predetermined facility is present within the geo-fence border 110 configured for the position P at the time point t. A predetermined facility may be, for example, a facility specified by the user of the information processing apparatus 101 or may be a facility preregistered in the information processing apparatus 101.

The information processing apparatus 101, when determining that a predetermined facility is present within the geo-fence border 110, outputs information related to the predetermined facility. In particular, for example, the information processing apparatus 101 may associate and display on a map displayed on a display screen (not depicted), information related to the predetermined facility.

Information related to a predetermined facility may be obtained from, for example, a server (for example, a management server 202 depicted in FIG. 2) configured to manage information related to facilities. However, when information related to a predetermined facility is stored in a storage apparatus of the information processing apparatus 101, the information processing apparatus 101 may read the information out from the storage apparatus.

In this manner, according to the information processing apparatus 101, the position P of the information processing apparatus 101 at a time point t subsequent to the current time point $t_0$ may be estimated and the region for the position P at the time point t may be configured as a geo-fence border to be enlarged according to the temporal difference T of the current time point $t_0$ and a time point t. As a result, even when the user of the information processing apparatus 101 is traveling by car, motorcycle, etc., information may be provided effectively to the user.

For example, the range of a geo-fence border configured for a position P to which travel is predicted may be enlarged according to the temporal difference T of the current time point $t_0$ and a time point t. Therefore, before a traveling user passes beyond a vicinity of a facility, event information for the facility may be obtained, enabling a missed opportunity of going to the facility to be prevented.

Further, the geo-fence border is configured in a direction in which the user is predicted travel. Therefore, information for a distant location in a direction different from the traveling direction of the user maybe prevented from being provided, enabling the occurrence of faults to be prevented such as excessive information being provided, causing the user to become confused.

(Example of system configuration of information providing system 200)

An example of system configuration of an information providing system 200 according to the first embodiment will be described. Here, as an example, a case will be described in which the information processing apparatus 101 depicted in FIG. 1 is applied to a mobile terminal apparatus 201 in the information providing system 200.

FIG. 2 is a diagram depicting an example of system configuration of the information providing system 200 according to the first embodiment. In FIG. 2, the information providing system 200 is configured to include the mobile terminal apparatus 201, the management server 202, and an event server 203. In the information providing system 200, the mobile terminal apparatus 201, the management server 202, and the event server 203 are connected through a wired or wireless network 210. The network 210 is, for example, the Internet, a LAN, a wide area network (WAN), etc.

Here, the mobile terminal apparatus 201 is a computer having a display screen (for example, a display 303 depicted in FIG. 3) and, for example, is a smartphone, a tablet terminal, a note PC, etc. Further, the mobile terminal apparatus 201 may be, for example, a vehicle-mounted device such as a car navigation apparatus equipped on a car.

The management server 202 has a user ID management database (DB) 220, a registered building management DB 230, and a map information management DB 240; and the management server 202 is a computer configured to deliver event information related to a facility. For example, the management server 202 delivers to the mobile terminal apparatus 201, event information related to a facility in response to a request (for example, "geo-fence notification" described hereinafter) from the mobile terminal apparatus 201.

The event server 203 has an event information DB 250 and a facility/position information management DB 260; and the event server 203 is a computer configured to store event information related to a facility. For example, in response to a request (for example, "event request" described hereinafter) from the management server 202, the event server 203 transmits to the management server 202, event information related to a facility.

Contents stored by the various DBs 220, 230, 240, 250, and 260 will be described with reference to FIGs. 5 to 9.

(Example of hardware configuration of mobile terminal apparatus 201)

An example of hardware configuration of the mobile terminal apparatus 201 depicted in FIG. 2 will be described.

FIG. 3 is a block diagram depicting an example of hardware configuration of the mobile terminal apparatus 201. In FIG. 3, the mobile terminal apparatus 201 has a central processing unit (CPU) 301, a memory 302, the display 303, an input apparatus 304, a public network interface (I/F) 305, a short-range wireless I/F 306, a GPS unit 307, and various sensors 308. These components are connected by a bus 300.

Here, the CPU 301 governs overall control of the mobile terminal apparatus 201. The memory 302 includes, for example, a read-only memory (ROM), a random access memory (RAM), and a flash ROM. In particular, for example, the flash ROM stores an operating system (OS) program; the ROM stores application programs; and the RAM is used as a work area of the CPU 301. A program stored in the memory 302 is loaded onto the CPU 301 whereby an encoded process is executed by the CPU 301.

The display 303 displays data such as documents, images, and functional information in addition to a cursor, icons, and a toolbox. A liquid crystal display, an organic electroluminescence (EL) display may be adopted as the display 303.

The input apparatus 304 has keys for inputting various instructions, numerals, text, etc., and is configured to input data. The input apparatus 304 may be a touch panel type input pad, a keyboard, a mouse, etc.

The public network I/F 305 is connected to the network 210 through a communications line and is connected to other apparatuses (for example, the management server 202) through the network 210. The public network I/F 305 administers an internal interface with the network 210 and controls the input and output of data with respect to other apparatuses.

The short-range wireless I/F 306 is connected to a short-range wireless network and is connected to other apparatuses (for example, wireless LAN access point) through the short-range wireless network. The short-range wireless I/F 306 administers an internal interface with a short-range wireless network and controls the input and output of data from other apparatuses.

As the public network I/F 305 and/or the short-range wireless I/F 306, for example, a mobile communications modem, a network communications chip, etc. may be adopted.

The GPS unit 307 receives signals from a GPS satellite and outputs position information indicating the current position of the mobile terminal apparatus 201. The various sensors 308 include, for example, a speedometer, an accelerometer, an angular accelerometer, etc. Values output from the various sensors 308 are used, for example, in the calculation of the current position of the mobile terminal apparatus 201 by the CPU 301 and in the measurement of variations in speed and orientation, etc.

In addition to the above configuration, the mobile terminal apparatus 201 may have, for example, a timer, a disk drive, a disk, an audio signal processing unit, a speaker, a microphone, etc.

(Example of hardware configuration of management server 202 and event server 203)

An example of hardware configuration of the management server 202 and the event server 203 depicted in FIG. 2 will be described. Here, the management server 202 and the event server 203 are denoted by "the management server 202, etc."

FIG. 4 is a block diagram depicting an example of hardware configuration of the management server 202, etc. In FIG. 4, the management server 202, etc. have a CPU 401, a memory 402, an I/F 403, a disk drive 404, and a disk 405, respectively connected by a bus 400.

Here, the CPU 401 governs overall control of the management server 202, etc. The memory 402 includes, for example, a ROM, a RAM, and a flash ROM. In particular, for example, the flash ROM and the ROM store various programs, and the RAM is used as a work area of the CPU 401. A program stored in the memory 402 is loaded onto the CPU 401 whereby an encoded process is executed by the CPU 401.

The I/F 403 is connected to the network 210 through a communications line and is connected to other apparatuses through the network 210. The I/F 403 administers an internal interface with the network 210 and controls the input and output of data from other apparatuses. For example, a modem, a LAN adapter, etc. may be adopted as the I/F 403.

The disk drive 404, under the control of the CPU 401, controls the reading and writing of data with respect to the disk 405. The disk 405 stores data written thereto under the control of the disk drive 404. For example, a magnetic disk, an optical disk, etc. may be adopted as the disk 405.

In addition to the above configuration, the management server 202, etc. may have, for example, a solid state drive (SSD), a keyboard, a mouse, a display, etc.

(Contents stored by various DBs 220, 230, 240, 250, and 260)

Contents stored by the various DBs 220, 230, 240, 250, 260 will be described with reference to FIGs. 5 to 9. The various DBs 220, 230, 240, 250, 260, for example, are realized by a storage apparatus such as the memory 402, the disk 405, etc. depicted in FIG. 4.

The contents stored by the user ID management DB 220, the registered building management DB 230, and the map information management DB 240 of the management server 202 will be described.

<Contents stored by user ID management DB 220>

FIG. 5 is a diagram depicting an example of the contents stored by the user ID management DB 220. In FIG. 5, the user ID management DB 220 has fields for user IDs, passwords, terminal IDs, GIPs, target facility categories, and target facilities. Information is set into the fields whereby user information (for example, user information 500-1 to 500-3) is stored as records.

Here, a user ID is an identifier uniquely identifying a user of the information providing system 200. A password is a password used in authenticating a user. A terminal ID is an identifier uniquely identifying the mobile terminal apparatus 201 used by a user. A GIP is a Global Internet Protocol (IP) address of the mobile terminal apparatus 201 used by a user.

A target facility category is a category of a target facility. A target facility is a facility for which a user wishes to receive delivery of event information. For example, category names such as gas station, ramen shop, the names of various chains, etc. are set as a target facility category. For example, names of specific facilities are set as a target facility. Names of famous places such as scenic and other points of interest may be set as a target facility.

<Contents stored by registered building management DB 230>

FIG. 6 is a diagram depicting an example of the contents stored by the registered building management DB 230. In FIG. 6, the registered building management DB 230 has fields for user IDs, terminal IDs, and registered facilities. Information is set into the fields whereby registered facility information (for example, registered facility information 600-1 to 600-3) is stored as records.

Here, a user ID is an identifier uniquely identifying a user of the information providing system 200. A terminal ID is an identifier uniquely identifying the mobile terminal apparatus 201 used by a user. A registered facility indicates the name of a chain, a category name, a facility name, etc. registered by a user as a target facility candidate.

<Contents stored by map information management DB 240>

FIG. 7 is a diagram depicting an example of the contents stored by the map information management DB 240. In FIG. 7, the map information management DB 240 has fields for latitude ranges, longitude ranges, and registered facilities. Information is set into the fields whereby position information (for example, position information 700-1 to 700-3) is stored as records.

A latitude range is a range of latitudes specifying the position of a registered facility on a map. A longitude range is a range of longitude specifying the position of a registered facility on a map. A registered facility indicates the name of a chain, a category name, a facility name registered as a target facility candidate.

The contents stored by the event information DB 250 and the facility/position information management DB 260 of the event server 203 will be described.

<Contents stored by event information DB 250>

FIG. 8 is a diagram depicting an example of the contents stored by the event information DB 250. In FIG. 8, the event information DB 250 stores event information (for example, event information 800-1 to 800-3) related to buildings (facilities). For example, information such as the name, address, telephone number, etc. of buildings (facilities), information such as coupons that may be used at a building, information regarding events being held at a building, etc. may be set as event information.

<Contents stored by facility/position information management DB 260>

FIG. 9 is a diagram depicting an example of the contents stored by the facility/position information management DB 260. In FIG. 9, the facility/position information management DB 260 stores latitude/longitude information specifying the position of a facility on a map. The facility/position information management DB 260, for example, is used when identifying the position of a facility that is not registered in the map information management DB 240 (refer to FIG. 7).

(Example of particular-event input screen)

An example of a particular-event input screen displayed on the display 303 of the mobile terminal apparatus 201 will be described. The particular-event input screen is an operation screen for setting from among registered facilities, a target facility for which a user wishes to receive delivery of event information. A registered facility is a facility that is a target facility candidate registered by the user and, for example, is specified from the registered building management DB 230 depicted in FIG. 6.

In other words, the mobile terminal apparatus 201, for example, receives information indicating registered facilities from the management server 202 and generates screen information for the particular-event input screen. Here, an example will be described in which the particular-event input screen is displayed on the display 303 of the mobile terminal apparatus 201 of a user identified by a user ID "U1".

FIG. 10 is a diagram depicting an example of the particular-event input screen. In FIG. 10, a particular-event input screen 1000 is an operation screen for setting from among registered facilities, a target facility for which the user (user ID: U1) of the mobile terminal apparatus 201 (terminal ID: T1) wishes to receive delivery of event information.

In the particular-event input screen 1000, facility buttons 1001 to 1003 are pressed by user operation of the input apparatus 304 depicted in FIG. 3 whereby a facility may be selected as a target facility. Further, in the particular-event input screen 1000, selection of an input box 1004 enables a category name, a facility name, etc. of a target facility to be input. In the particular-event input screen 1000, when an enter button 1005 is pressed, a facility selected in (or, input into) the particular-event input screen 1000 is set as a target facility.

In the example depicted in FIG. 10, facility buttons 1001, 1002 are pressed whereby "tower A" and "coffee chain D" are selected as target facilities. In this state, when the enter button 1005 is pressed, "tower A" and "coffee chain D" are set as target facilities.

When a character string is input into the input box 1004, the mobile terminal apparatus 201, for example, may check whether the input character string is a noun. Further, when the mobile terminal apparatus 201 cannot discriminate an input character string as a noun, the mobile terminal apparatus 201 may prompt the user to again input a character string.

(Example of functional configuration of mobile terminal apparatus 201)

FIG. 11 is a block diagram depicting an example of functional configuration of the mobile terminal apparatus 201. In FIG. 11, the mobile terminal apparatus 201 is configured to include an obtaining unit 1101, a calculating unit 1102, a setting unit 1103, a determining unit 1104, a communications unit 1105, and an output unit 1106. The obtaining unit 1101 to the output unit 1106 are functions constituting a control unit and in particular, for example, are realized by executing on the CPU 301, a program stored in the memory 302 depicted in FIG. 3 or via the public network I/F 305, the short-range wireless I/F 306. Processing results of the functional units, for example, are stored to the memory 302.

The obtaining unit 1101 obtains sensor information. Here, sensor information is information that includes the position, the traveling speed, and the traveling direction of the mobile terminal apparatus 201 at the current time point to. The position of the mobile terminal apparatus 201, for example, may be identified from position information from the GPS unit 307 depicted in FIG. 3 or may be identified from position information obtained from a communications device configured for short-range wireless communication (for example, a wireless LAN access point) by the short-range wireless I/F 306.

The traveling speed of the mobile terminal apparatus 201 may be identified from values output by the various sensors 308 (for example, the speedometer) depicted in FIG. 3. The traveling direction of the mobile terminal apparatus 201, for example, may be obtained from the position at the current time point $t_0$ and the position at a time point that is a predetermined amount of time before the current time point $t_0$ (for example, 10 seconds before). In particular, for example, the mobile terminal apparatus 201 may identify as the traveling direction, the direction toward the position at the current time point $t_0$, from the position at a time point that is a predetermined amount of time before the current time point $t_0$. Further, when route guidance to a destination is being performed, the mobile terminal apparatus 201 may identify the direction along the guided route as the traveling direction.

The calculating unit 1102 calculates the position of the mobile terminal apparatus 201 at a time point t subsequent to the current time point $t_0$, based on the position, the traveling speed, and the traveling direction of the mobile terminal apparatus 201 at the current time point $t_0$ included in the obtained sensor information. In particular, for example, the calculating unit 1102 calculates the position of the mobile terminal apparatus 201 for each unit time point $t_1$ to $t_n$ elapsing from the current time point $t_0$.

Here, the unit time may be arbitrarily set and, for example, is set to a period of about 2 minutes. Further, n is a natural number of 1 or more, and may be set arbitrarily. For example, n is set to a value of about 4 to 10. As a result, the position at each unit time point $t_1$ to $t_n$ elapsing from the current time point $t_0$ maybe estimated.

In the description hereinafter, an arbitrary time point among time points $t_1$ to $t_n$ may be denoted as "time point

$t_i$" (i=1, 2, ..., n). Further, the position of the mobile terminal apparatus 201 at the current time point $t_0$ may be denoted as "current point $P_0$" and the position of the mobile terminal apparatus 201 at a time point $t_i$ may be denoted as "predicted reached point $P_i$".

The setting unit 1103 sets a reference position and a reference region. Here, the reference position is a position to become a reference for creating an integrated geo-fence border described hereinafter. The reference region is a geo-fence border set at the reference position. The geo-fence border is a delimited range set for a point on a map.

In particular, for example, the setting unit 1103 sets the current point $P_0$ as the reference position and sets as the reference region, a circular region that is centered about the reference position and has a radius $R_0$. The radius $R_0$ may be set arbitrarily and, for example, is set to a value of several tens to several hundreds of meters. Further, the radius $R_0$ may be set so as to increase according to the traveling speed at the current time point $t_0$. For example, the radius $R_0$ is set to 100[m] when the traveling speed is 60[km/h] and is set to 50[m] when the traveling speed is 30[km/h].

Further, the setting unit 1103 sets as the geo-fence border for the predicted reached point $P_i$ of each time point $t_i$, a region that is enlarged according to the temporal difference T of the current time point $t_0$ and the respective time point $t_i$.

In particular, for example, the setting unit 1103 uses equation (1) to calculate a radius $R_i$ of the geo-fence border set for the predicted reached point $P_i$ of the time point $t_i$. The setting unit 1103 sets as the geo-fence border, a circular region that has the radius $R_i$ and is centered about the predicted reached point $P_i$ of the time point $t_i$.

$$R_i=R_{i-1}+\alpha \quad (1)$$

Where, $\alpha$ is a constant and, for example, is set to a value of about 20[m].

Further, the setting unit 1103 may set as the geo-fence border for the predicted reached point $P_i$ of each time point $t_i$, a region that is enlarged according to the traveling speed at the current time point $t_0$ and the temporal difference T of the current time point to and the respective time point $t_i$.

In particular, for example, the setting unit 1103 uses equation (2) to calculate the radius $R_i$ of the geo-fence border set for the predicted reached point $P_i$ of the time point $t_i$. The setting unit 1103 sets as the geo-fence border, a circular region that has the radius $R_i$ and is centered about the predicted reached point $P_i$ of the time point $t_i$.

$$R_i=R_0+\beta\times (V\times T) \quad (2)$$

Where, $\beta$ is a fence coefficient and, for example, is set to a value of about 0.02; V is the traveling speed at the current time point $t_0$; and T is the temporal difference of the current time point $t_0$ and a time point $t_i$.

An example of setting geo-fence borders for the predicted reached points $P_1$ to $P_n$ of the time points $t_1$ to $t_n$ will be described hereinafter with reference to FIG. 13.

The setting unit 1103 creates an integrated region by integrating the reference region set for the reference position and the regions set for the predicted reached points $P_1$ to $P_n$ of the time points $t_1$ to $t_n$. In particular, for example, the setting unit 1103 creates as an integrated geo-fence border, a region formed by tangents connecting points on the geo-fence borders set for the predicted reached points $P_1$ to $P_n$ of the time points $t_1$ to $t_n$ and on the reference region. An example of creating an integrated geo-fence border will be described hereinafter with reference to FIG. 13.

The determining unit 1104 determines whether a target facility is present within the created integrated geo-fence border. Here, a target facility is a facility for which the user of the mobile terminal apparatus 201 wishes to receive delivery of event information and, for example, is set via the particular-event input screen 1000 depicted in FIG. 10.

Information identifying the position of a target facility, for example, may be obtained from the management server 202. In particular, for example, the communications unit 1105 transmits to the management server 202, particular-event information specifying a target facility set in the particular-event input screen 1000. The communications unit 1105 receives the position information of the target facility from the management server 202, enabling information identifying the position of a target facility to be obtained.

The position information of a target facility, for example, indicates a latitude and longitude specifying one point on a map where the target facility is located or a latitude range and longitude range specifying a facility region on a map. The determining unit 1104 determines that a target facility is present within an integrated geo-fence border when the position information of a target facility indicates a latitude range and longitude range, for example, in a case where the integrated geo-fence border and the facility region contact each other or the facility region partially or entirely overlaps the integrated geo-fence border.

The communications unit 1105 may obtain from the management server 202, the position information of the target facility and map data of a monitored region. Here, a monitored region is a region within a predetermined range from the position of the current point $P_0$. The predetermined range may be arbitrarily set and, for example, is set to be a range centered about the current point $P_0$ and having a radius of about 10 to 50[km].

However, when the mobile terminal apparatus 201 has map data, the determining unit 1104 may refer to the map data to identify the position of a target facility. At this time, the determining unit 1104 may identify the position of a target facility that is within the predetermined range from the current point $P_0$.

The communications unit 1105, when determining that a target facility is present within the integrated geo-fence border, transmits geo-fence notification to the management server 202. Here, the geo-fence notification requests event information related to the target facility. The communications unit 1105 receives event information related to the target facility from the management server 202.

The output unit 1106 outputs the event information related to the target facility. Forms of output by the output unit 1106 include, for example, display on the display 303, audio output from a non-depicted speaker, etc. In particular, for example, the output unit 1106 may display the event information associated with the target facility on a map similar to a notification screen 1700 depicted at (17-2) in FIG. 17 described hereinafter.

The obtaining unit 1101 may obtain sensor information each time a predetermined time period elapses. The calculating unit 1102 may calculate the predicted reached point $P_1$ to $P_n$ for each unit time point $t_1$ to $t_n$ elapsing from the current time point $t_0$, each time the sensor information is obtained. The predetermined time period may be arbitrarily set and, for example, is set to be a period of about 2 to 10[minutes].

Thus, each time a predetermined time period elapses, the predicted reached point $P_1$ to $P_n$ is estimated for each unit time point $t_1$ to $t_n$ elapsing from the current time point $t_0$, enabling a geo-fence border to be set.

(Example of functional configuration of management server 202)

FIG. 12 is a block diagram depicting an example of functional configuration of the management server 202. In FIG. 12, the management server 202 is configured to include a server communications unit 1201, a position information obtaining unit 1202, and an event information obtaining unit 1203. The server communications unit 1201 to the event information obtaining unit 1203 are functions constituting a control unit and in particular, for example, are realized by executing on the CPU 401, a program stored in a storage apparatus such as the memory 402, the disk 405 depicted in FIG. 4 or via the I/F 403, etc. Processing results of the functional units, for example, are stored to, for example, a storage apparatus such as the memory 402, the disk 405, etc.

The server communications unit 1201 receives particular-event information from the mobile terminal apparatus 201. The particular-event information is information identifying a target facility for which the user of the mobile terminal apparatus 201 wishes to receive delivery of event information. The particular-event information includes, for example, the user ID, the terminal ID, the target facility name, the category name, the chain name, etc.

The target facility identified from the particular-event information, for example, is set in the corresponding target facility category and/or target facility field of the user ID management DB 220 depicted in FIG. 5. For example, a case is assumed where particular-event information including the target facility name "tower A" and category name "coffee chain D" is received from the mobile terminal apparatus 201 of a user having the user ID "U1". In this case, in the user information 500-1 in the user ID management DB 220, the server communications unit 1201 sets "coffee chain D" as the target facility category and sets "tower A" in the target facility field.

Further, the server communications unit 1201 receives position information indicating the position of the mobile terminal apparatus 201. In particular, for example, the server communications unit 1201 transmits a position information request to the mobile terminal apparatus 201 and thereby receives from the mobile terminal apparatus 201, the position information for the current point $P_0$ of the mobile terminal apparatus 201. However, the position information of the mobile terminal apparatus 201 may be included in particular-event information.

The position information obtaining unit 1202 obtains the position information of a target facility. In particular, for example, the position information obtaining unit 1202 refers to the map information management DB 240 (for example, refer to FIG. 7) and obtains the position information of a target facility within a monitored region. Here, the monitored region is a region within a predetermined range from the position of the mobile terminal apparatus 201. The predetermined range may be arbitrarily set and, for example, is set to a range centered about the position of the mobile terminal apparatus 201 and having a radius of about 10 to 50[km].

For example, a case is assumed where the position information of the current point $P_0$ is received from the mobile terminal apparatus 201 having the terminal ID "T1". In this case, the position information obtaining unit 1202, for example, refers to the user information 500-1 of the user ID management DB 220, and identifies the target facilities "coffee chain D" and "tower A". Next, the position information obtaining unit 1202 refers to the map information management DB 240 and searches for target facilities "coffee chain D" and "tower A" present within the monitored region within a predetermined range from the current point $P_0$. The position information obtaining unit 1202 obtains from the map information management DB 240, the position information of the searched target facilities.

When the position information of a target facility is not registered in the map information management DB 240, the position information obtaining unit 1202 may make an inquiry to the event server 203 regarding the position information of the target facility. For example, a case is assumed where the position information of the target facility "tower A" is not registered. In this case, the position information obtaining unit 1202 makes an inquiry to the event server 203 regarding the position information of the target facility "tower A".

The event server 203 refers to the facility/position information management DB 260 depicted in FIG. 9, identifies the latitude/longitude of the target facility "tower A", and transmits to the management server 202, position information indicating the identified latitude/longitude of the target facility "tower A". As a result, the position information obtaining unit 1202 may obtain the position information of a target facility not registered in the map information management DB 240.

The server communications unit 1201 transmits to the mobile terminal apparatus 201, the position information of the target facility obtained by the position information obtaining unit 1202. At this time, the server communications unit 1201 may transmit map data of the monitored region to the mobile terminal apparatus 201. The management server 202 needs not have the map data. For example, a map server having the map data may be provided and the management server 202 may access the map server to refer to the map data.

The server communications unit 1201 receives geo-fence notification from the mobile terminal apparatus 201. The geo-fence notification requests event information related to a target facility. The geo-fence notification includes, for example, a user ID, a terminal ID, a target facility name, a category name, a chain name, etc.

The event information obtaining unit 1203, when receiving the geo-fence notification, obtains event information for the target facility identified from the geo-fence notification. In particular, for example, the event information obtaining unit 1203 transmits to the event server 203, an event request requesting event information of the target facility and thereby obtains the event information from the event server 203. The event request includes the target facility name, the category name, the chain name, etc.

The event server 203, when receiving the event request from the management server 202, extracts from the event information DB 250 (for example, refer to FIG. 8), the event information of the target facility identified from the event request. The event server 203 transmits the extracted event information to the management server 202.

The server communications unit 1201 transmits to the mobile terminal apparatus 201, the event information obtained by the event information obtaining unit 1203. In particular, for example, the server communications unit 1201 refers to the user ID management DB 220, identifies the global IP address of the mobile terminal apparatus 201 and transmits the event information to the identified global IP address as a destination. As a result, the event information of the target facility may be delivered to the mobile terminal apparatus 201.

The management server 202, when receiving particular-event information from the mobile terminal apparatus 201, may make an inquiry to the event server 203 regarding the presence/absence of event information for the target facility identified from the particular-event information. The management server 202, when no event information is present, may transmit to the mobile terminal apparatus 201, a message prompting resetting of a target facility.

Further, in the description above, although a case where the management server 202 has the map information management DB 240 has been described as an example, configuration is not limited hereto. For example, a map server having the map information management DB 240 may be provided and the management server 202 may access the map server to refer to the map information management DB 240.

Further, in the description above, the management server 202 obtains the event information of the target facility from the event server 203 in response to receiving geo-fence notification from the mobile terminal apparatus 201; however, configuration is not limited hereto. For example, in a case where the event information of a target facility is information that is not frequently updated, the management server 202 may obtain the event information of the target facility from the event server 203 in advance, prior to reception of the geo-fence notification from the mobile terminal apparatus 201.

Further, in the description above, although the management server 202 delivers the event information of a target facility to the mobile terminal apparatus 201, configuration is not limited hereto. For example, a push server accessible by the event server 203 may be provided and in response to a delivery instruction from the management server 202, the push server may obtain the event information for the target facility from the event server 203 and transmit the event information to the mobile terminal apparatus 201. In this case, the global IP address of the mobile terminal apparatus 201 is retained by the push server and not the management server 202.

(Example of setting geo-fence border)

An example of setting geo-fence borders for the predicted reached points $P_1$ to $P_n$ of time points $t_1$ to $t_n$ will be described. Here, n of a time point $t_n$ is assumed to be "n=4".

FIG. 13 is a diagram depicting an example of setting geo-fence borders. In FIG. 13, the current point $P_0$ indicates the current time point $t_0$ of the mobile terminal apparatus 201. Further, the predicted reached points $P_1$ to $P_4$ indicate the position of the mobile terminal apparatus 201 at each time point $t_1$ to $t_4$.

In this case, first, the setting unit 1103 sets the current point $P_0$ to be the reference position and sets as a reference region 1301, a circular region that is centered about the reference position and has the radius $R_0$. Here, the

traveling speed V at the current time point $t_0$ is assumed to be "V=60[km/h]" and the radius $R_0$ is assumed to be "$R_0$=100[m]".

Next, the setting unit 1103, for example, uses equation (2) to calculate the radii $R_1$ to $R_4$ of the geo-fence borders set for the predicted reached points $P_1$ to $P_4$.

Here, taking as an example, the radius $R_1$ of the geo-fence border set for the predicted reached point $P_1$, the radius $R_1$ may be obtained as indicated by equation (3), where, the temporal difference T (unit time) of the current time point $t_0$ and time points $t_1$ is assumed to be "T=2[minutes]" and the fence coefficient β is assumed to be "β=0.02".

$$\begin{aligned} R_1 &= R_0 + \beta \times (V \times T) \\ &= 100[m] + 0.02 \times 60[km/h] \times 2/60[h] \\ &= 140[m] \end{aligned} \quad (3)$$

Next, the setting unit 1103 sets as geo-fence borders 1302 to 1305, circular regions respectively centered about the predicted reached points $P_1$ to $P_4$ and having the radii $R_1$ to $R_4$. The setting unit 1103 creates as an integrated geo-fence border 1310, a region formed by tangents connecting points on a reference region 1301 and points on the geo-fence borders 1302 to 1305.

Next, an example of setting geo-fence borders for the predicted reached points $P_1$ to $P_n$ of the time points $t_1$ to $t_n$ during route guidance to a certain destination will be described. Here, n of the time point $t_n$ is assumed to be "n=4".

FIGs. 14, 15, and 16 are diagrams depicting an example of setting geo-fence borders during route guidance. In FIG. 14, the current point $P_0$ indicates the position of the mobile terminal apparatus 201 at the current time point $t_0$. Further, a route 1400 is a route to a certain destination. In this case, the traveling direction of the mobile terminal apparatus 201, for example, is identified as the direction along the route 1400.

Therefore, the predicted reached points $P_1$ to $P_4$ are set on the route 1400. Further, the current point $P_0$ is set as the reference position and a circular region having the radius $R_0$ is set as a reference region 1401. Further, circular regions that are centered about the predicted reached point $P_1$ to $P_4$ and have the radii $R_1$ to $R_4$ are set as geo-fence borders 1402 to 1405. A region formed by tangents connecting points on a reference region 1401 and on the geo-fence borders 1402 to 1405 is created as an integrated geo-fence border 1410.

When the mobile terminal apparatus 201 travels along the route 1400, as depicted in FIGs. 15 and 16, integrated geo-fence borders 1510, 1610 are dynamically created.

In the example depicted in FIG. 15, the current point $P_0$ is set as the reference position and a circular region having the radius $R_0$ is set as a reference region 1501. Further, circular regions that are centered about the predicted reached points $P_1$ to $P_4$ and have the radii $R_1$ to $R_4$ are set as geo-fence borders 1502 to 1505. A region formed by tangents connecting points on the reference region 1501 and on the geo-fence borders 1502 to 1505 is created as an integrated geo-fence border 1510.

In the example depicted in FIG. 16, the current point $P_0$ is set as the reference position and a circular region having the radius $R_0$ is set as a reference region 1601. Further, circular regions that are centered about the predicted reached points $P_1$ to $P_4$ and have the radii $R_1$ to $R_4$ are set as geo-fence borders 1602 to 1605. A region formed by tangents connecting point on the reference region 1601 and on the geo-fence borders 1602 to 1605 is created as an integrated geo-fence border 1610.

(Example of notification screen)

An example of the notification screen displayed on the display 303 of the mobile terminal apparatus 201 will be described.

FIG. 17 is a diagram depicting an example of a notification screen. The notification screen 1700 depicted in FIG. 17 (17-1), for example, is an initial screen displayed on the display 303, when the setting of a target facility is completed via the particular-event input screen 1000 (refer to FIG. 10).

The notification screen 1700 displays a message 1701 and a map 1702. The message 1701 indicates a target facility name, chain name, etc. set in the particular-event input screen 1000. The map 1702 represents a region of a predetermined range in the traveling direction from the position of the mobile terminal apparatus 201 at the current time point $t_0$, using symbols, text, etc. on a plane. A mark M on the map 1702 indicates the position of the mobile terminal apparatus 201 at the current time point $t_0$ and the traveling direction.

In the example depicted in FIG. 17 (17-1), no target facility is present within a non-depicted integrated geo-fence border and therefore, no event information of a target facility is displayed on the map 1702.

Here, a case is assumed where the mobile terminal apparatus 201 travels in the direction indicated by the mark M on the map 1702. In this case, the reference position changes, a new integrated geo-fence border is created, and as depicted at (17-2) in FIG. 17, the display contents of the map 1702 displayed in the notification screen 1700 are changed.

In the example depicted in FIG. 17 (17-2), a target facility 1703 is present within a non-depicted integrated geo-fence border and therefore, event information 1704 is displayed associated with the target facility 1703 on the map 1702. The event information 1704 is a message giving notification that target facility "coffee chain D" is nearby.

The event information 1704 lets the user know that target facility "coffee chain D" is present in the traveling direction before the target facility "coffee chain D" is passed. As a result, even when the user is traveling by car, etc., travel toward the target facility "coffee chain D" is facilitated.

(Procedure of facility information providing process by mobile terminal apparatus 201)

A procedure of a facility information providing process by the mobile terminal apparatus 201 will be described. Execution of the procedure of the facility information providing process, for example, starts when the facility information providing program is invoked in the mobile terminal apparatus 201.

FIGs. 18 and 19 are flowcharts depicting an example of the procedure of the facility information providing process by the mobile terminal apparatus 201 according to the first embodiment. In the flowchart depicted in FIG. 18, the mobile terminal apparatus 201 displays an authentication screen on the display 303 (step S1801).

The mobile terminal apparatus 201 determines whether authentication information of the user has been input in the authentication screen (step S1802). The authentication information includes the user ID and password. Here, the mobile terminal apparatus 201 waits to receive input of the authentication information (step S1802: NO).

The mobile terminal apparatus 201, when receiving input of the authentication information (step S1802: YES), transmits to the management server 202, a log-on request that includes the received authentication information (step S1803). The mobile terminal apparatus 201 receives an authentication result from the management server 202 (step S1804).

The mobile terminal apparatus 201 refers to the received authentication result and determines whether the authentication is OK (step S1805). Here, when the authentication is NG (step S1805: NO), the mobile terminal apparatus 201 returns to step S1801 and again displays the authentication screen on the display 303.

On the other hand, when the authentication is OK (step S1805: YES), the mobile terminal apparatus 201 executes a target facility setting process (step S1806). The target facility setting process is a process of setting a target facility for which the user wishes to receive delivery of event information. A detailed procedure of the target facility setting process will be described with reference to FIG. 20. The authentication result indicating that the authentication is OK, for example, includes registered facility information from which a facility registered as a target facility candidate by the user may be identified.

The mobile terminal apparatus 201 determines whether the position information of a target facility has been received from the management server 202 (step S1807). Here, the mobile terminal apparatus 201 waits to receive the position information of a target facility (step S1807: NO). At this time, the mobile terminal apparatus 201 may receive from the management server 202, the position information of a target facility and the map data of a monitored region.

The mobile terminal apparatus 201, when receiving the position information of a target facility (step S1807: YES), generates and displays on the display 303, screen information of a notification screen (step S1808). The notification screen displayed here is an initial notification screen (for example, the notification screen 1700 depicted in FIG. 17 (17-1)).

The mobile terminal apparatus 201 obtains sensor information (step S1809). The mobile terminal apparatus 201, sets the reference position and the reference region based on the obtained sensor information (step S1810), and transitions to step S1901 depicted in FIG. 19.

In the flowchart depicted in FIG. 19, the mobile terminal apparatus 201 compares the reference position set at step S1810 depicted in FIG. 18 and the reference position previously set to thereby determine whether the reference position has changed (step S1901).

Here, when the reference position has changed (step S1901: YES), the mobile terminal apparatus 201 executes a geo-fence creating process (step S1902). The geo-fence creating process is a process of creating an integrated geo-fence border for the reference position. A detailed procedure of the geo-fence creating process will be described hereinafter with reference to FIG. 21.

The mobile terminal apparatus 201, based on the position information of the target facility received at step S1807 depicted in FIG. 18, determines whether the target facility is present within the created integrated geo-fence border (step S1903). Here, when the target facility is not present (step S1903: NO), the mobile terminal apparatus 201 transitions to step S1908.

On the other hand, when the target facility is present (step S1903: YES), the mobile terminal apparatus 201 transmits to the management server 202, a geo-fence notification requesting event information for the target facility present within the integrated geo-fence border (step S1904). The mobile terminal apparatus 201 determines whether event information has been received from the management server 202 (step S1905).

Here, the mobile terminal apparatus 201 waits to receive event information from the management server 202 (step S1905: NO). The mobile terminal apparatus 201, when receiving event information from the management server 202 (step S1905: YES), identifies the target facility on a map (step S1906).

The mobile terminal apparatus 201 associates and displays the received event information with the identified target facility on the map in the notification screen (step S1907). As a result, the notification screen 1700 such as that depicted in FIG. 17 (17-2) is displayed on the display 303, enabling event information to be provided to the user, the event information being related to a target facility present in a region that gradually expands in the traveling direction of the mobile terminal apparatus 201.

The mobile terminal apparatus 201 determines whether a predetermined time period has elapsed since the sensor information was obtained at step S1809 depicted in FIG. 18 (step S1908). Here, the mobile terminal apparatus 201 waits for the predetermined time period to elapse (step S1908: NO). When the predetermined time period has elapsed (step S1908: YES), the mobile terminal apparatus 201 returns to step S1809 depicted in FIG. 18.

At step S1901, when the reference position has not changed (step S1901: NO), the mobile terminal apparatus 201 transitions to step S1908. As a result, while the mobile terminal apparatus 201 is stationary, operations at steps S1902 to S1907 may be omitted, enabling the processing load to be reduced.

The mobile terminal apparatus 201 may transmit the position information for the current point $P_0$ of the mobile terminal apparatus 201 to the management server 202, each time a predetermined period elapses whereby the position information (and map data of a monitored region) of a target facility may be reobtained periodically. The predetermined period, for example, is set to a period of about 1 hour.

A detailed procedure of the target facility setting process at step S1806 depicted in FIG. 18 will be described.

FIG. 20 is a flowchart depicting an example of a detailed procedure of the target facility setting process. In the flowchart depicted in FIG. 20, the mobile terminal apparatus 201, based on registered facility information included in the authentication result received at step S1804 depicted in FIG. 18, generates and displays on the display 303, screen information for a particular-event input screen (step S2001).

The mobile terminal apparatus 201 determines whether a target facility has been set in the particular-event input screen (step S2002). Here, the mobile terminal apparatus 201 waits for the setting of a target facility (step S2002: NO). When a target facility has been set (step S2002: YES), the mobile terminal apparatus 201 transmits to the management server 202, particular-event information specifying the set target facility (step S2003).

The mobile terminal apparatus 201 determines whether a position information request has been received from the management server 202 (step S2004). Here, the mobile terminal apparatus 201 waits to receive a position information request (step S2004: NO). The mobile terminal apparatus 201, when receiving a position information request (step S2004: YES), obtains the position information for the current point $P_0$ (step S2005).

The mobile terminal apparatus 201 transmits the obtained position information for the current point $P_0$ to the management server 202 (step S2006), and returns to the step that called the target facility setting process. As a result, the user of the mobile terminal apparatus 201 may set a target facility for which the user wishes to receive delivery of event information.

A detailed procedure of the geo-fence creating process at step S1902 depicted in FIG. 19 will be described.

FIG. 21 is a flowchart depicting an example of a detailed procedure of the geo-fence creating process. In the flowchart depicted in FIG. 21, the mobile terminal apparatus 201 identifies the traveling direction of the mobile terminal apparatus 201 for the previous predetermined time period (step S2101). The mobile terminal apparatus 201 identifies the traveling direction for the current time point $t_0$ (step S2102).

The mobile terminal apparatus 201 compares the traveling direction for the previous predetermined time period and the traveling direction for the current time point to and determines whether the course has changed (step S2103). Here, when the course has not changed (step S2103: NO), the mobile terminal apparatus 201 transitions to step S2105.

On the other hand, when the course has changed (step S2103: YES), the mobile terminal apparatus 201 sets the traveling direction for the current time point $t_0$ as the course (step S2104). The mobile terminal apparatus 201 calculates the predicted reached point $P_1$ to $P_n$ for each unit time points $t_1$ to $t_n$ elapsing from the current time point $t_0$, based on the current point $P_0$, the traveling speed, and the course (the traveling direction) at the current time point $t_0$ (step S2105).

The mobile terminal apparatus 201 calculates the radius $R_1$ to $R_n$ of a geo-fence border for each of the predicted reached points $P_1$ to $P_n$ of the time points $t_1$ to $t_n$ (step S2106). The mobile terminal apparatus 201 sets circular regions that are centered about the predicted reached points $P_1$ to $P_n$ of the time points $t_1$ to $t_n$ and have the radii $R_i$ to $R_n$ as geo-fence borders (step S2107).

The mobile terminal apparatus 201 integrates the reference region set for the reference position and the geo-fence borders set for the predicted reached points $P_1$ to $P_n$ of time points $t_1$ to $t_n$ and thereby, creates an integrated geo-fence border (step S2108). The mobile terminal apparatus 201 returns to the step that called the geo-fence creating process. As a result, an integrated geo-fence border may be created for the reference position.

(Procedure of facility information providing process by management server 202)

A procedure of the facility information providing process by the management server 202 will be described.

FIGs. 22 and 23 are flowcharts depicting an example of the procedure of the facility information providing process by the management server 202 according to the first embodiment. In the flowchart depicted in FIG. 22, the management server 202 determines whether a log-on request has been received from the mobile terminal apparatus 201 (step S2201).

Here, the management server 202 waits to receive a log-on request (step S2201: NO). When a log-on request has been received (step S2201: YES), the management server 202 executes a log-on process (step S2202).

The log-on process is a process of authenticating the user of the mobile terminal apparatus 201. In particular, for example, the management server 202 identifies from the user ID management DB 220, a password corresponding to the user ID included in the log-on request. The management server 202 compares the identified password and the password included in the log-on request. When the passwords match, the management server 202 authenticates the user of the mobile terminal apparatus 201 (authentication OK). On the other hand, when the passwords do not match, the management server 202 does not authenticate the user of the mobile terminal apparatus 201 (authentication NG). Further, in a case where a password corresponding to the user ID included in the log-on request is not identified from the user ID management DB 2200, the management server 202 does not authenticate the user of the mobile terminal apparatus 201 (authentication NG).

The management server 202 determines whether the authentication is OK (step S2203). Here, when the authentication is NG (step S2203: NO), the management server 202 transmits to the mobile terminal apparatus 201, an authentication result indicating that the authentication is NG (step S2204), and ends the series of operations according to the flowchart.

On the other hand, when the authentication is OK (step S2203: YES), the management server 202 transmits to the mobile terminal apparatus 201, an authentication result that includes registered facility information and that indicates that the authentication is OK (step S2205). The registered facility information is information that is identified from the registered building management DB 230 and that may specify a facility registered as a target facility candidate by the user.

The management server 202 determines whether particular-event information has been received from the mobile terminal apparatus 201 (step S2206). Here, the management server 202 waits to receive the particular-event information (step S2206: NO). When the particular-event information has been received (step S2206: YES), the management server 202 transmits to the mobile terminal apparatus 201, a position information request requesting position information for the current point $P_0$ (step S2207), and transitions to step S2301 depicted in FIG. 23.

In the flowchart depicted in FIG. 23, the management server 202 determines whether position information for the current point $P_0$ has been received from the mobile terminal apparatus 201 (step S2301). Here, the management server 202 waits to receive position information for the current point $P_0$ (step S2301: NO).

The management server 202, when having received position information for the current point $P_0$ (step S2301: YES), obtains position information for a target facility present in the monitored region, based on the position information for the current point $P_0$ (step S2302). The target facility is identified from the particular-event information received at step S2206 depicted in FIG. 22.

The management server 202 transmits the obtained position information of the target facility to the mobile terminal apparatus 201 (step S2303). At this time, the management server 202 may transmit map data of the monitored region to the mobile terminal apparatus 201.

The management server 202 determines whether geo-fence notification has been received from the mobile terminal apparatus 201 (step S2304). Here, the management server 202 waits to receive geo-fence notification (step S2304: NO). The management server 202, when receiving geo-fence notification (step S2304: YES), transmits to the event server 203, an event request requesting event information for the target facility identified from the geo-fence notification (step S2305).

The management server 202 determines whether event information has been received from the event server 203 (step S2306). Here, the management server 202 waits to receive event information (step S2306: NO). The management server 202, when having received the event information (step S2306: YES), transmits the event information to the mobile terminal apparatus 201 (step S2307), and ends the series of operations according to the flowchart.

As a result, event information related to a target facility present within an integrated geo-fence border set for the reference position may be delivered to the mobile terminal apparatus 201.

As described, the mobile terminal apparatus 201 according to the first embodiment enables calculation of a position for each unit time point $t_1$ to $t_n$ elapsing from the current time point $t_0$, based on the position, the traveling speed, and the traveling direction of the mobile terminal apparatus 201 at the current time point $t_0$. As a result, the predicted reached points $P_1$ to $P_n$ of future time points $t_1$ to $t_n$ may be estimated.

Further, the mobile terminal apparatus 201 enables a circular region that is enlarged according to the temporal difference T of the current time point $t_0$ and a time point $t_i$ to be set as a geo-fence border for the predicted reached point

$P_i$ of the time point $t_i$. As a result, the range of a geo-fence border set for each predicted reached point $P_i$ that the mobile terminal apparatus 201 is predicted to reach at the time point $t_i$ may be enlarged according to the temporal difference T of the current time point $t_0$ and the time point $t_i$.

Further, the mobile terminal apparatus 201 integrates the reference region set for the reference position and the geo-fence borders set for the predicted reached points $P_1$ to $P_n$ of the time points $t_1$ to $t_n$ and thereby, enables an integrated geo-fence border to be created. As a result, a region that gradually expands in the traveling direction of the mobile terminal apparatus 201 may be set as an integrated geo-fence border.

The mobile terminal apparatus 201 further enables event information for a target facility to be output when the target facility is present within the integrated geo-fence border. As a result, event information related to a target facility present within a region that gradually expands in the traveling direction of the mobile terminal apparatus 201 may be provided to the user.

The mobile terminal apparatus 201 further transmits geo-fence notification to the management server 202 when a target facility is present within the integrated geo-fence border and thereby, enables event information related to the target facility to be obtained from the management server 202. As a result, even when event information related to a target facility is information that is updated from time to time, the latest event information may be obtained from the management server 202 and provided to the user.

According to the mobile terminal apparatus 201, a region that is enlarged according to the traveling speed at the current time point $t_0$ and the temporal difference T of the current time point $t_0$ and the time point $t_i$ may be set as a geo-fence border for the predicted reached point $P_i$ of each time point $t_i$. As a result, the range of the geo-fence border set for each predicted reached point $P_i$ that the mobile terminal apparatus 201 is predicted to reach at the time point $t_i$ may be enlarged according to the traveling speed at the current time point $t_0$ and the temporal difference T of the current time point $t_0$ and the time point $t_i$.

Therefore, the information providing system 200 according to the first embodiment enables information to be effectively provided to the user of the mobile terminal apparatus 201, even when the user is traveling by car, etc.

For example, the range of a geo-fence border for a predicted reached point $P_i$ that is predicted to be reached may be enlarged according to the traveling speed at the current time point $t_0$ and the temporal difference T of the current time point $t_0$ and time point $t_i$. Therefore, before a traveling user passes a vicinity of a target facility, the user may obtain event information for the target facility whereby a missed opportunity of going to the target facility to be prevented.

Further, a region that gradually expands in a direction in which the user of the mobile terminal apparatus 201 is predicted to travel is set as an integrated geo-fence border. Therefore, event information for a target facility at a distant location in a direction different from the traveling direction of the user may be prevented from being provided to the user, enabling the occurrence of faults to be prevented such as excessive information being provided, causing the user to become confused.

(Second embodiment)

An information processing apparatus 2401 according to a second embodiment will be described. Parts similar to those described in the first embodiment are given the same reference numerals used in the first embodiment, and descriptions thereof will be omitted hereinafter.

FIG. 24 is a diagram of one example of the information processing apparatus 2401 according to the second embodiment. In FIG. 24, the information processing apparatus 2401 is a computer configured to provide facility information related to a facility. A mobile terminal apparatus 2402 is a computer configured to output facility information related to a facility.

In the second embodiment, a facility information providing method is described in which facility information is provided to the mobile terminal apparatus 2402 when first and second regions are set as geo-fence borders for both a facility and the mobile terminal apparatus 2402, and the first and second regions intersect. Hereinafter, a processing example of the information processing apparatus 2401 will be described.

(1) The information processing apparatus 2401 obtains acceleration information of the mobile terminal apparatus 2402. In particular, for example, the information processing apparatus 2401 receives acceleration information periodically or randomly transmitted from the mobile terminal apparatus 2402 and thereby, obtains the acceleration information of the mobile terminal apparatus 2402.

Here, acceleration information is information from which the acceleration of the mobile terminal apparatus 2402 in a direction toward a specific facility may be identified. A specific facility may be a facility specified by the user of the mobile terminal apparatus 2402 or may be a facility preregistered in the information processing apparatus 2401. Acceleration in a direction toward a specific facility is expressed as the average acceleration during a certain period H.

For example, the acceleration in the direction toward a specific facility may be obtained by using equation (4).

$$a=(V2-V1)/H \quad (4)$$

Where, a is acceleration in the direction toward a specific facility; V1 is the traveling velocity in the direction toward the specific facility at a time point before the period H elapses from the current time point; and V2 is the traveling velocity in the direction toward the specific facility at the current time point.

Further, the traveling velocity in the direction toward the specific facility at a certain time point may be obtained using, for example, equation (5).

$$V=V_0\times\cos\theta \quad (5)$$

Where, V is the traveling velocity in the direction toward the specific facility at a certain time point; $V_0$ is the traveling velocity in the traveling direction at the certain time point; and $\theta$ is an angle having the position (in FIG. 24, "position G") of the mobile terminal apparatus 2402 as a reference point and formed by a velocity vector extending in the traveling direction and a velocity vector extending in the direction toward the specific facility.

The acceleration in the direction toward the specific facility may be calculated at the mobile terminal apparatus 2402 or may be calculated at the information processing apparatus 2401. For example, when calculated at the mobile terminal apparatus 2402, acceleration information of the mobile terminal apparatus 2402 includes information indicating the acceleration in the direction toward the specific facility. On the other hand, when calculated at the information processing apparatus 2401, the acceleration information of the mobile terminal apparatus 2402 includes information (for example, the position, the traveling speed, the traveling direction, etc. of the mobile terminal apparatus 2402) indicating the acceleration in the direction toward the specific facility.

(2) The information processing apparatus 2401 sets the first region for the position of the specific facility, based on the obtained acceleration information. Here, the first region is a region that is enlarged or reduced according to the magnitude of the acceleration of the mobile terminal apparatus 2402 in the direction toward the specific facility. For example, the first region is a circular region that is centered about the position of the specific facility and has the radius R.

In particular, for example, the information processing apparatus 2401 uses equation (6) to calculate the radius R of the first region. The information processing apparatus 2401, for example, sets as the first region, a circular region that is centered about the position of the specific facility and that has the calculated radius R.

$$R=R'+a\times C \quad (6)$$

Where, R is the radius of the first region; and R' is the radius of the first region previously set. At the initial setting of the first region, R' is an initial value $R_0$ that may be arbitrarily set and, for example, is set to be about several tens to several hundreds of meters. C is a fence coefficient (positive value) that may be arbitrarily set and, for example, is set to a value such that the radius R is within a range of several tens to several hundreds of meters.

As a result, for the mobile terminal apparatus 2402, when the traveling velocity in the direction toward the specific facility increases and the acceleration in the direction toward the specific facility increases, the first region may be set to have a larger radius R. Further, for the mobile terminal apparatus 2402, when the traveling velocity in the direction toward the specific facility decreases and the acceleration in the direction toward the specific facility decreases (becomes a negative value), the first region may be set to have a smaller radius R.

In the example depicted in FIG. 24, a circular region that is centered about the position of the specific facility and has the radius R is set as a first region 2410. The first region, for example, may be reset each time acceleration information is obtained from the mobile terminal apparatus 2402.

(3) The information processing apparatus 2401 transmits to the mobile terminal apparatus 2402, facility information related to the specific facility, when the set first region and the second region set for the position of the mobile terminal apparatus 2402 intersect. Here, the facility information may be information such as the name, address, telephone number, etc. of the specific facility or may be information such as a coupon that may be used at the facility, event information for an event being held there, etc.

The second region, for example, is a circular region that is centered about the position of the mobile terminal apparatus 2402 and has a radius r. The second region may be a predetermined region (for example, a circular having a radius r of several meters) or similar to the first region, maybe a region that is enlarged or reduced according to the magnitude of the acceleration of the mobile terminal apparatus 2402 in the direction toward a specific facility.

Intersecting of the first region and the second region is the first region and the second region contacting each other or the first region partially or entirely overlapping the second region. Determination of whether the first region and the second region intersect, for example, is performed by the mobile terminal apparatus 2402.

In particular, for example, the mobile terminal apparatus 2402 obtains from the information processing apparatus 2401, information identifying the first region whereby the mobile terminal apparatus 2402 determines whether the first region and the second region intersect. When the first region and the second region intersect, the mobile terminal apparatus 2402 transmits to the information processing apparatus 2401, information indicating that the first region and the second region intersect.

Nonetheless, the determination of whether the first region and the second region intersect may be performed by the information processing apparatus 2401. In particular, for example, the information processing apparatus 2401 obtains from the mobile terminal apparatus 2402, the position information of the mobile terminal apparatus 2402 and information indicating the second region whereby the information processing apparatus 2401 may determine whether the first region and the second region intersect.

In the example depicted in FIG. 24, a circular region centered about the position G of the mobile terminal apparatus 2402 and having the radius r is set as a second region 2420. Therefore, when the first region 2410 and the second region 2420 intersect as indicated by a dotted-lined circle in FIG. 24, the information processing apparatus 2401 transmits to the mobile terminal apparatus 2402, facility information related to a specific facility.

In this manner, the information processing apparatus 2401 according to the second embodiment enables the first region set for a specific facility to be enlarged or reduced according to increases or decreases in the traveling velocity of the mobile terminal apparatus 2402 in the direction toward the specific facility (acceleration). As a result, information may be provided effectively to the user of the mobile terminal apparatus 2402.

For example, when the traveling velocity in the direction toward a specific facility (acceleration) increases, the first region is enlarged to enable facility information to be provided for a facility located ahead in the direction that the user is headed. On the other hand, when the traveling velocity in the direction toward a specific facility (acceleration) decreases, the first region is reduced to enable the provision of information for a facility located in a direction in which the user is not headed to be suppressed.

(Example of system configuration of information providing system 2500)

An example of system configuration of an information providing system 2500 according to the second embodiment will be described. Here, a case where the information processing apparatus 2401 depicted in FIG. 24 is applied to a management server 2501 of the information providing system 2500 will be described as an example. Further, the mobile terminal apparatus 2402 depicted in FIG. 24, for example, corresponds to a mobile terminal apparatus 2502 in the information providing system 2500.

FIG. 25 is a diagram depicting an example of system configuration of the information providing system 2500 according to the second embodiment. In FIG. 25, the information providing system 2500 is configured to include the management server 2501, the mobile terminal apparatus 2502, and an event server 2503. In the information providing system 2500, the management server 2501, the mobile terminal apparatus 2502, and the event server 2503 are connected through the network 210.

Here, the management server 2501 has the user ID management DB 220, the registered building management DB 230, and the map information management DB 240, and is a computer configured to deliver facility information related to a facility. Contents stored by the user ID management DB 220, the registered building management DB 230, and the map information management DB 240 are similar to the contents depicted in FIGs. 5 to 7 and therefore, are not depicted or described hereinafter.

The mobile terminal apparatus 2502 is a computer that has a display screen (for example, the display 303 depicted in FIG. 3) and, for example, is a smartphone, a tablet terminal, a note PC, etc. Further, the mobile terminal apparatus 2502 may be, for example, a vehicle-mounted device such as a car navigation apparatus equipped on a car.

The event server 2503 has an event information DB 2510 and the facility/position information management DB 260, and is a computer configured to store event information related to a facility. The contents stored by the facility/position information management DB 260 are similar to the contents depicted in FIG. 9 and therefore, are not depicted or described hereinafter. The contents of the event information DB 2510 will be described with reference to FIG. 26.

An example of hardware configuration of the management server 2501 and of the event server 2503 is similar to the hardware configuration example depicted in FIG. 4 and therefore, is not depicted or described hereinafter. An example of hardware configuration of the mobile terminal apparatus 2502 is similar to the hardware configuration example depicted in FIG. 3 and therefore, is not depicted or described hereinafter.

<Contents stored by event information DB 2510>

FIG. 26 is a diagram depicting an example of the contents stored by the event information DB 2510. In FIG. 26, the event information DB 2510 stores event information (for example, event information 2601) related to buildings (facilities). The event information includes message information for corresponding intersecting rates (unit: %).

Here, an intersecting rate is an intersecting rate of a "terminal geo-fence" and a "facility geo-fence" described hereinafter, and is a value that increases as the mobile terminal apparatus 2502 approaches the facility. Further, message information corresponding to an intersecting rate may be arbitrarily set. For example, detailed information related to a facility may be associated with higher intersecting rates as message information.

For example, the event information 2601 includes message information "Coffee D is nearby" associated with an intersecting rate "10-20", message information "Columbian coffee is on special offer" associated with an intersecting rate "21-80", and message information "Thank you for coming to Coffee D" associated with an intersecting rate "81-100".

(Example of functional configuration of mobile terminal apparatus 2502)

FIG. 27 is a block diagram depicting an example of functional configuration of the mobile terminal apparatus 2502. In FIG. 27, the mobile terminal apparatus 2502 is configured to include an obtaining unit 2701, a communications unit 2702, a determining unit 2703, a setting unit 2704, and an output unit 2705. The obtaining unit 2701 to the output unit 2705 are functions constituting a control unit and in particular, for example, are realized by executing on the CPU 301, a program stored in depicted in the memory 302 FIG. 3 or via the public network I/F 305, the short-range wireless I/F 306, etc. Processing results of the functional units, for example, are stored to, for example, the memory 302.

The obtaining unit 2701 obtains sensor information. In particular, for example, the obtaining unit 2701 may obtain sensor information, each time the certain period H elapses. The certain period H may be arbitrarily set and, for example, is set to be about several minutes.

Here, sensor information is information that includes the position, the velocity and the acceleration of the mobile terminal apparatus 2502 in the direction of a target facility, at the current time point. The target facility is a facility for which the user of the mobile terminal apparatus 2502 wishes to receive delivery of message information and, for example, is set in the particular-event input screen 1000 depicted in FIG. 10. The target facility corresponds to "specific facility" described in FIG. 24.

The position of the mobile terminal apparatus 2502, for example, may be identified from position information from the GPS unit 307 depicted in FIG. 3 or may be identified from position information obtained from a communications device configured for short-range wireless communication (for example, a wireless LAN access point) by the short-range wireless I/F 306.

The traveling velocity of the mobile terminal apparatus 2502 in the direction of the target facility may be obtained by using equation (5), where, V is the traveling velocity in the direction of a target facility at a certain time point; $V_0$ is the traveling velocity in the traveling direction at the certain time point; and $\theta$ is an angle having the position of the mobile terminal apparatus 2502 as a reference point and formed by a velocity vector extending in the traveling direction and a velocity vector extending to the position of the target facility. The traveling velocity in the traveling direction at the certain time point may be identified from values output by the various sensors 308 (for example, speedometer, azimuth sensor, accelerometer, etc.) depicted in FIG. 3.

The acceleration of the mobile terminal 2502 in the direction of the target facility is expressed as the average acceleration during the certain period H from a time point that is the certain period H before the current time point until the current time point. In particular, for example, the mobile terminal apparatus 2502 may use equation (4) to obtain the acceleration in the direction of the target facility, where, a is the acceleration in the direction of the target facility.

The communications unit 2702 receives target facility information from the management server 2501. In particular, for example, the communications unit 2702 transmits to the management server 2501, particular-event information specifying a target facility set in the particular-event input screen 1000 and thereby, receives the target facility information from the management server 2501.

Here, the target facility information includes position information for the target facility and initial facility geo-fence information. The position information for the target facility, for example, is information that indicates the latitude and longitude (or a latitude range, a longitude range) specifying the position of the target facility.

The initial facility geo-fence information is information identifying an initial facility geo-fence of the target facility. The initial facility geo-fence is an initial facility geo-fence border set for the position of the target facility. The initial facility geo-fence, for example, is a circular region centered about the position of the target facility and having a radius X. A value of about several tens to several hundreds of kilometers is set as the radius X, for example. The initial facility geo-fence information, for example, includes the radius X of the initial facility geo-fence.

The determining unit 2703 determines whether the position of the mobile terminal apparatus 2502 at the current time point is within the initial facility geo-fence of the target facility. The range of the initial facility geo-fence of the target facility, for example, is identified from the radius X of the initial facility geo-fence and the position of the target facility, based on the target facility information received by the communications unit 2702.

The communications unit 2702 transmits to the management server 2501, the sensor information obtained by the obtaining unit 2701. In particular, for example, the communications unit 2702 transmits the sensor information to the management server 2501, when the determining unit 2703 determines that the position of the mobile terminal apparatus 2502 at the current time point is within the initial facility geo-fence.

The communications unit 2702 receives facility geo-fence information from the management server 2501. Here, the facility geo-fence information is information that identifies the facility geo-fence of the target facility. The facility geo-fence is a geo-fence border dynamically set for the position of the target facility. The facility geo-fence, for example, is a circular region centered about the position of the target facility and having the radius R.

The radius R is set at the management server 2501, based on sensor information from the mobile terminal apparatus 2502. For example, a value of about several tens of meters to several kilometers is set at the radius R. The facility geo-fence information, for example, includes the radius R of the facility geo-fence for the target facility.

The setting unit 2704 sets the terminal geo-fence. Here, the terminal geo-fence is a geo-fence border set at the position of the mobile terminal apparatus 2502 at the current time point. For example, the terminal geo-fence is a circular region that is centered about the position of the mobile terminal apparatus 2502 at the current time point and has the radius r. The terminal geo-fence corresponds to "the second region" described in FIG. 24.

In particular, for example, based on the sensor information obtained by the obtaining unit 2701, the setting unit 2704 uses equation (7) to calculate the radius r of the terminal geo-fence. The setting unit 2704 sets a circular region that is centered about the position at the current time point and that has the calculated radius r, as the terminal geo-fence.

$$r = r' + a \times B \qquad (7)$$

Where, r is the radius of the terminal geo-fence; and r' is the radius of the terminal geo-fence previously set. At the initial setting of the terminal geo-fence, r is the initial value $r_0$. The initial value $r_0$ may be arbitrarily set and, for example, is set to be about several tens of meters. Further, a is acceleration in the direction of a target facility. B is a fence coefficient (positive value) that may be arbitrarily set and, for example, is set to a value such that the radius r is within a range of several meters to several tens of meters.

A setting example of the terminal geo-fence will be described with reference to FIG. 28.

The communications unit 2702 transmits terminal geo-fence information to the management server 2501. Here, the terminal geo-fence information is information identifying the terminal geo-fence set by the setting unit 2704. The terminal geo-fence information includes, for example, the radius r of the set terminal geo-fence centered about the position of the mobile terminal apparatus 2502 at the current time point.

Further, the determining unit 2703 determines whether the terminal geo-fence set by the setting unit 2704 and the facility geo-fence of the target facility intersect. The facility geo-fence of the target facility, for example, is identified as a circular region that is centered about the position of the target facility and that has the radius R. The facility geo-fence of the target facility is identified based on the facility geo-fence information received by the communications unit 2702.

In particular, for example, the determining unit 2703 determines that the terminal geo-fence and the facility geo-fence intersect, when the terminal geo-fence and the facility geo-fence contact each other or the terminal geo-fence partially or entirely overlaps the terminal geo-fence.

When the determining unit 2703 determines that the terminal geo-fence and the facility geo-fence intersect, the communications unit 2702 transmits to the management server 2501, information indicating that the terminal geo-fence and the facility geo-fence intersect. In particular, for example, when the terminal geo-fence and the facility geo-fence intersect, the communications unit 2702 transmits a message request to the management server 2501. The message request requests message information related to the target facility.

The communications unit 2702 further receives information related to the target facility from the management server 2501. In particular, for example, the communications unit 2702 receives the message information related to the target facility from the management server 2501 as a result of transmitting the message request to the management server 2501.

The output unit 2705 outputs the information related to the target facility received by the communications unit 2702. The form of output by the output unit 2705 may be, for example, display on the display 303, audio output from a non-depicted speaker, etc. In particular, for example, the output unit 2705 may display on the display 303, message screens 3302 to 3304 as depicted in FIGs. 33 and 34 described hereinafter.

The determining unit 2703 may compare the traveling velocity in the direction of the target facility identified from the previous sensor information and the traveling velocity in the direction of the target facility identified from the current sensor information, and determine whether the rate of change of the traveling speed is at least a threshold A. The rate of change of the traveling speed, for example, is expressed by a ratio of the difference (value of change) of the previous traveling speed and the current traveling speed, to the previous traveling speed.

The threshold A may be arbitrarily set and is set to a value that enables determination that the radius r of the terminal geo-fence should be changed when the rate of change of the traveling speed is the threshold A or greater. For example, the threshold A is set to a value of about 0.3 (30%) to 1.0 (100%).

Further, when the determining unit 2703 determines that the rate of change of the traveling velocity in the direction of the target facility is the threshold A or greater, the communications unit 2702 may transmit the current sensor information to the management server 2501. As a result, at the management server 2501, the facility geo-fence is reset and the communications unit 2702 receives the facility geo-fence information from the management server 2501. As a result, the facility geo-fence may be dynamically changed according to changes in the traveling velocity of the mobile terminal apparatus 2502 in the direction of the target facility.

Further, when the determining unit 2703 determines that the rate of change of the traveling speed is the threshold A or greater, the setting unit 2704 resets the terminal geo-fence based on the current sensor information. As a result, the terminal geo-fence may be dynamically changed according to changes in the traveling velocity of the mobile terminal apparatus 2502 in the direction of a target facility.

(Setting example of terminal geo-fence)

A setting example of the terminal geo-fence will be described with reference to FIG. 28.

FIG. 28 is a diagram depicting a setting example of the terminal geo-fence. In FIG. 28, points G1 to G4 represent the position of the mobile terminal apparatus 2502 at each certain period H when the mobile terminal apparatus 2502 is traveling in the direction indicated by an arrow 2800, toward a target facility. Further, terminal geo-fences 2801 to 2804 are terminal geo-fences at the points G1 to G4.

As depicted in FIG. 28, during travel from the point G1 to the point G2, when the acceleration of the mobile terminal 2502 in the direction of the target facility increases, the radius r2 of the terminal geo-fence 2802 is greater than the radius r1 of the terminal geo-fence 2801.

For example, the radius r1 of the terminal geo-fence 2801 is assumed to be "r1=5[m]". Further, the traveling velocity V1 in the direction of the target facility for the point G1 is assumed to be "30[km/hour]"; the traveling velocity V2 in the direction of the target facility for the point G2 is assumed to be "60[km/hour]"; and the certain period H is assumed to be "H=2[minutes]".

In this case, the acceleration a in the direction of the target facility is "a=(60[km/hour]-30[km/hour])/2[minutes]≒0.07[m/seconds$^2$]". Further, when a fence coefficient B is assumed to be "B=50", the radius r2 of the terminal geo-fence 2802 becomes "r2=r1+0.07×50=8.5[m]" (where, the unit of the fence coefficient B is assumed to be "[seconds$^2$]").

Similarly, during travel from the point G2 to the point G3, when the acceleration of the mobile terminal 2502 in the direction of the target facility increases, the radius r3 of the terminal geo-fence 2803 is greater than the radius r2 of the terminal geo-fence 2802.

On the other hand, during travel from the point G3 to the point G4, when the traveling speed of the mobile terminal apparatus 2502 decreases and the acceleration in the direction of the target facility is a negative value, the radius r4 of the terminal geo-fence 2804 is less than the radius r3 of the terminal geo-fence 2803. When the mobile terminal apparatus 2502 travels at a constant speed, the radius r of the terminal geo-fence does not vary.

(Example of functional configuration of management server 2501)

FIG. 29 is a block diagram depicting an example of functional configuration of the management server 2501. In FIG. 29, the management server 2501 is configured to include a server communications unit 2901, a position information obtaining unit 2902, a server setting unit 2903, a calculating unit 2904, and an event information obtaining unit 2905. The server communications unit 2901 to the event information obtaining unit 2905 are functions constituting a control unit and in particular, for example, are realized by executing on the CPU 401, a program stored in a storage apparatus such as the memory 402, the disk 405 depicted in FIG. 4 or via the I/F 403. Processing results of the functional units, for example, are stored to, for example, a storage apparatus such as the memory 402, the disk 405, etc.

The server communications unit 2901 receives particular-event information from the mobile terminal apparatus 2502. The particular-event information is information indicating a target facility for which the user of the mobile terminal apparatus 2502 wishes to receive delivery of message information. The particular-event information includes, for example, the user ID, the terminal ID, a target facility name, a category name, a chain name, etc.

The target facility identified from the particular-event information, for example, is set in the corresponding target facility category field and/or target facility field of the user ID management DB 220 depicted in FIG. 5.

The server communications unit 2901 receives the position information of the mobile terminal apparatus 2502. In particular, for example, the server communications unit 2901 transmits a position information request to the mobile terminal apparatus 2502 and thereby receives from the mobile terminal apparatus 2502, the position information for the current position of the mobile terminal apparatus 2502. Nonetheless, the position information of the mobile terminal apparatus 2502 may be included in the particular-event information.

The position information obtaining unit 2902 obtains the position information of a target facility. In particular, for example, the position information obtaining unit 2902 refers to the map information management DB 240 (for example, refer to FIG. 7) and obtains the position information of a target facility present in the monitored region. Here, the monitored region is a region within a predetermined range from the position of the mobile terminal apparatus 2502. The predetermined range may be arbitrarily set and, for example, is set to a range centered about the position of the mobile terminal apparatus 2502 and have a radius of about several tens of kilometers to several hundreds of kilometers.

When the position information of the target facility is not registered in the map information management DB 240, the position information obtaining unit 2902 may make an inquiry to the event server 2503 regarding the position information of the target facility. For example, a case is assumed where the position information of the target facility "tower A" is not registered. In this case, the position information obtaining unit 2902 makes an inquiry to the event server 2503 for the position information of the target facility "tower A".

The event server 2503 refers to the facility/position information management DB 260 depicted in FIG. 9 to identify the latitude/longitude of the target facility "tower A" and transmits to the management server 2501, position information indicating the identified latitude/longitude of the target facility "tower A". As a result, the position information obtaining unit 2902 may obtain the position information of a target facility not registered in the map information management DB 240.

The server setting unit 2903 sets the initial facility geo-fence. As described above, the initial facility geo-fence is the initial facility geo-fence border set for the position of the target facility. In particular, for example, the server setting unit 2903 sets a circular region centered about the position of the target facility and having the radius X as the initial facility geo-fence. The radius X may be arbitrarily set and, for example, is set to a value of about several tens of kilometers to several hundreds of kilometers.

The server communications unit 2901 transmits to the mobile terminal apparatus 2502, the position information of the target facility obtained by the position information obtaining unit 2902 and the initial facility geo-fence information identifying the initial facility geo-fence set by the server setting unit 2903. In particular, for example, the server communications unit 2901 transmits to the mobile terminal apparatus 2502, target facility information that includes the position information of the target facility and the initial facility geo-fence information.

The server communications unit 2901 receives sensor information from the mobile terminal apparatus 2502. As described above, the sensor information, for example, is information that specifies the position, the velocity, and the acceleration of the mobile terminal apparatus 2502 in the direction of the target facility, at the current time point.

The server setting unit 2903 sets the facility geo-fence based on the sensor information received by the server communications unit 2901. The facility geo-fence is a geo-fence border set for the position of the target facility. The facility geo-fence corresponds to "the first region" depicted in FIG. 24.

In particular, for example, the server setting unit 2903 uses equation (6) and calculates the radius R of the facility geo-fence. Where, R is the radius of the facility geo-fence and R' is the radius of the facility geo-fence previously set. At the initial setting of the facility geo-fence, R' is the initial value $R_0$. Further, a is the acceleration of the mobile terminal 2502 in the direction of the target facility. The server setting unit 2903 sets a circular region that is centered about the position of the target facility and that has the calculated radius R, as the facility geo-fence. A setting example of the facility geo-fence will be described hereinafter with reference to FIGs. 30 and 31.

The server communications unit 2901 transmits the facility geo-fence information to the mobile terminal apparatus 2502. Here, the facility geo-fence information is information identifying the facility geo-fence of the target facility set by the server setting unit 2903. The facility geo-fence information includes, for example, information (for example, position information, name) identifying the target facility, the radius R of the facility geo-fence for the target facility, etc.

The server communications unit 2901 receives terminal geo-fence information from the mobile terminal apparatus 2502. As described above, the terminal geo-fence information is information identifying the terminal geo-fence. The terminal geo-fence information includes, for example, the radius r of the terminal geo-fence centered about the position of the mobile terminal apparatus 2502 at the current time point.

The server communications unit 2901 receives from the mobile terminal apparatus 2502, information indicating that the terminal geo-fence and the facility geo-fence intersect. In particular, for example, the server communications unit 2901 receives a message request from the mobile terminal apparatus 2502.

The calculating unit 2904 calculates a ratio of the intersecting range of the terminal geo-fence and the facility geo-fence to the terminal geo-fence, when the terminal geo-fence and the facility geo-fence intersect. In particular, for example, the calculating unit 2904, when a message request has been received, identifies as the terminal geo-fence, a circular region that has the radius r and that is centered about the position of the mobile terminal apparatus 2502 at the current time point included in the sensor information. The radius r is identified from the terminal geo-fence information.

The calculating unit 2904 identifies the intersecting range of the identified terminal geo-fence and the facility geo-fence set for the position of the target facility. Next, the calculating unit 2904 calculates the area of the terminal geo-fence and calculates the area of the intersecting range of the terminal geo-fence and the facility geo-fence. The calculating unit 2904 expresses a value obtained by dividing the area of the intersecting range by the area of the terminal geo-fence as a percentage and thereby, calculates the intersecting rate of the terminal geo-fence and the facility geo-fence.

As a result, an intersecting rate representing the ratio of the intersecting range of the terminal geo-fence and the facility geo-fence to the terminal geo-fence may be obtained.

The event information obtaining unit 2905 obtains event information of the target facility. In particular, for example, the event information obtaining unit 2905 transmits to the event server 2503, an event request requesting the event information of the target facility and thereby, obtains the event information from the event server 2503. The event request includes the target facility name, the category name, a chain name, etc.

The event server 2503, when receiving the event request from the management server 2501, extracts from the event information DB 2510 (for example, refer to FIG. 26), the event information of the target facility identified from the event request. The event server 2503 transmits the extracted event information to the management server 2501. For example, when the event request includes the target facility name "coffee chain D", the event server 2503 extracts the event information 2601 from the event information DB 2510 and transmits the event information 2601 to the management server 2501.

The server communications unit 2901 transmits to the mobile terminal apparatus 2502, message information related to the target facility. In particular, for example, the server communications unit 2901 extracts from among message information included in the event information of the target facility, the message information associated with the intersecting rate calculated by the calculating unit 2904. The server communications unit 2901 transmits the extracted message information to the mobile terminal apparatus 2502.

For instance, taking the event information 2601 as an example, when the intersecting rate is "30[%]", the server communications unit 2901 extracts the message information "Columbian coffee is on special offer" associated with the intersecting rate "21-80" and transmits the message information "Columbian coffee is on special offer" to the mobile terminal apparatus 2502. As a result, different message information related to the target facility may be provided to the mobile terminal apparatus 2502, according to the intersecting rate of the terminal geo-fence and the facility geo-fence.

(Setting example of facility geo-fence)

A setting example of the facility geo-fence will be described with reference to FIGs. 30 and 31.

FIG. 30 is a diagram (part 1) depicting a setting example of the facility geo-fence. In FIG. 30, the points G1, G2 represent the position of the mobile terminal apparatus 2502 at each certain period H when the mobile terminal apparatus 2502 is traveling in a direction indicated by an arrow 3000. A point P represents the position of the target facility.

Here, a terminal geo-fence 3001 (dotted lined circle in FIG. 30) is a terminal geo-fence at the point G1. A facility geo-fence 3003 (dotted lined circle in FIG. 30) is a facility geo-fence associated with the terminal geo-fence 3001.

A terminal geo-fence 3002 (solid lined circle in FIG. 30) is a terminal geo-fence at the point G2. A facility geo-fence 3004 (solid lined circle in FIG. 30) is a facility geo-fence associated with the terminal geo-fence 3002.

As depicted in FIG. 30, during travel from the point G1 to the point G2, when the acceleration of the mobile terminal 2502 in the direction of a target facility increases, the radius R2 of the facility geo-fence 3004 is greater than the radius R1 of the facility geo-fence 3003.

For example, the radius R1 of the facility geo-fence 3003 is assumed to be "R1=100[m]". Further, the acceleration a in the direction of the target facility, at the point G2 is assumed to be "0.07[m/seconds$^2$]" and the fence coefficient C is assumed to be "C=200". In this case, the radius R2 of the facility geo-fence 3004 is "$R2=R1+0.07\times200=114$[m]" (where, the unit of the fence coefficient C is "[seconds$^2$]").

FIG. 31 is a diagram (part 2) depicting a setting example of the facility geo-fence. In FIG. 31, the points G1, G2 represent the position of the mobile terminal apparatus 2502 at each certain period H when the mobile terminal apparatus 2502 is traveling in a direction indicated by an arrow 3100. The point P represents the position of the target facility.

Here, a terminal geo-fence 3101 (dotted lined circle in FIG. 31) is a terminal geo-fence at the point G1. A facility geo-fence 3103 (dotted lined circle in FIG. 31) is a facility geo-fence associated with the terminal geo-fence 3101.

Further, a terminal geo-fence 3102 (solid lined circle in FIG. 31) is a terminal geo-fence at the point G2. A facility geo-fence 3104 (solid lined circle in FIG. 31) is a facility geo-fence associated with the terminal geo-fence 3102.

As depicted in FIG. 31, during travel from the point G1 to the point G2, when the acceleration of the mobile terminal 2502 in the direction of a target facility decreases and the acceleration in the direction of the target facility is a negative value, the radius R2 of the facility geo-fence 3104 is less than the radius R1 of the facility geo-fence 3103.

(Example of message screen)

An example of a message screen displayed on the display 303 of the mobile terminal apparatus 2502 will be described. Here, as depicted in FIG. 32, a case where the mobile terminal apparatus 2502 is traveling toward a target facility will be taken as an example and an example of transition of screens displayed on the display 303 of the mobile terminal apparatus 2502 will be described.

FIG. 32 is a diagram depicting an example of intersection of the terminal geo-fence and the facility geo-fence. In FIG. 32, the points G1 to G3 represent the position of the mobile terminal apparatus 2502 at each certain period H when the mobile terminal apparatus 2502 is traveling toward a target facility. The point P represents the position of the target facility.

As depicted in FIG. 32, as the mobile terminal apparatus 2502 approaches the target facility, the intersecting range of a terminal geo-fence 3201 and a facility geo-fence 3202 increases. Here, a case is assumed in which the terminal geo-fence 3201 does not change at the points G1 to G3.

The intersecting rate of the terminal geo-fence 3201 and the facility geo-fence 3202 at the point G1 is assumed to be "10[%]". The intersecting rate of the terminal geo-fence 3201 and the facility geo-fence 3202 at the point G2 is assumed to be "80[%]". The intersecting rate of the terminal geo-fence 3201 and the facility geo-fence 3202 at the point G3 is assumed to be "100[%]".

FIGs. 33 and 34 are diagrams depicting an example of screen transition of the mobile terminal apparatus 2502. In FIG. 33 (33-1), a monitoring notification screen 3301 is an example of a screen displayed on the display 303 when a target facility is set in the particular-event input screen 1000. Through the monitoring notification screen 3301, the user is able to know that the delivery of message information related to the target facilities "tower A" and "coffee chain D" is being awaited.

Further in FIG. 33 (33-2), the message screen 3302 is an example of a screen displayed on the display 303, for example, when at the point G1 depicted in FIG. 32, the intersecting rate of the terminal geo-fence 3201 and the facility geo-fence 3202 becomes "10[%]". Through the message screen 3302, the user is able to know that the target facility "coffee chain D" is nearby.

In FIG. 34 (33-3), the message screen 3303 is an example of a screen displayed on the display 303, for example, when at the point G2 depicted in FIG. 32, the intersecting rate of the terminal geo-fence 3201 and the facility geo-fence 3202 becomes "80[%]". Through the message screen 3303, the user is able to identify the special offer at the target facility "coffee chain D".

Further in FIG. 34 (33-4), the message screen 3304 is an example of a screen displayed on the display 303, for example, when at the point G3 depicted in FIG. 32, the intersecting rate of the terminal geo-fence 3201 and the facility geo-fence 3202 becomes "100[%]". Through the message screen 3304, the user is able to know that a vicinity of the target facility "coffee chain D" has been reached.

(Procedure of facility information providing process by mobile terminal apparatus 2502)

A procedure of the facility information providing process by the mobile terminal apparatus 2502 will be described. Execution of the procedure of the facility information providing process, for example, starts when the facility information providing program is invoked at the mobile terminal apparatus 2502.

FIGs. 35, 36, and 37 are flowcharts depicting an example of the procedure of the facility information providing process by the mobile terminal apparatus 2502 according to the second embodiment. In the flowchart depicted in FIG. 35, the mobile terminal apparatus 2502 displays an authentication screen on the display 303 (step S3501).

The mobile terminal apparatus 2502 determines whether authentication information of the user has been input into the authentication screen (step S3502). Here, the mobile terminal apparatus 2502 waits for input of the authentication information (step S3502: NO).

The mobile terminal apparatus 2502, when the authentication information has been input (step S3502: YES), transmits to the management server 2501, a log-on request that includes the input authentication information (step S3503). The mobile terminal apparatus 2502 receives an authentication result from the management server 2501 (step S3504).

The mobile terminal apparatus 2502 refers to the received authentication result and determines whether the authentication is OK (step S3505). Here, when the authentication is NG (step S3505: NO), the mobile terminal apparatus 2502 returns to step S3501 and redisplays the authentication screen on the display 303.

On the other hand, when the authentication is OK (step S3505: YES), the mobile terminal apparatus 2502 executes the target facility setting process (step S3506). The target facility setting process is a process of setting a target facility for which the user wishes to receive delivery of event information. A detailed procedure of the target facility setting process is similar to the detailed procedure of the target facility setting process described with reference to FIG. 20 and therefore, will not be depicted or described hereinafter.

The mobile terminal apparatus 2502 determines whether target facility information has been received from the management server 2501 (step S3507). The target facility information includes the position information of the target facility and the initial facility geo-fence information. Here, the mobile terminal apparatus 2502 waits to receive the target facility information (step S3507: NO).

The mobile terminal apparatus 2502, when receiving the target facility information (step S3507: YES), refers to the initial facility geo-fence information included in the target facility information and determines whether the position of the mobile terminal apparatus 2502 at the current time point is included within the initial facility geo-fence of the target facility (step S3508).

Here, the mobile terminal apparatus 2502 waits until the position of the mobile terminal apparatus 2502 at the current time point is included within the initial facility geo-fence of the target facility (step S3508: NO). When the position of the mobile terminal apparatus 2502 at the current time point is included within the initial facility geo-fence of the target facility (step S3508: YES), the mobile terminal apparatus 2502 transitions to step S3601 depicted in FIG. 36.

In the flowchart depicted in FIG. 36, the mobile terminal apparatus 2502 generates screen information of a monitoring notification screen, based on the target facility set in the particular-event input screen 1000 and displays the monitoring notification screen on the display 303, (step S3601).

The mobile terminal apparatus 2502 obtains sensor information (step S3602) and transmits the obtained sensor information to the management server 2501 (step S3603). The mobile terminal apparatus 2502 determines whether facility geo-fence information has been received from the management server 2501 (step S3604).

Here, the mobile terminal apparatus 2502 waits to receive the facility geo-fence information from the management server 2501 (step S3604: NO). The mobile terminal apparatus 2502, when receiving the facility geo-fence information (step S3604: YES), uses equation (7) to calculate the radius r of the terminal geo-fence, based on the received sensor information (step S3605).

Based on the obtained sensor information, the mobile terminal apparatus 2502 sets as the terminal geo-fence, a circular region that is centered about the position at the current time point and has the calculated radius r (step S3606). The mobile terminal apparatus 2502 transmits to the management server 2501, terminal geo-fence information identifying the set terminal geo-fence (step S3607).

The mobile terminal apparatus 2502 refers to received facility geo-fence information and determines whether the set terminal geo-fence and the facility geo-fence of the target facility intersect (step S3608). Here, when the terminal geo-fence and the facility geo-fence do not intersect (step S3608: NO), the mobile terminal apparatus 2502 stands by until the certain period H has elapsed since obtaining the previous sensor information (step S3609).

The mobile terminal apparatus 2502 obtains sensor information after the certain period H elapses (step S3610). The mobile terminal apparatus 2502 compares the traveling velocity in the direction of the target facility identified from the previous sensor information and the traveling velocity in the direction of the target facility identified from the current sensor information to determine whether the rate of change of the traveling speed is at least the threshold A (step S3611).

Here, when the rate of change of the traveling speed is less than the threshold A (step S3611: NO), the mobile terminal apparatus 2502 returns to step S3608. On the other hand, when the rate of change of the traveling speed is the threshold A or greater (step S3611: YES), the mobile terminal apparatus 2502 returns to step S3603.

At step S3608, when the terminal geo-fence and the facility geo-fence intersect (step S3608: YES), the mobile terminal apparatus 2502 transitions to step S3701 depicted in FIG. 37.

In the flowchart depicted in FIG. 37, the mobile terminal apparatus 2502 transmits a message request to the management server 2501 (step S3701). The message request requests message information related to the target facility that is associated with the facility geo-fence that intersects the terminal geo-fence.

The mobile terminal apparatus 2502 determines whether message information related to the target facility has been received from the management server 2501 (step S3702). Here, the mobile terminal apparatus 2502 waits to receive the message information (step S3702: NO). The mobile terminal apparatus 2502, when receiving the message information (step S3702: YES), generates screen information of a message screen based on the received message information and displays the message screen on the display 303 (step S3703).

The mobile terminal apparatus 2502 determines whether the target facility has been reached (step S3704). For example, the mobile terminal apparatus 2502 may determine that the target facility has been reached when the position of the mobile terminal apparatus 2502 is included within a predetermined range (for example, within 100[m]) from the position of the target facility.

Here, if the target facility has not been reached (step S3704: NO), the mobile terminal apparatus 2502 transitions to step S3609 depicted in FIG. 36. On the other hand, if the target facility has been reached (step S3704: YES), the mobile terminal apparatus 2502 ends the series of operations according to the flowchart.

As a result, with respect to the position of the mobile terminal apparatus 2502, a terminal geo-fence that is enlarged or reduced according to the magnitude of the acceleration in the direction of a target facility may be set. Further, when the terminal geo-fence and the facility geo-fence intersect, message information related to the target facility may be requested from the management server 2501. When the position of the mobile terminal apparatus 2502 at the current time point is included within the initial facility geo-fence of the target facility, sensor information is transmitted to the management server 2501 whereby the processing load may be suppressed when the mobile terminal apparatus 2502 is not present within a range of several tens of kilometers to several hundreds of kilometers from a target facility.

(Procedure of facility information providing process by management server 2501)

A procedure of the facility information providing process by the management server 2501 will be described.

FIGs. 38, 39, and 40 are flowcharts depicting an example of a procedure of the facility information providing process by the management server 2501 according to the second embodiment. In the flowchart depicted in FIG. 38, the management server 2501 determines whether a log-on request has been received from the mobile terminal apparatus 2502 (step S3801).

Here, the management server 2501 waits to receive a log-on request (step S3801: NO). The management server 2501, when receiving a log-on request (step S3801: YES), executes the log-on process (step S3802). The log-on process is a process of authenticating the user of the mobile terminal apparatus 2502.

The management server 2501 determines whether the authentication is OK (step S3803). Here, when the authentication is NG (step S3803: NO), the management server 2501 transmits to the mobile terminal apparatus 2502, an authentication result indicating that the authentication is NG (step S3804), and ends the series of operations according to the flowchart.

On the other hand, when the authentication is OK (step S3803: YES), the management server 2501 transmits to the mobile terminal apparatus 2502, an authentication result that includes registered facility information and that indicates that the authentication is OK (step S3805). The registered facility information is information that is identified from the registered building management DB 230 and that may identify a facility registered by the user as a target facility candidate.

The management server 2501 determines whether particular-event information has been received from the mobile terminal apparatus 2502 (step S3806). Here, the management server 2501 waits to receive the particular-event information (step S3806: NO). The management server 2501, when receiving the particular-event information (step S3806: YES), transmits to the event server 2503, an event request requesting the event information of a target facility (step S3807).

The management server 2501 determines whether event information has been received from the event server 2503 (step S3808). Here, the management server 2501 waits to receive the event information (step S3808: NO). The management server 2501, when receiving the event information (step S3808: YES), transmits a position information request to the mobile terminal apparatus 2502 (step S3809), and transitions to step S3901 depicted in FIG. 39.

In the flowchart depicted in FIG. 39, the management server 2501 determines whether position information has been received from the mobile terminal apparatus 2502 (step S3901). Here, the management server 2501 waits to receive the position information from the mobile terminal apparatus 2502 (step S3901: NO).

When the management server 2501 has received the position information (step S3901: YES), the management server 2501 obtains based on the received position information, the position information of a target facility present within a monitored region (step S3902). The target facility is identified from the particular-event information received at step S3806 depicted in FIG. 38.

The management server 2501 sets as the initial facility geo-fence, a circular region that is centered about the position of the target facility and has the radius X (step S3903). The management server 2501 transmits to the mobile terminal apparatus 2502, target facility information that includes the obtained position information of the target facility and initial facility geo-fence information identifying the initial facility geo-fence (step S3904).

The management server 2501 determines whether sensor information has been received from the mobile terminal apparatus 2502 (step S3905). Here, the management server 2501 waits to receive the sensor information (step S3905: NO). The management server 2501, when receiving the sensor information (step S3905: YES), calculates the radius R of the facility geo-fence using equation (6), based on the received sensor information (step S3906).

The management server 2501 sets as the facility geo-fence, a circular region that is centered about the position of the target facility and has the radius R (step S3907). The management server 2501 transmits to the mobile terminal apparatus 2502, facility geo-fence information that identifies the set facility geo-fence of the target facility (step S3908), and the management server 2501 transitions to step S4001 depicted in FIG. 40.

In the flowchart depicted in FIG. 40, the management server 2501 determines whether terminal geo-fence information has been received from the mobile terminal apparatus 2502 (step S4001). Here, the management server 2501 waits to receive the terminal geo-fence information from the mobile terminal apparatus 2502 (step S4001: NO).

The management server 2501, when receiving the terminal geo-fence information (step S4001: YES), determines whether a message request has been received from the mobile terminal apparatus 2502 (step S4002). Here, when a message request has not been received (step S4002: NO), the management server 2501 determines whether sensor information has been received from the mobile terminal apparatus 2502 (step S4003).

Here, when sensor information has been received (step S4003: YES), the management server 2501 transitions to step S3906 depicted in FIG. 39. On the other hand, when sensor information has not received (step S4003: NO), the management server 2501 returns to step S4002.

At step S4002, when the message request has been received (step S4002: YES), the management server 2501 calculates the intersecting rate of the terminal geo-fence and the facility geo-fence (step S4004). The management server 2501 extracts from message information included in event information received at step S3808 depicted in FIG. 38, message information associated with the calculated intersecting rate (step S4005).

The management server 2501 transmits the extracted message information to the mobile terminal apparatus 2502 (step S4006). The management server 2501 determines whether the mobile terminal apparatus 2502 has reached the target facility (step S4007). For example, the management server 2501, determines that the mobile terminal apparatus 2502 has reached the target facility, when the position of the mobile terminal apparatus 2502 is included within a predetermined range (for example, within 100[m]) of the target facility.

Here, when the mobile terminal apparatus 2502 has not reached the target facility (step S4007: NO), the management server 2501 transitions to step S4003. On the other hand, when the mobile terminal apparatus 2502 has reached the target facility (step S4007: YES), the management server 2501 ends the series of operations according to the flowchart.

As a result, a facility geo-fence that is enlarged or reduced according to the acceleration of the mobile terminal 2502 in the direction of a target facility may be set for a target facility. Further, when the facility geo-fence and the terminal geo-fence intersect, message information corresponding to the intersecting rate of the facility geo-fence and the terminal geo-fence may be transmitted to the mobile terminal apparatus 2502.

As described, the management server 2501 according to the second embodiment enables a facility geo-fence that is enlarged or reduced according to the acceleration of the mobile terminal 2502 in the direction of a target facility to be set for a target facility. As a result, the facility geo-fence set for a target facility may be enlarged or reduced according to the traveling velocity (acceleration) of the mobile terminal apparatus 2502 in the direction of a target facility.

The management server 2501 further enables an intersecting rate of the facility geo-fence and the terminal geo-fence to be calculated when the facility geo-fence and the terminal geo-fence set for the position of the mobile terminal apparatus 2502 intersect. As a result, it may be determined how close the mobile terminal apparatus 2502 is to a target facility.

The management server 2501 further enables message information corresponding to the intersecting rate and extracted from message information related to a target facility to be transmitted to the mobile terminal apparatus 2502. As a result, the mobile terminal apparatus 2502 may provide to the mobile terminal apparatus 2502, different message information related to a target facility, according to how close the mobile terminal apparatus 2502 is to the target facility.

The mobile terminal apparatus 2502 according to the second embodiment further enables a terminal geo-fence to be set for the mobile terminal apparatus 2502, the terminal geo-fence being enlarged or reduced according the magnitude of the acceleration in the direction of a target facility. As a result, the terminal geo-fence set for the mobile terminal apparatus 2502 may be enlarged or reduced according to increases and decreases in the traveling velocity (acceleration) of the mobile terminal apparatus 2502 in the direction of a target facility.

Thus, the information providing system 2500 according to the second embodiment enables a facility geo-fence and a terminal geo-fence to be changed according to the state of the mobile terminal apparatus 2502 and thereby, enables information to be effectively provided to the user of the mobile terminal apparatus 2502.

For example, when the traveling velocity in the direction of a target facility (acceleration) is high, the facility geo-fence and the terminal geo-fence are enlarged, enabling information to be provided for a target facility that is located ahead in the direction in which the user is traveling. On the other hand, when the traveling velocity (acceleration) in the direction of a target facility is low, the facility geo-fence and the terminal geo-fence is reduced, enabling the provision of information for a target facility at position in a direction in which the user is not traveling to be suppressed.

The facility information providing method according to the embodiments may be realized by executing a prepared program on a computer such as a personal computer, a work station, etc. The facility information providing program is recorded on a computer-readable recording medium such as a hard disk, a flexible disk, a CD-ROM, an MO, and a DVD, and is executed by being read out from the recording medium by a computer. The facility information providing program may be distributed through a network such as the Internet.

EXPLANATIONS OF LETTERS OR NUMERALS

101, 2401 information processing apparatus
200, 2500 information providing system
201, 2402, 2502 mobile terminal apparatus
202, 2501 management server
203, 2503 event server
220 user ID management DB
230 registered building management DB

240 map information management DB
250, 2510 event information DB
260 facility/position information management DB
1101, 2701 obtaining unit
1102, 2904 calculating unit
1103, 2704 setting unit
1104 determining unit
1105, 2702 communications unit
1106, 2705 output unit
1201, 2901 server communications unit
1202, 2902 position information obtaining unit
1203, 2905 event information obtaining unit
2703 determining unit
2903 server setting unit

**Claims**

1. An information processing apparatus comprising:

   a control unit configured to:

      calculate based on a first position, a traveling speed, and a traveling direction of the information processing apparatus at a current time point, a second position of the information processing apparatus at a time point subsequent to the current time point;
      set a region for the second position calculated for the time point, the region being enlarged according to a temporal difference of the current time point and the time point; and
      output information related to a facility present within the set region.

2. The information processing apparatus according to claim 1, wherein
the control unit calculates the second position for the time point of each elapse of a predetermined period from the current time point, and
the control unit sets for the second position calculated for the time point of each elapse of the predetermined period, a region that is enlarged according to the temporal difference of the current time point and the time point.

3. The information processing apparatus according to claim 2, wherein
the control unit creates an integrated region by integrating a reference region set for the first position and the region set for the second position calculated for the time point of each elapse of the predetermined period, and
the control unit outputs information related to the facility present within the created integrated region.

4. The information processing apparatus according to claim 3, wherein
the control unit transmits to a server, a delivery request for the information related to the facility and thereby, receives the information related to the facility from the server when the facility is present within the integrated region, and
the control unit outputs the received information related to the facility.

5. The information processing apparatus according to any one of claims 2 to 4, wherein
the control unit sets for the second position calculated for the time point of each elapse of the predetermined period, a region that is enlarged according to the traveling speed at the current time point, and the temporal difference of the current time point and the time point.

6. The information processing apparatus according to claim 3, wherein
the control unit creates as the integrated region, a region formed by tangents connecting points on the reference region and the region set for the second position calculated for the time point of each elapse of the predetermined period.

7. The information processing apparatus according to any one of claims 2 to 6, wherein
the region set for the second position calculated for the time point of each elapse of the predetermined period is a region having a circular shape and centered about the time point.

**8.** A facility information providing program causing a computer to execute a process comprising:

calculating based on a first position, a traveling speed, and a traveling direction of an apparatus of the facility information providing program at a current time point, a second position of the apparatus at a time point subsequent to the current time point;
setting a region for the second position calculated for the time point, the region being enlarged according to a temporal difference of the current time point and the time point; and
outputting information related to a facility present within the set region.

**9.** An information processing apparatus comprising:

a control unit configured to:

obtain acceleration information that may identify acceleration of a mobile terminal apparatus in a direction toward a specific facility;
set based on the acceleration information and for a position of the specific facility, a first region that is enlarged or reduced according a magnitude of the acceleration in the direction toward the specific facility; and
transmit facility information related to the specific facility to the mobile terminal apparatus, when the set first region and a second region set for a position of the mobile terminal apparatus intersect.

**10.** The information processing apparatus according to claim 9, wherein
the control unit calculates a ratio of an intersecting range of the first region and the second region to the first region, when the first region and the second region intersect, and
the control unit transmits to the mobile terminal apparatus, the facility information corresponding to the calculated ratio, among facility information related to the specific facility.

**11.** The information processing apparatus according to claim 9 or 10, wherein
the second region is a region that is enlarged or reduced according to a magnitude of the acceleration in the direction toward the specific facility.

**12.** The information processing apparatus according to any one of claims 9 to 11, wherein
the first region is a region having a circular shape and centered about the position of the specific facility, and
the second region is a region having a circular shape and centered about the position of the mobile terminal apparatus.

**13.** The information processing apparatus according to any one of claims 9 to 12, wherein
the control unit transmits to the mobile terminal apparatus, region information indicating the set first region, and
the control unit transmits to the mobile terminal apparatus, the facility information related to the specific facility, when notification information indicating that the first region and the second region intersect is received from the mobile terminal apparatus.

**14.** A facility information providing program causing a computer to execute a process comprising:

obtaining acceleration information that may identify acceleration of a mobile terminal apparatus in a direction toward a specific facility;
setting based on the acceleration information and for a position of the specific facility, a first region that is enlarged or reduced according a magnitude of the acceleration in the direction toward the specific facility; and
transmitting facility information related to the specific facility to the mobile terminal apparatus, when the set first region and a second region set for a position of the mobile terminal apparatus intersect.

FIG.1

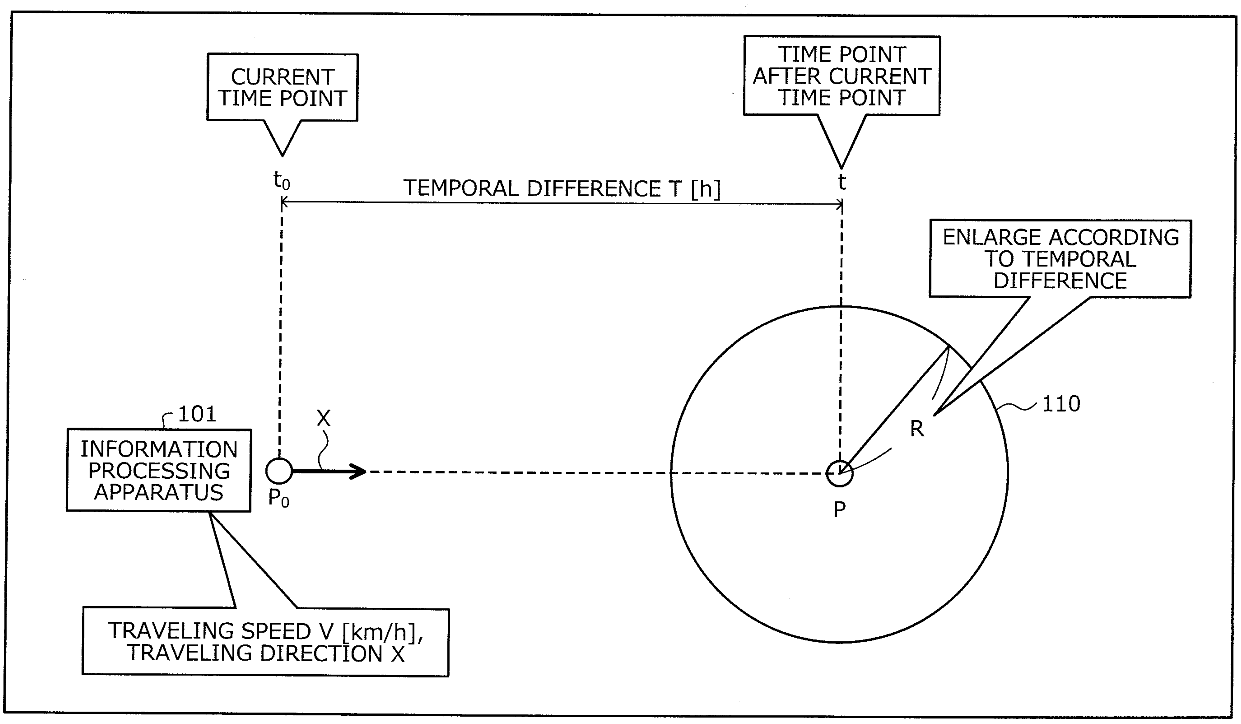
CURRENT
TIME POINT
TIME POINT
AFTER CURRENT
TIME POINT
$t_0$
TEMPORAL DIFFERENCE T [h]
t
ENLARGE ACCORDING
TO TEMPORAL
DIFFERENCE
110
101
INFORMATION
PROCESSING
APPARATUS
X
R
$P_0$
P
TRAVELING SPEED V [km/h],
TRAVELING DIRECTION X

FIG.2

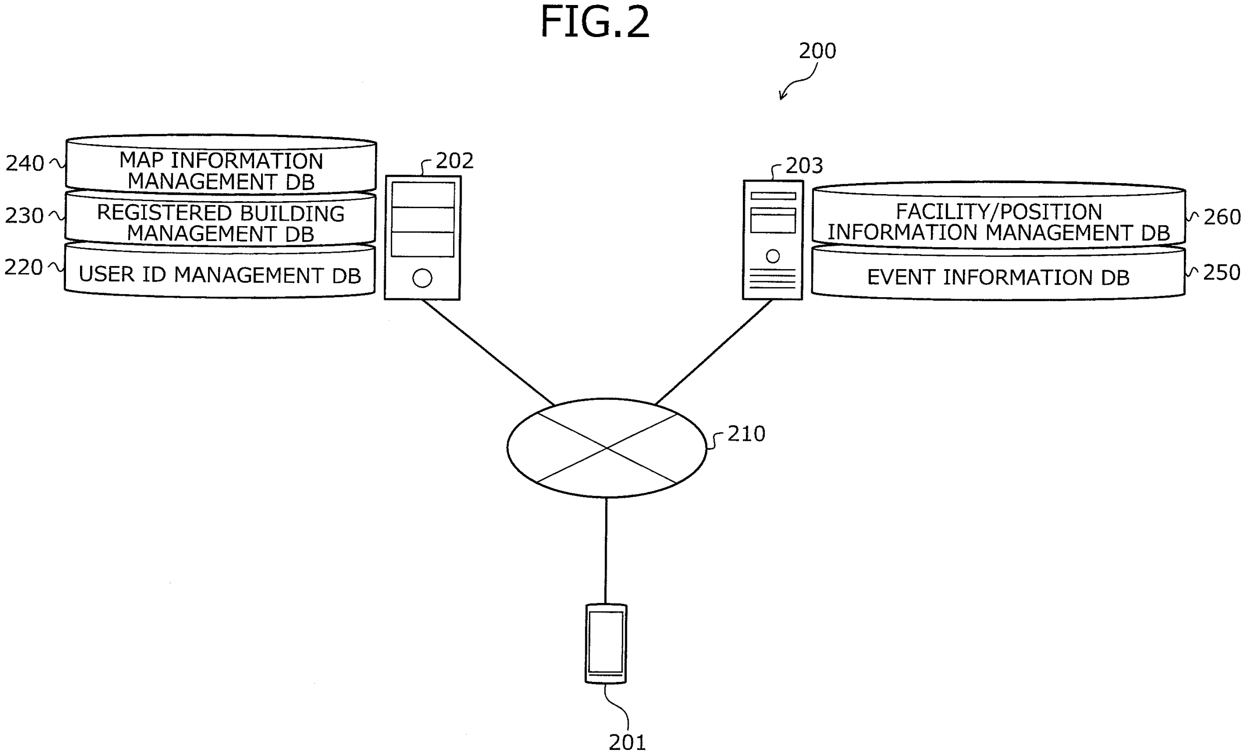
200
240
MAP INFORMATION MANAGEMENT DB
230
REGISTERED BUILDING MANAGEMENT DB
220
USER ID MANAGEMENT DB
202
203
FACILITY/POSITION INFORMATION MANAGEMENT DB
260
EVENT INFORMATION DB
250
210
201

FIG.3

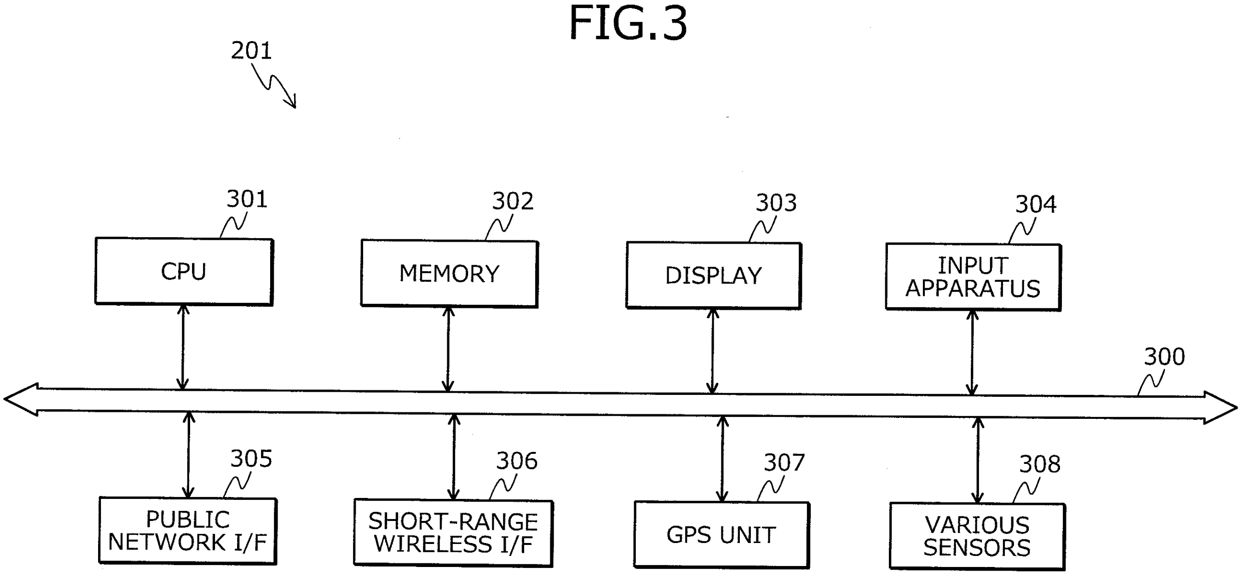
201
301
CPU
302
MEMORY
303
DISPLAY
304
INPUT APPARATUS
300
305
PUBLIC NETWORK I/F
306
SHORT-RANGE WIRELESS I/F
307
GPS UNIT
308
VARIOUS SENSORS

FIG.4

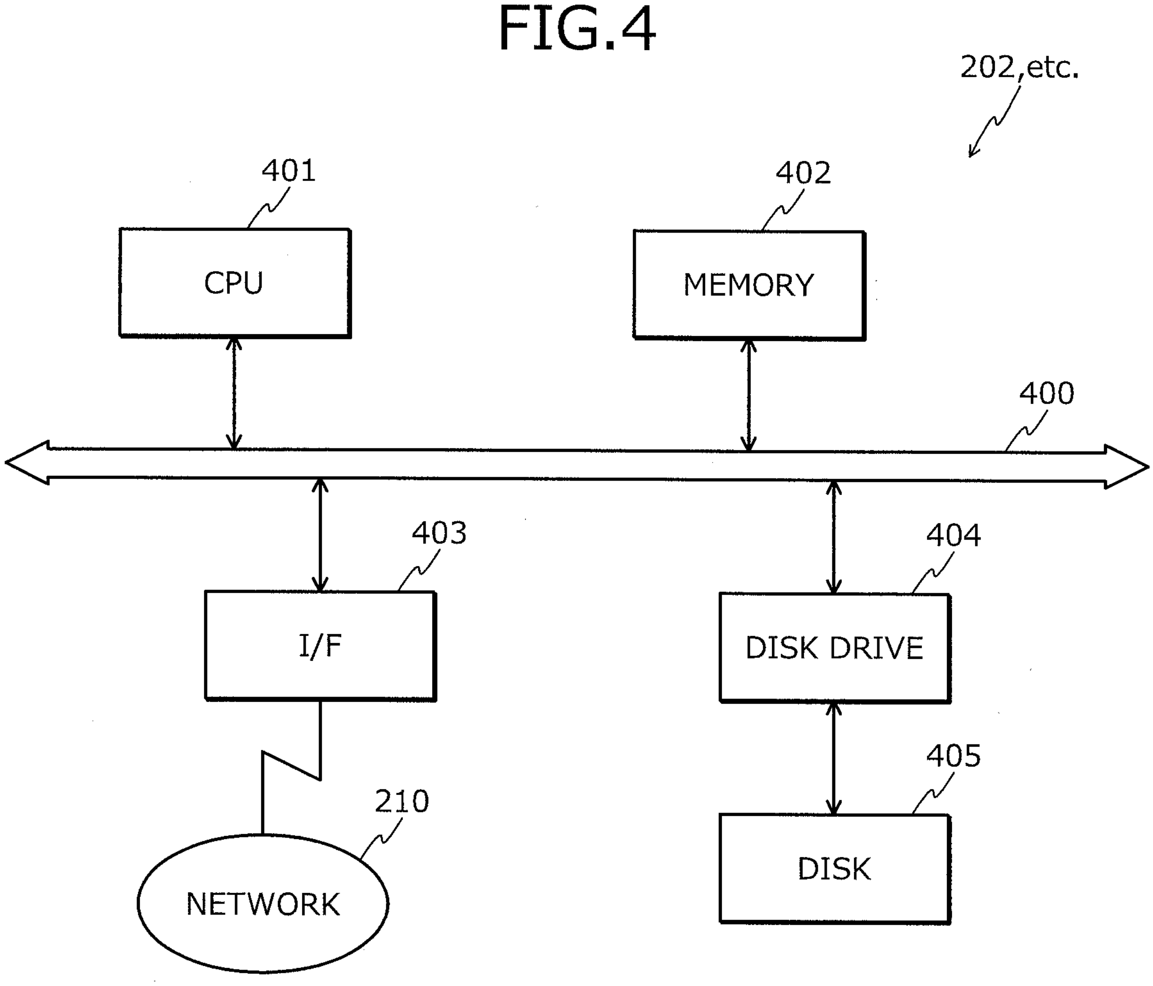
202,etc.
401
CPU
402
MEMORY
400
403
I/F
404
DISK DRIVE
405
DISK
210
NETWORK

FIG.5

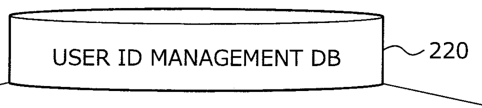


| | USER ID | PASSWORD | TERMINAL ID | GIP | TARGET FACILITY CATEGORY | TARGET FACILITY |
|---|---|---|---|---|---|---|
| 500-1 | U1 | ***** | T1 | xxx.xxx.1.xxx | COFFEE CHAIN D | TOWER A |
| 500-2 | U2 | ***** | T2 | xxx.xxx.1.yyy | FAMILY RESTAURANT CHAIN A | TOWER B |
| 500-3 | U3 | ***** | T3 | xxx.xxx.1.zzz | CONVEYER BELT SUSHI CHAIN B | TOWER C |
| | : | : | : | : | : | : |

FIG.6

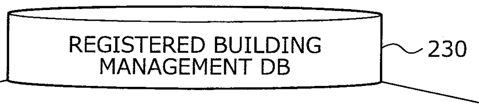


| | USER ID | TERMINAL ID | REGISTERED FACILITY |
|---|---|---|---|
| 600-1 | U1 | T1 | TOWER A, COFFEE CHAIN D, GAS STATION Z |
| 600-2 | U2 | T2 | TOWER B, GAS STATION Y, FAMILY RESTAURANT CHAIN A |
| 600-3 | U3 | T3 | TOWER C, GAS STATION W, CONVEYER BELT SUSHI CHAIN B |
| | : | : | : |

FIG.7

MAP INFORMATION MANAGEMENT DB 240

| | LATITUDE RANGE | LONGITUDE RANGE | REGISTERED FACILITY |
|---|---|---|---|
| 700-1 | x1-x2 | y1-y2 | GAS STATION A |
| 700-2 | x3-x4 | y3-y4 | GAS STATION B |
| 700-3 | x5-x6 | y5-y6 | GAS STATION C |
| | : | : | : |

FIG.8

EVENT INFORMATION DB 250

| | FACILITY | EVENT INFORMATION |
|---|---|---|
| 800-1 | TOWER A | FAMOUS ANIME TOKYO PIECE EXHIBITION BEING HELD |
| 800-2 | COFFEE CHAIN D | COFFEE D IS NEARBY |
| 800-3 | GAS STATION A | FREE CAR WASH |
| | : | : |

FIG.9

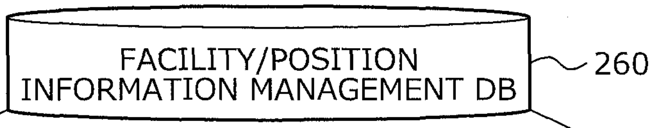


| FACILITY | LATITUDE/LONGITUDE |
|---|---|
| TOWER A | (X1,Y1) |
| TOWER B | (X2,Y2) |
| TOWER C | (X3,Y3) |
| : | : |

FIG.10

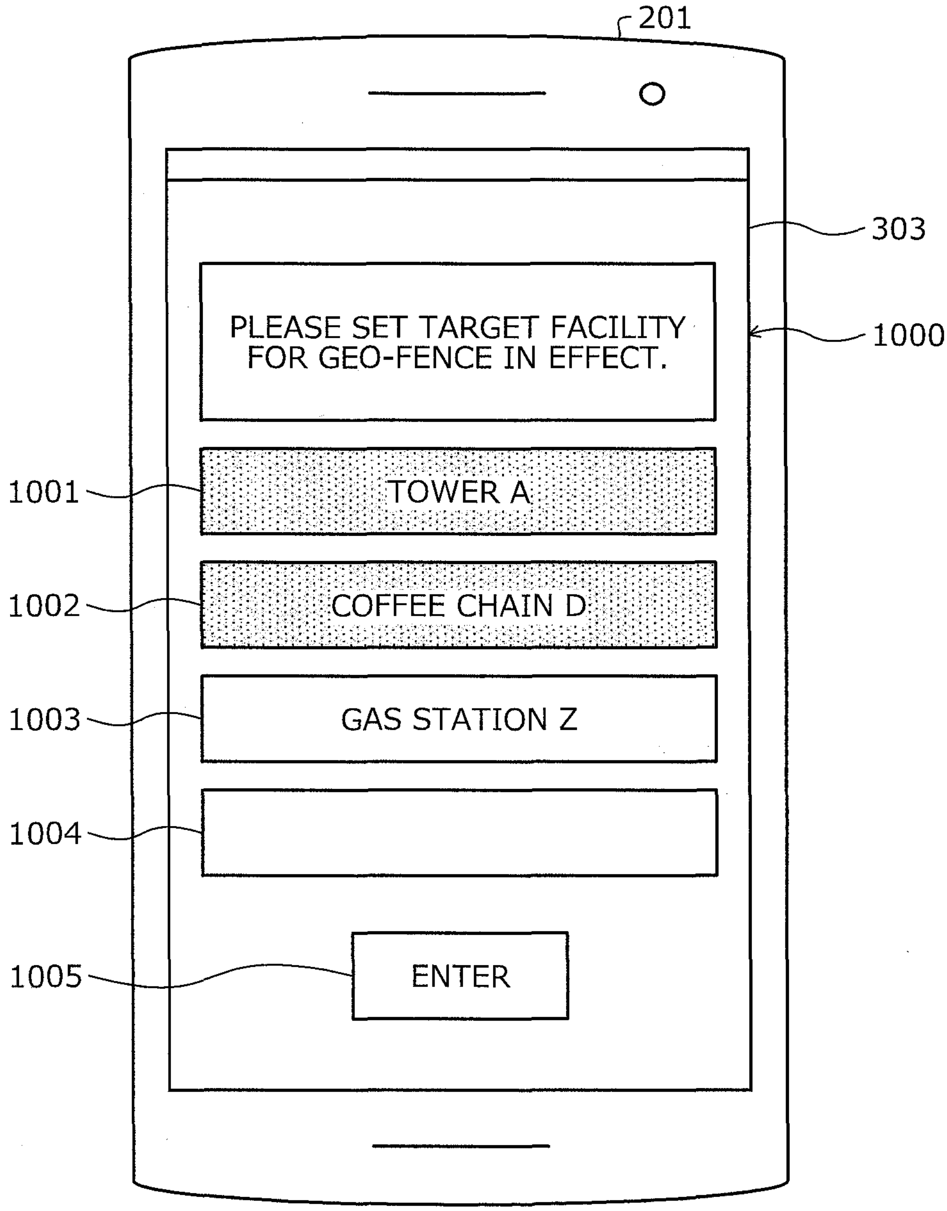
201
303
1000
PLEASE SET TARGET FACILITY FOR GEO-FENCE IN EFFECT.
1001
TOWER A
1002
COFFEE CHAIN D
1003
GAS STATION Z
1004
1005
ENTER

FIG.11

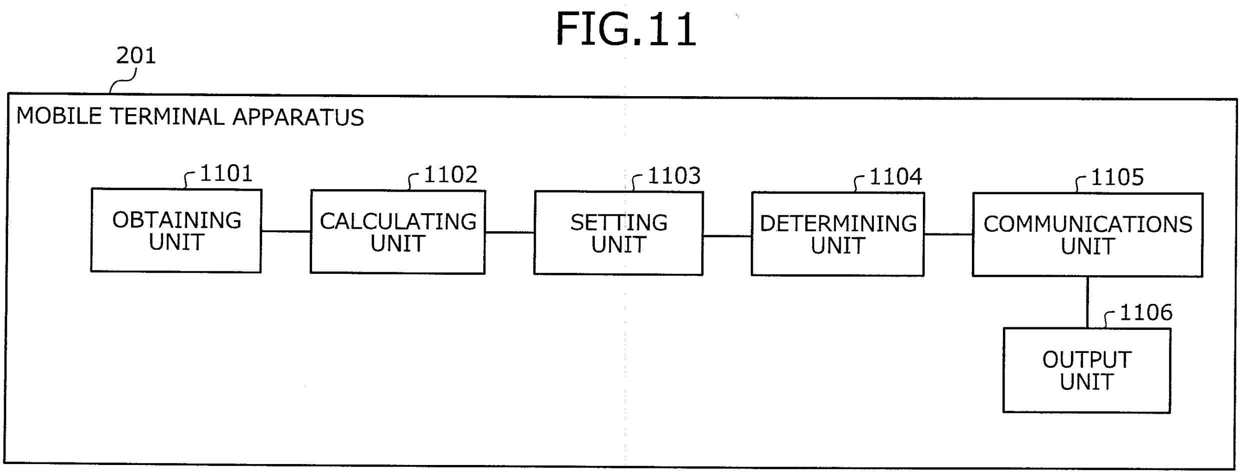
201
MOBILE TERMINAL APPARATUS
1101
OBTAINING UNIT
1102
CALCULATING UNIT
1103
SETTING UNIT
1104
DETERMINING UNIT
1105
COMMUNICATIONS UNIT
1106
OUTPUT UNIT

FIG.12

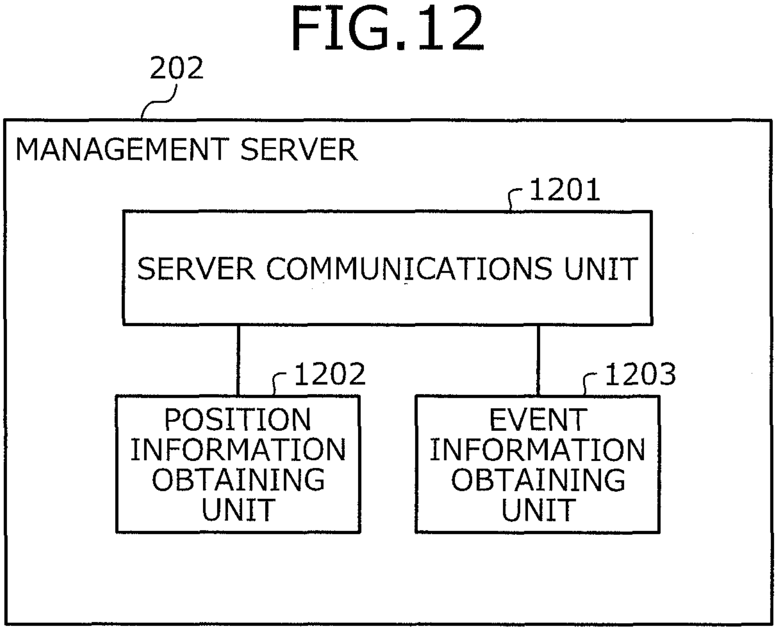
202
MANAGEMENT SERVER
1201
SERVER COMMUNICATIONS UNIT
1202
POSITION INFORMATION OBTAINING UNIT
1203
EVENT INFORMATION OBTAINING UNIT

FIG.13

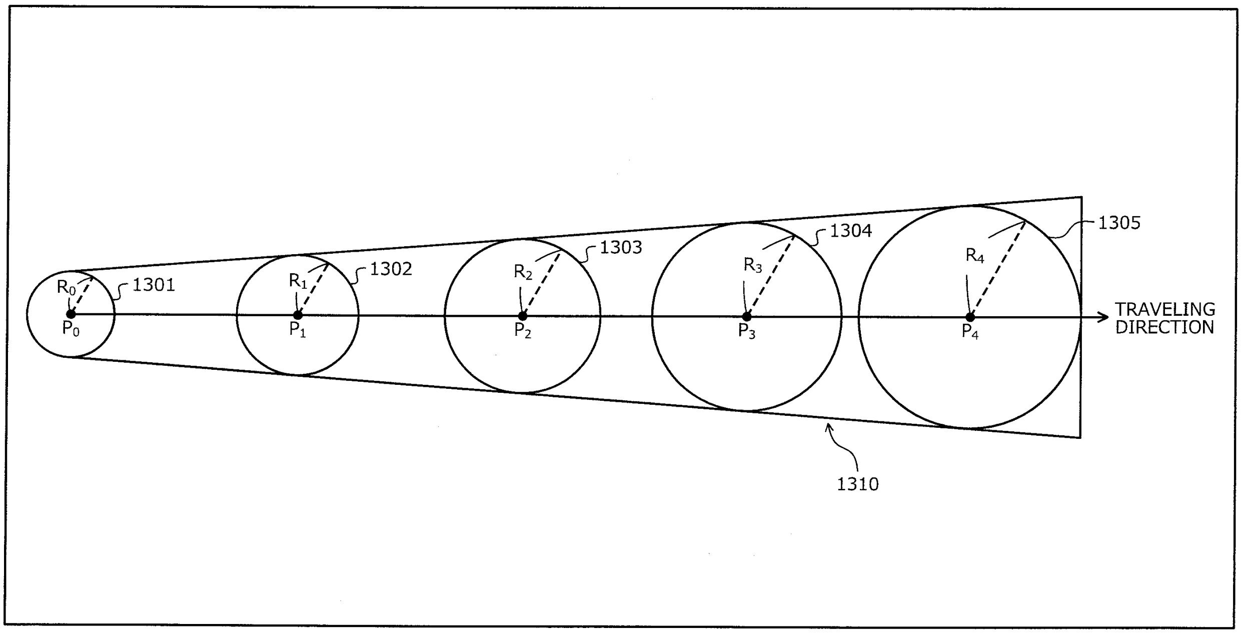
R0
1301
P0
R1
1302
P1
R2
1303
P2
R3
1304
P3
R4
1305
P4
TRAVELING DIRECTION
1310

FIG.14

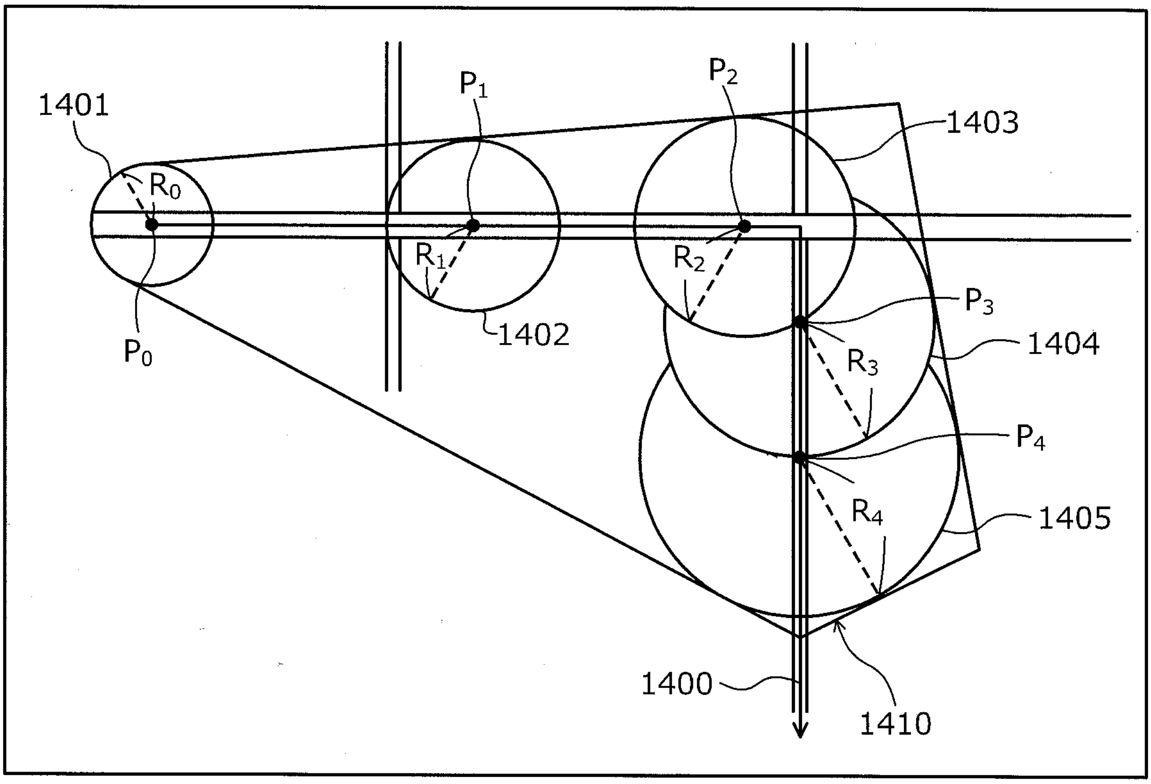

FIG.15

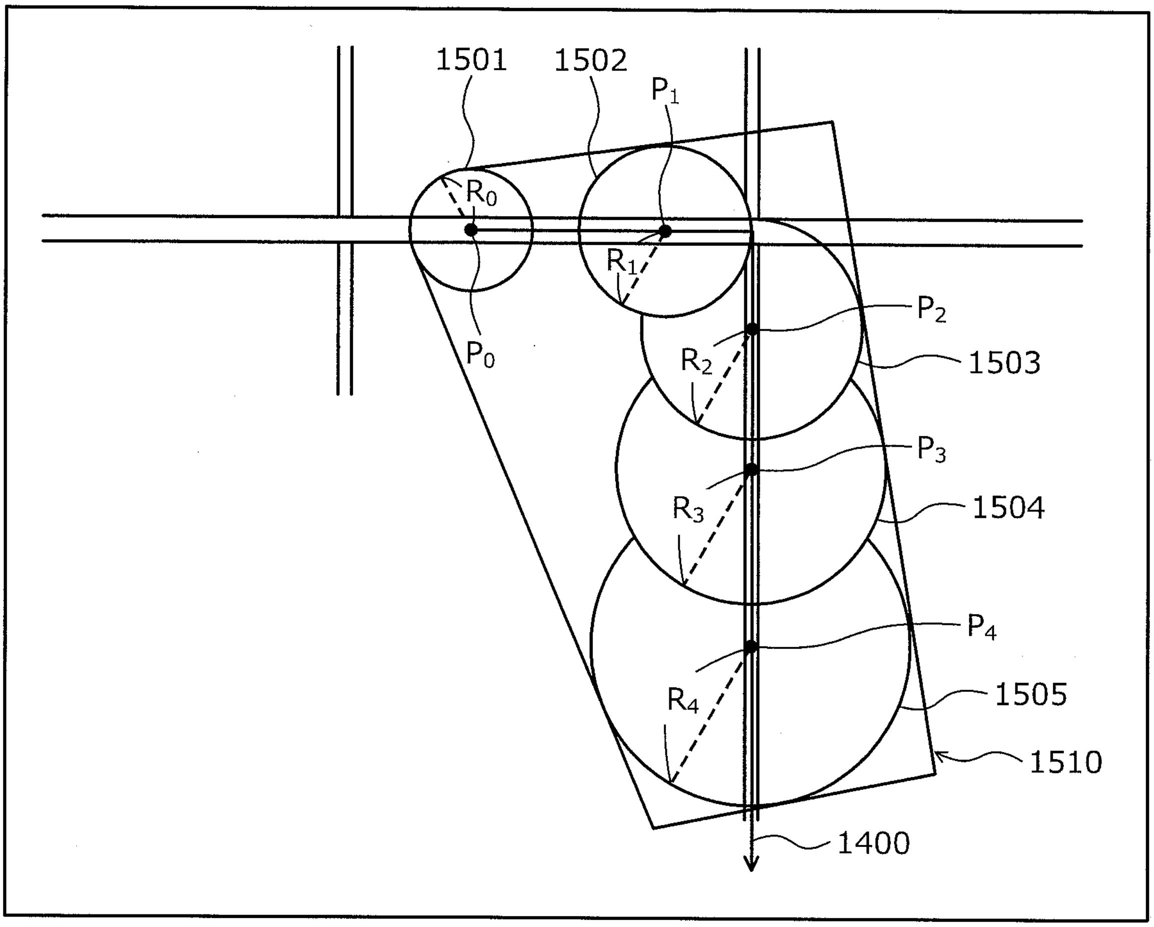

FIG.16

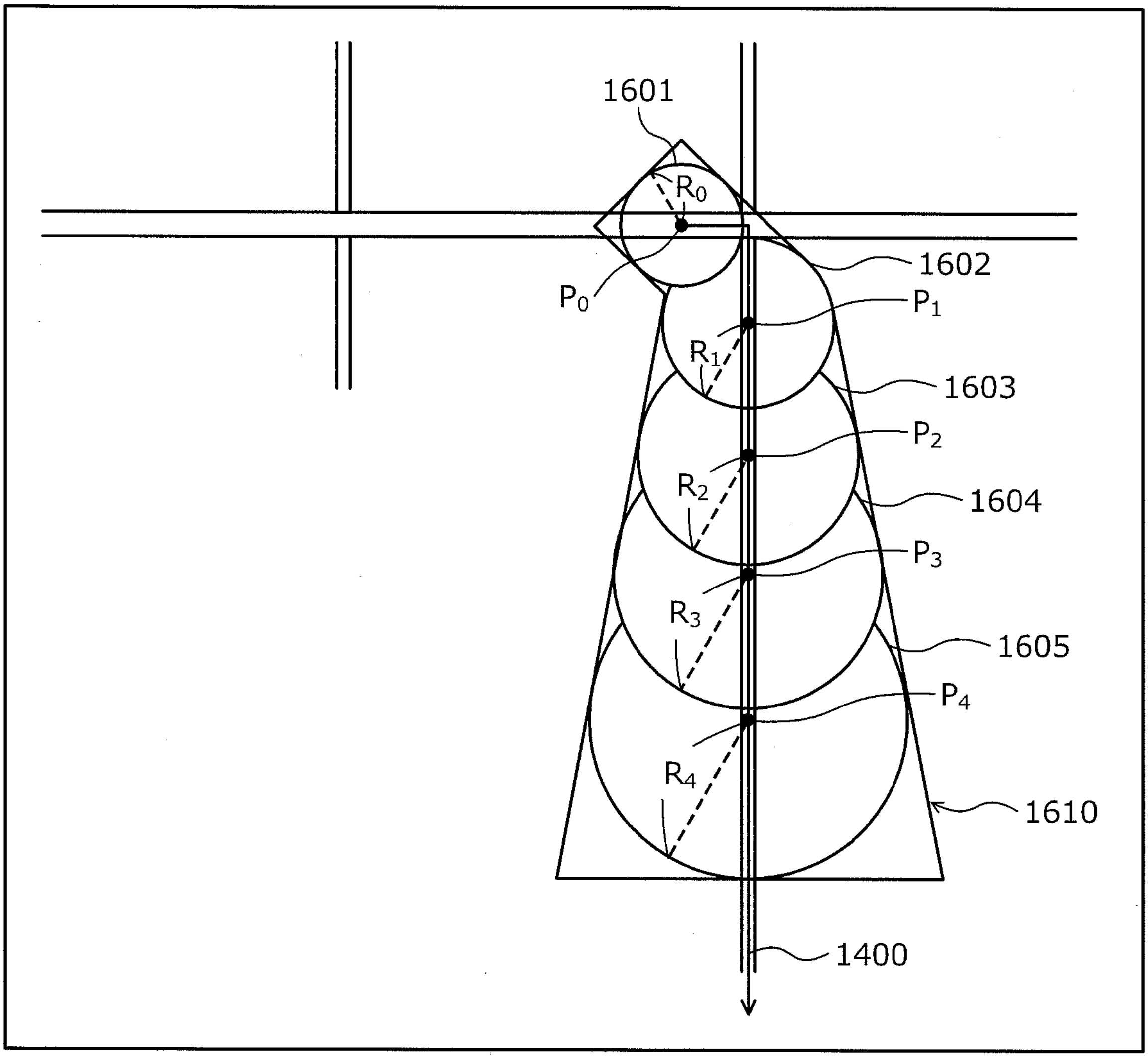

FIG.17

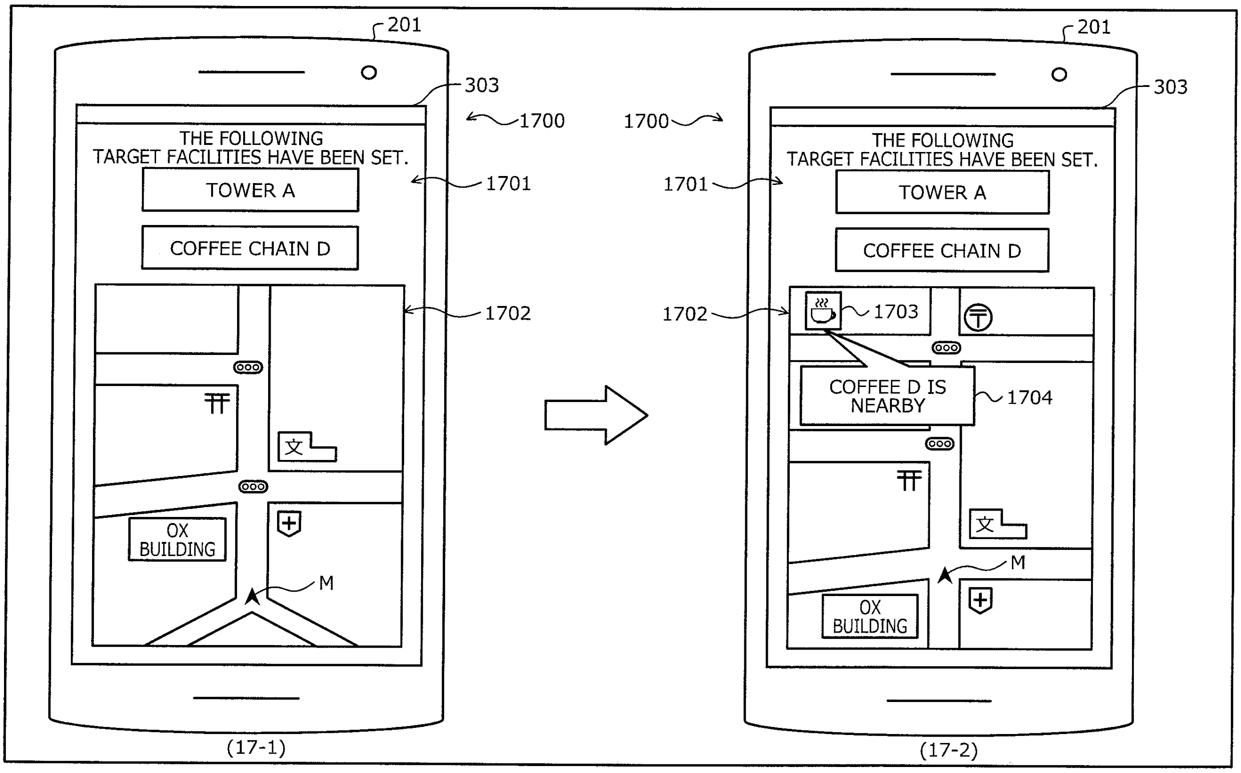
201
303
1700
THE FOLLOWING
TARGET FACILITIES HAVE BEEN SET.
TOWER A
COFFEE CHAIN D
1701
1702
OX
BUILDING
M
(17-1)
201
303
1700
THE FOLLOWING
TARGET FACILITIES HAVE BEEN SET.
TOWER A
COFFEE CHAIN D
1701
1702
1703
COFFEE D IS
NEARBY
1704
OX
BUILDING
M
(17-2)

FIG.18

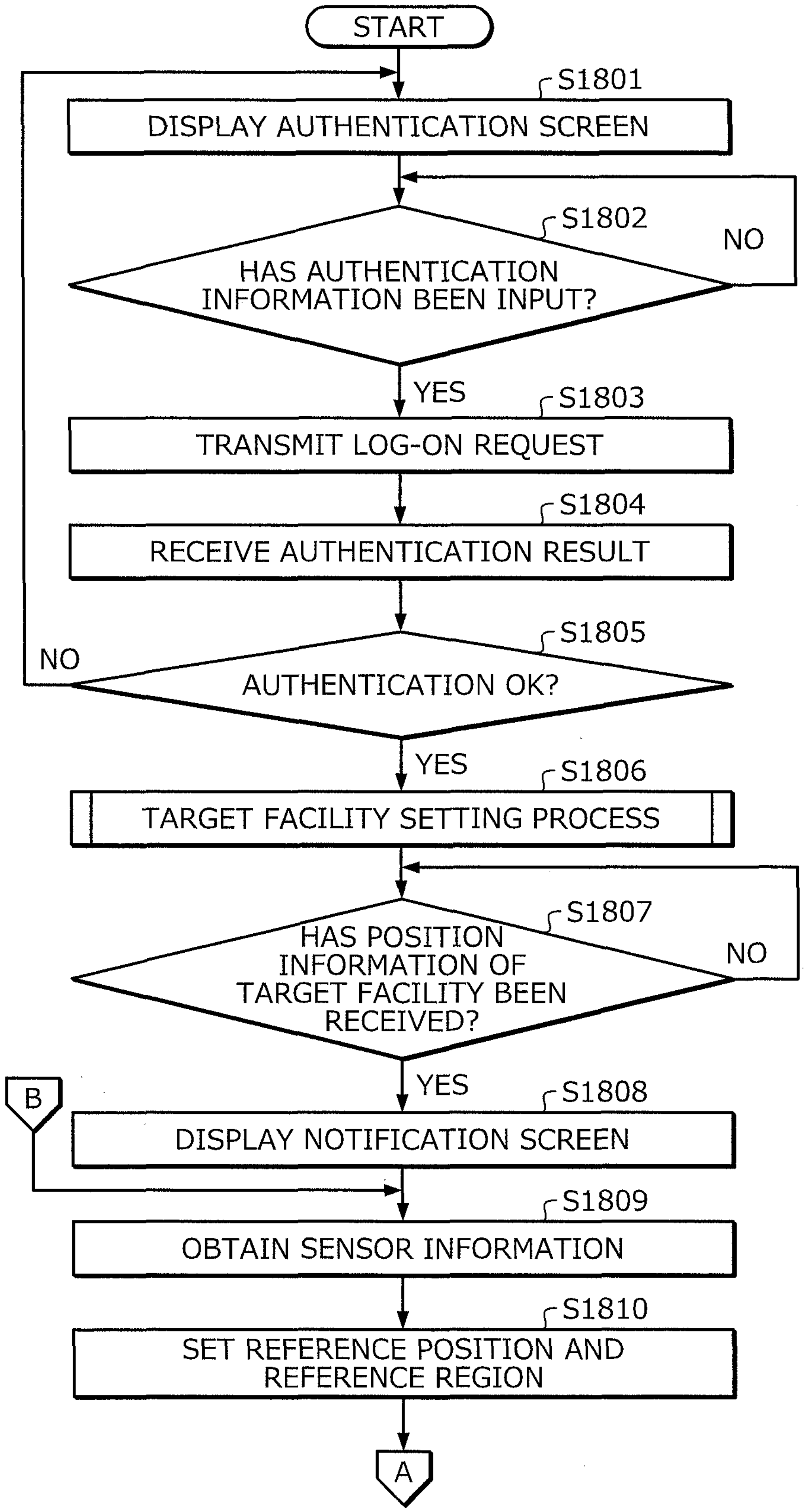
START
S1801
DISPLAY AUTHENTICATION SCREEN
S1802
HAS AUTHENTICATION INFORMATION BEEN INPUT?
NO
YES
S1803
TRANSMIT LOG-ON REQUEST
S1804
RECEIVE AUTHENTICATION RESULT
S1805
AUTHENTICATION OK?
NO
YES
S1806
TARGET FACILITY SETTING PROCESS
S1807
HAS POSITION INFORMATION OF TARGET FACILITY BEEN RECEIVED?
NO
YES
S1808
B
DISPLAY NOTIFICATION SCREEN
S1809
OBTAIN SENSOR INFORMATION
S1810
SET REFERENCE POSITION AND REFERENCE REGION
A

FIG.19

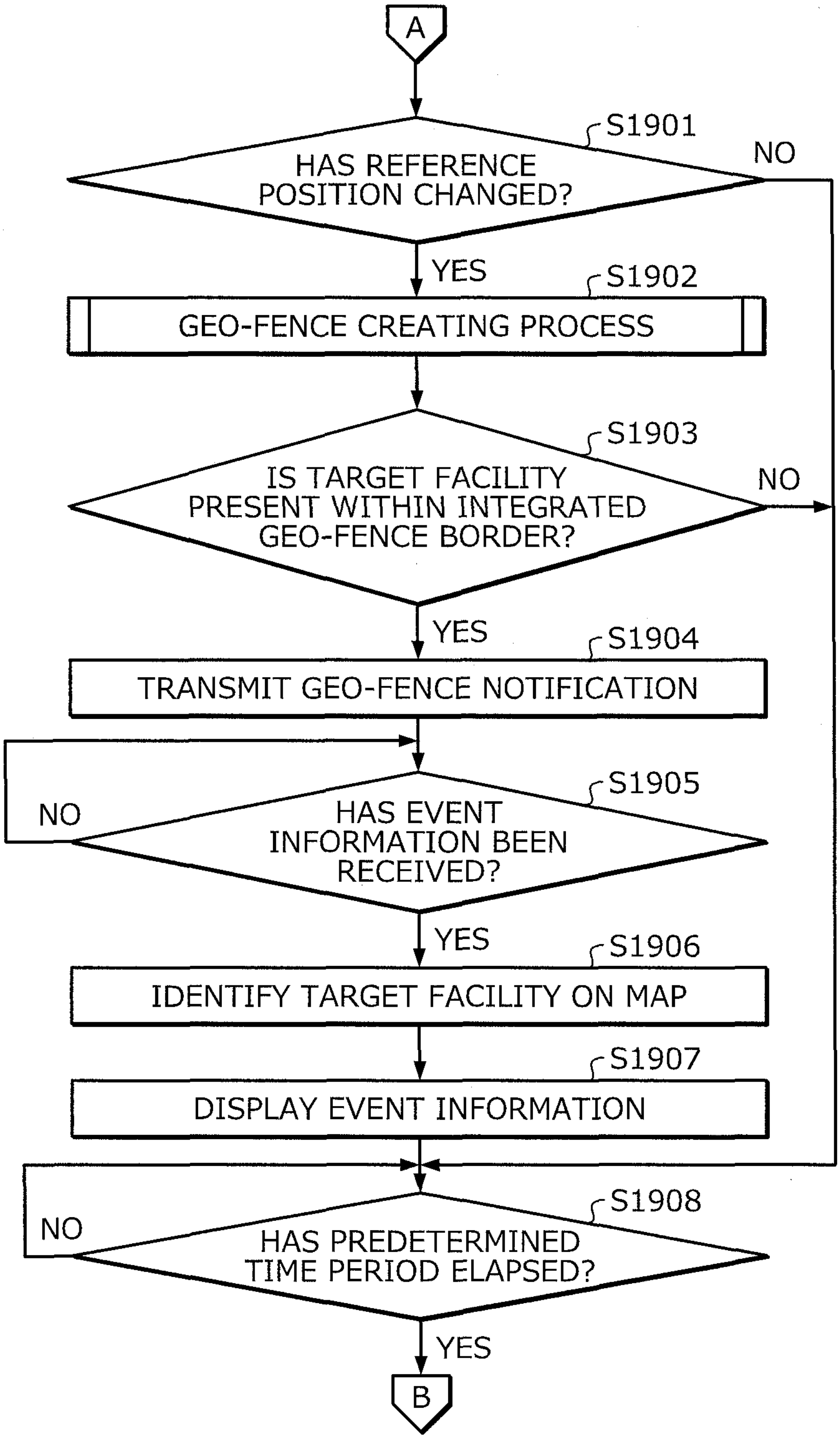
A
S1901
HAS REFERENCE POSITION CHANGED?
NO
YES
S1902
GEO-FENCE CREATING PROCESS
S1903
IS TARGET FACILITY PRESENT WITHIN INTEGRATED GEO-FENCE BORDER?
NO
YES
S1904
TRANSMIT GEO-FENCE NOTIFICATION
S1905
HAS EVENT INFORMATION BEEN RECEIVED?
NO
YES
S1906
IDENTIFY TARGET FACILITY ON MAP
S1907
DISPLAY EVENT INFORMATION
S1908
HAS PREDETERMINED TIME PERIOD ELAPSED?
NO
YES
B

FIG.20

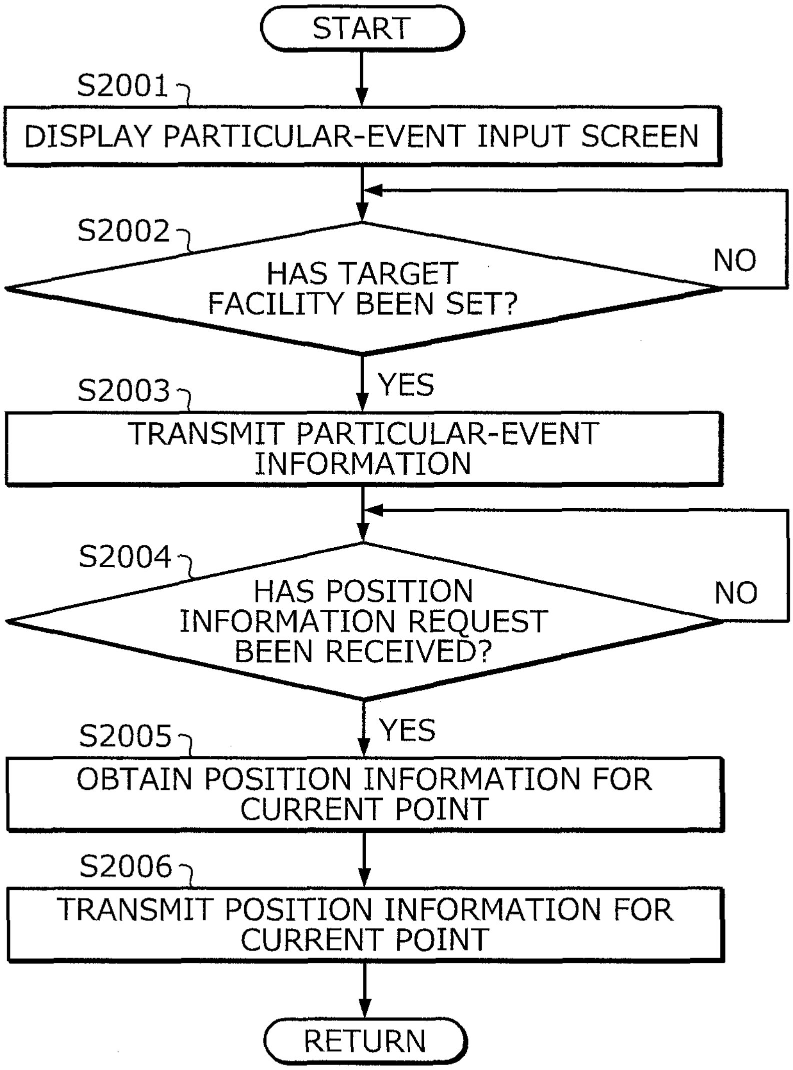
START
S2001
DISPLAY PARTICULAR-EVENT INPUT SCREEN
S2002
HAS TARGET FACILITY BEEN SET?
NO
YES
S2003
TRANSMIT PARTICULAR-EVENT INFORMATION
S2004
HAS POSITION INFORMATION REQUEST BEEN RECEIVED?
NO
YES
S2005
OBTAIN POSITION INFORMATION FOR CURRENT POINT
S2006
TRANSMIT POSITION INFORMATION FOR CURRENT POINT
RETURN

FIG.21

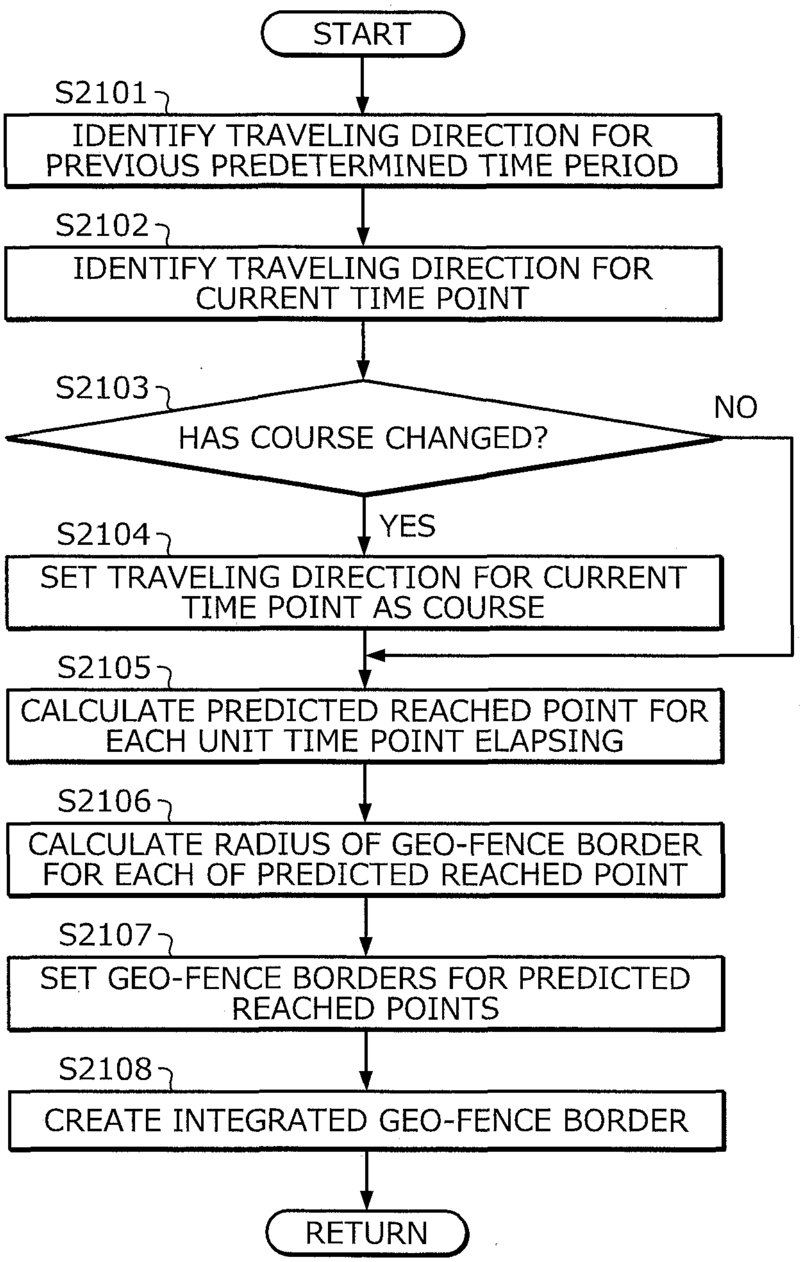
START
S2101
IDENTIFY TRAVELING DIRECTION FOR PREVIOUS PREDETERMINED TIME PERIOD
S2102
IDENTIFY TRAVELING DIRECTION FOR CURRENT TIME POINT
S2103
HAS COURSE CHANGED?
NO
YES
S2104
SET TRAVELING DIRECTION FOR CURRENT TIME POINT AS COURSE
S2105
CALCULATE PREDICTED REACHED POINT FOR EACH UNIT TIME POINT ELAPSING
S2106
CALCULATE RADIUS OF GEO-FENCE BORDER FOR EACH OF PREDICTED REACHED POINT
S2107
SET GEO-FENCE BORDERS FOR PREDICTED REACHED POINTS
S2108
CREATE INTEGRATED GEO-FENCE BORDER
RETURN

FIG.22

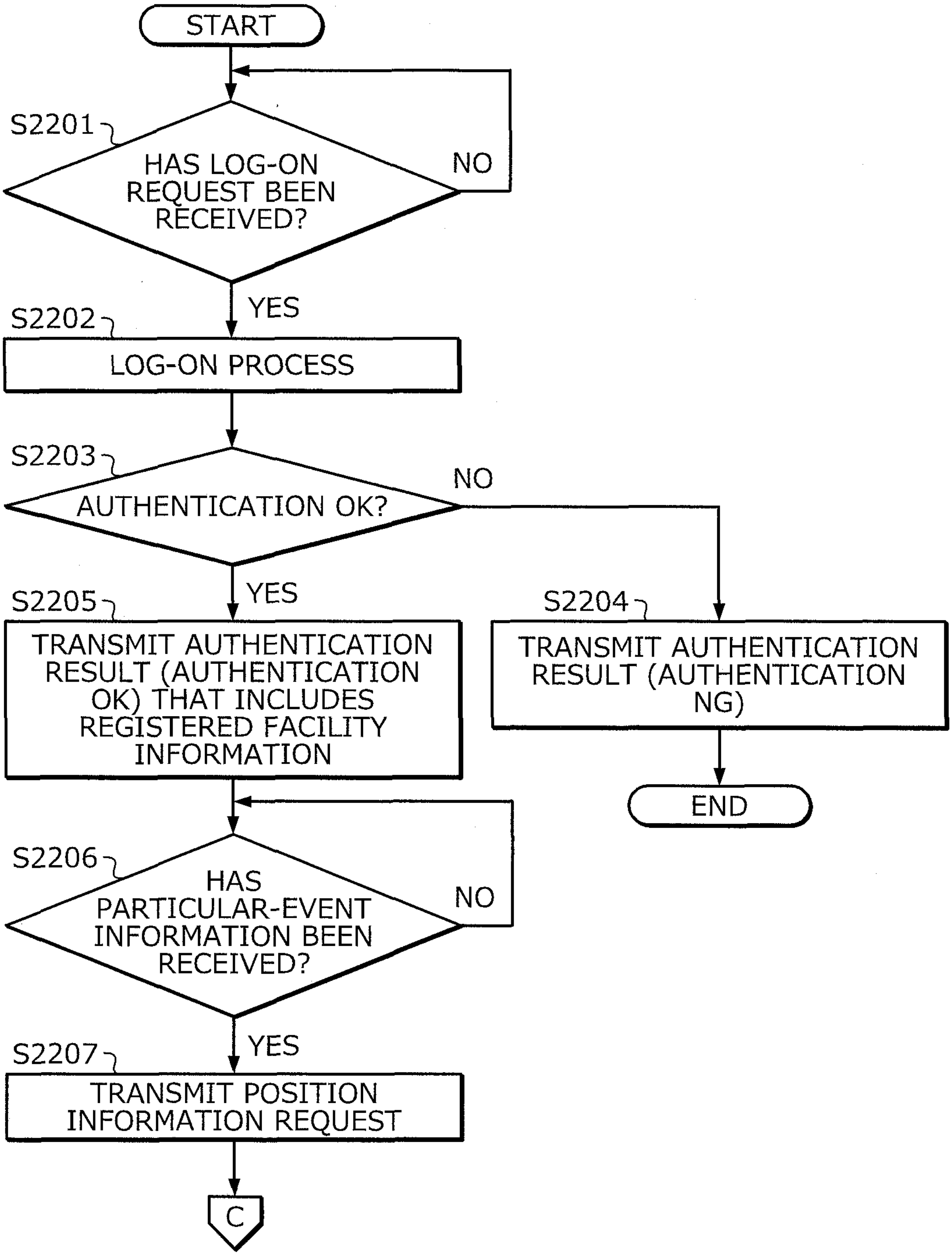
START
S2201
HAS LOG-ON REQUEST BEEN RECEIVED?
NO
YES
S2202
LOG-ON PROCESS
S2203
AUTHENTICATION OK?
NO
YES
S2205
TRANSMIT AUTHENTICATION RESULT (AUTHENTICATION OK) THAT INCLUDES REGISTERED FACILITY INFORMATION
S2204
TRANSMIT AUTHENTICATION RESULT (AUTHENTICATION NG)
END
S2206
HAS PARTICULAR-EVENT INFORMATION BEEN RECEIVED?
NO
YES
S2207
TRANSMIT POSITION INFORMATION REQUEST
C

FIG.23

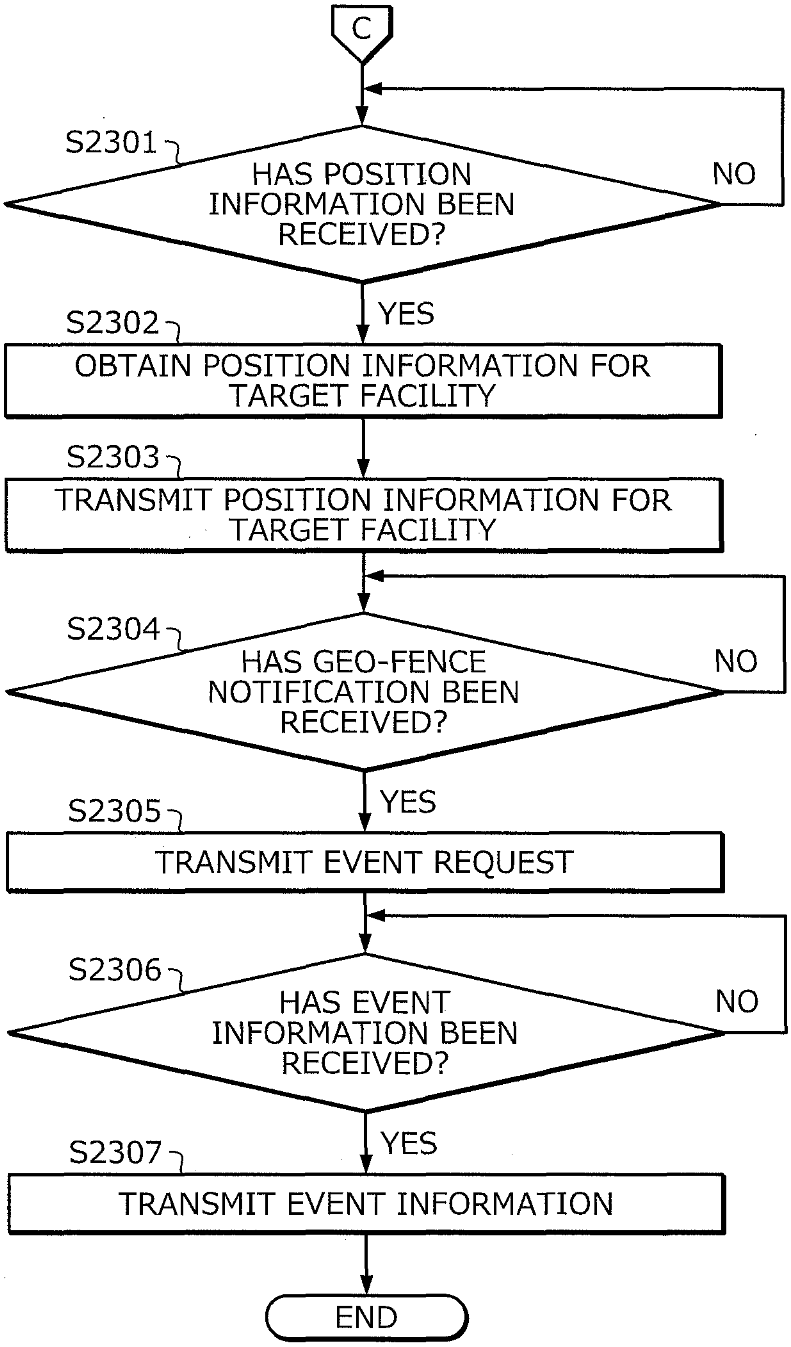
C
S2301
HAS POSITION INFORMATION BEEN RECEIVED?
NO
YES
S2302
OBTAIN POSITION INFORMATION FOR TARGET FACILITY
S2303
TRANSMIT POSITION INFORMATION FOR TARGET FACILITY
S2304
HAS GEO-FENCE NOTIFICATION BEEN RECEIVED?
NO
YES
S2305
TRANSMIT EVENT REQUEST
S2306
HAS EVENT INFORMATION BEEN RECEIVED?
NO
YES
S2307
TRANSMIT EVENT INFORMATION
END

FIG.24

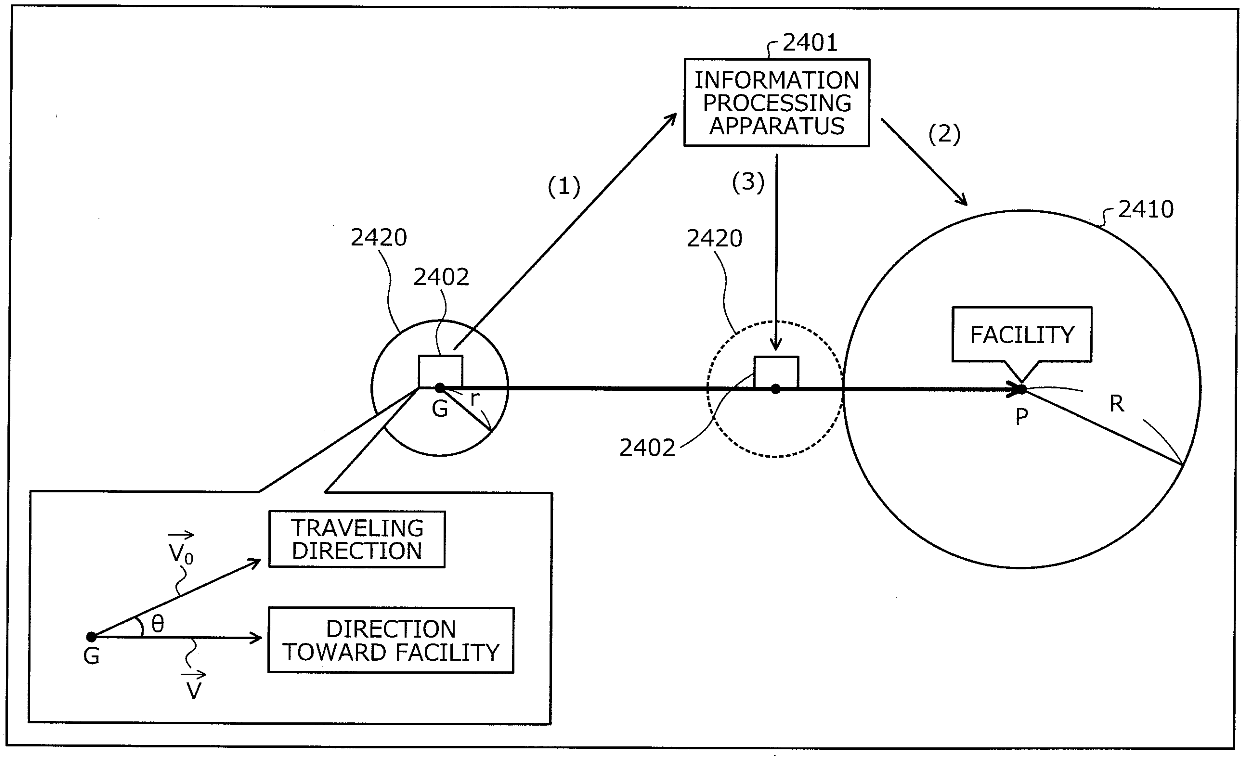
2401
INFORMATION PROCESSING APPARATUS
(1)
(2)
(3)
2410
2420
2402
2420
FACILITY
G
r
P
R
2402
TRAVELING DIRECTION
$\vec{V_0}$
θ
G
DIRECTION TOWARD FACILITY
$\vec{V}$

FIG.25

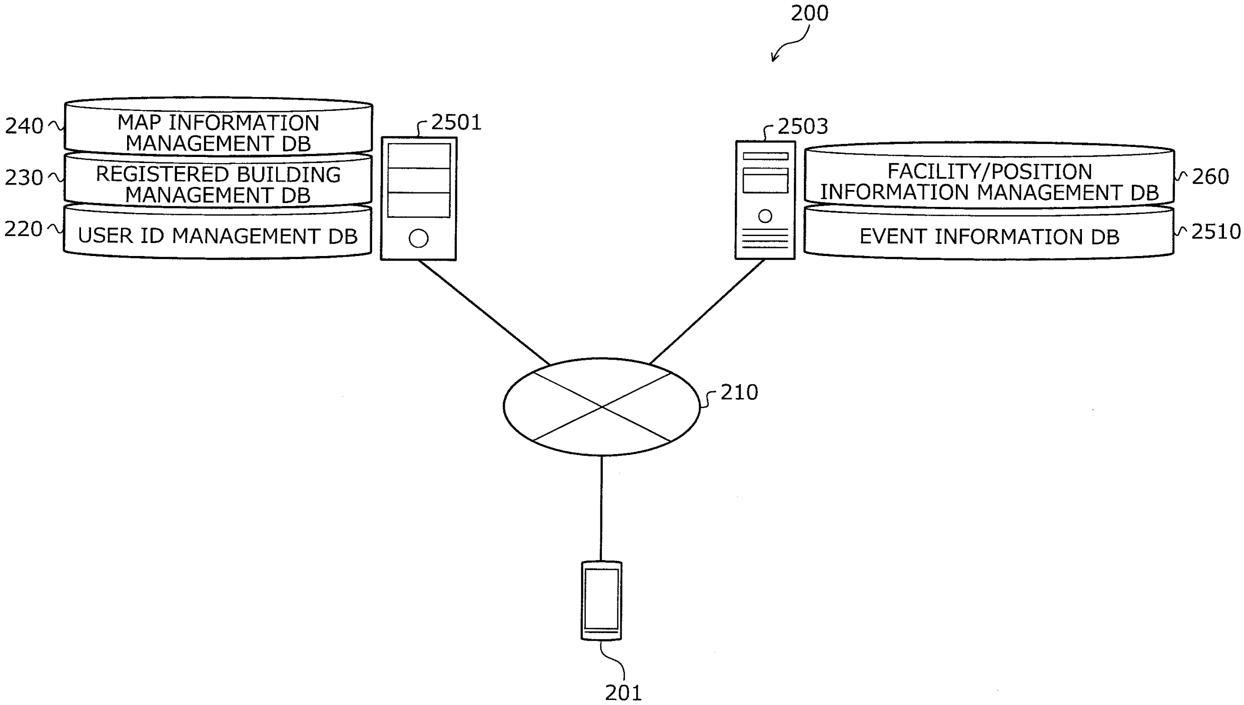
200
240
MAP INFORMATION MANAGEMENT DB
230
REGISTERED BUILDING MANAGEMENT DB
220
USER ID MANAGEMENT DB
2501
2503
FACILITY/POSITION INFORMATION MANAGEMENT DB
260
EVENT INFORMATION DB
2510
210
201

FIG.26

EVENT INFORMATION DB 2510

2601

| FACILITY | INTERSECTING RATE [%] | MESSAGE |
|---|---|---|
| COFFEE CHAIN D | 10-20 | COFFEE D IS NEARBY |
| | 21-80 | COLUMBIAN COFFEE IS ON SPECIAL OFFER |
| | 81-100 | THANK YOU FOR COMING TO COFFEE D |
| ... | ... | ... |

FIG.27

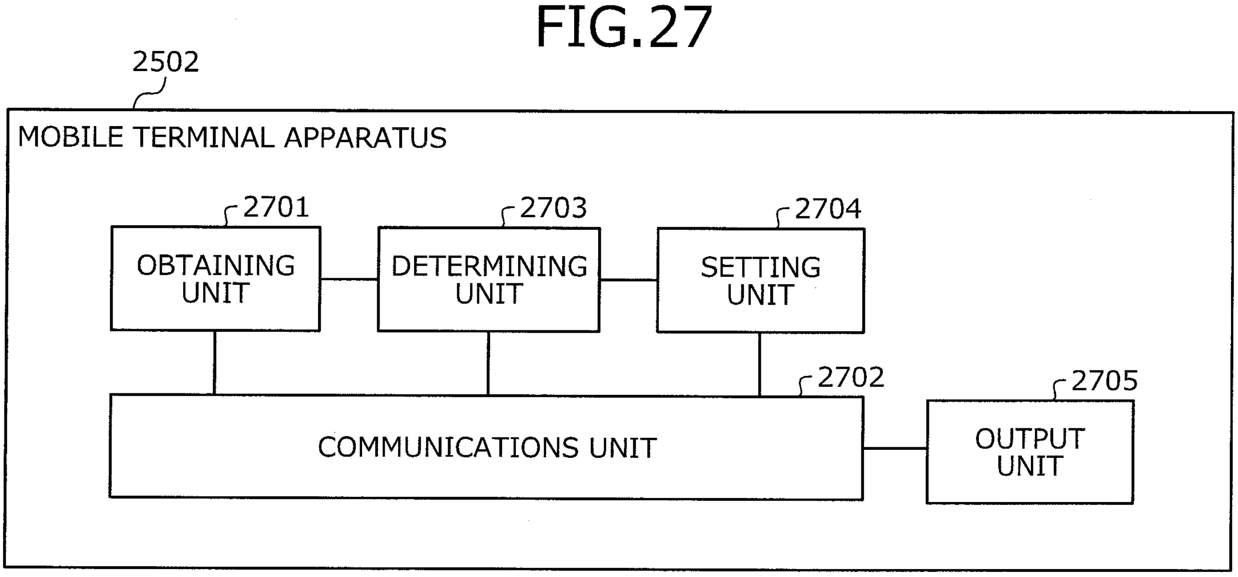
2502
MOBILE TERMINAL APPARATUS
2701
OBTAINING UNIT
2703
DETERMINING UNIT
2704
SETTING UNIT
2702
COMMUNICATIONS UNIT
2705
OUTPUT UNIT

FIG.28

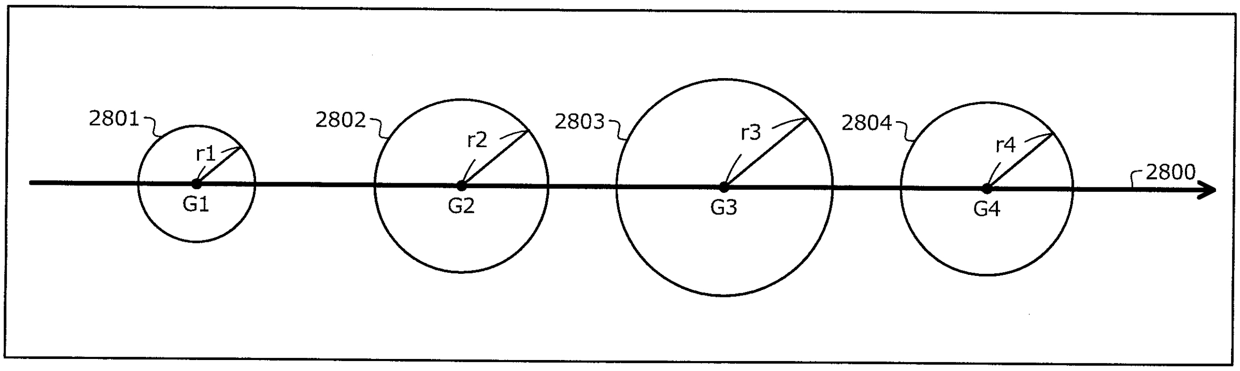

FIG.29

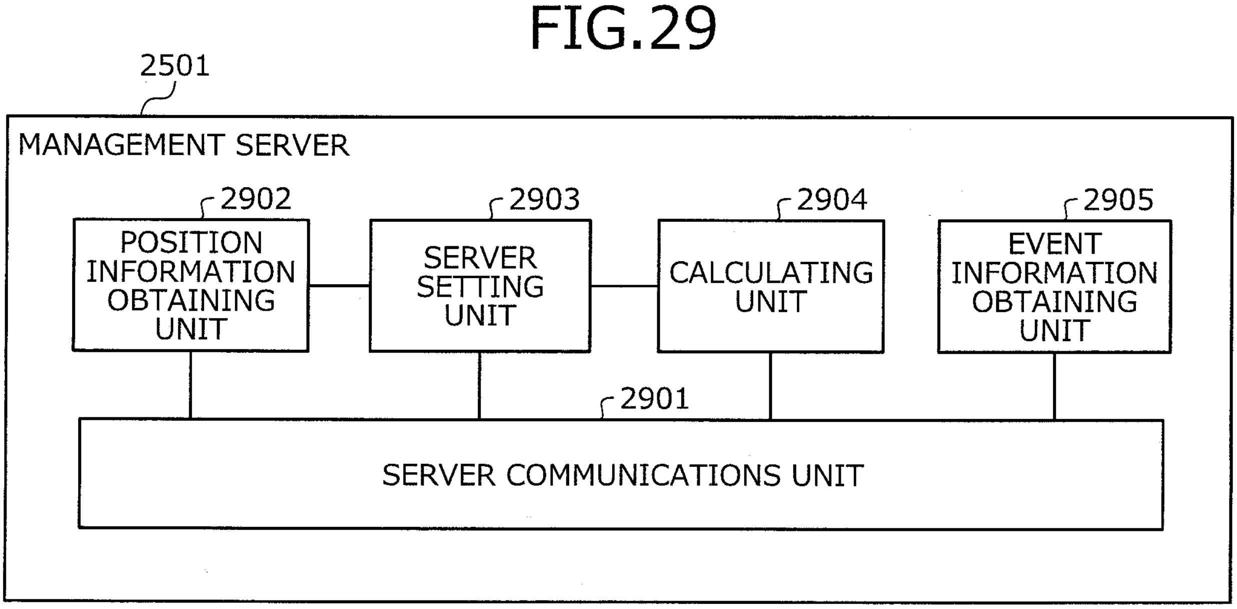
2501
MANAGEMENT SERVER
2902
POSITION INFORMATION OBTAINING UNIT
2903
SERVER SETTING UNIT
2904
CALCULATING UNIT
2905
EVENT INFORMATION OBTAINING UNIT
2901
SERVER COMMUNICATIONS UNIT

FIG.30

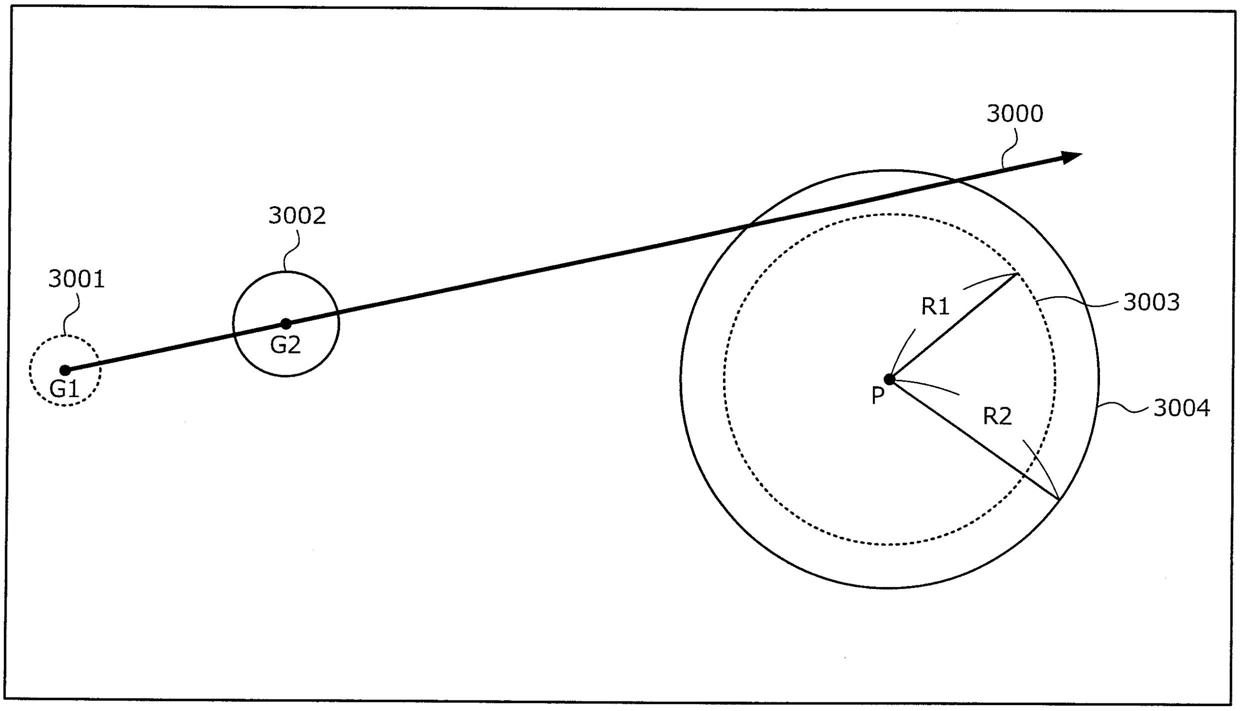

FIG.31

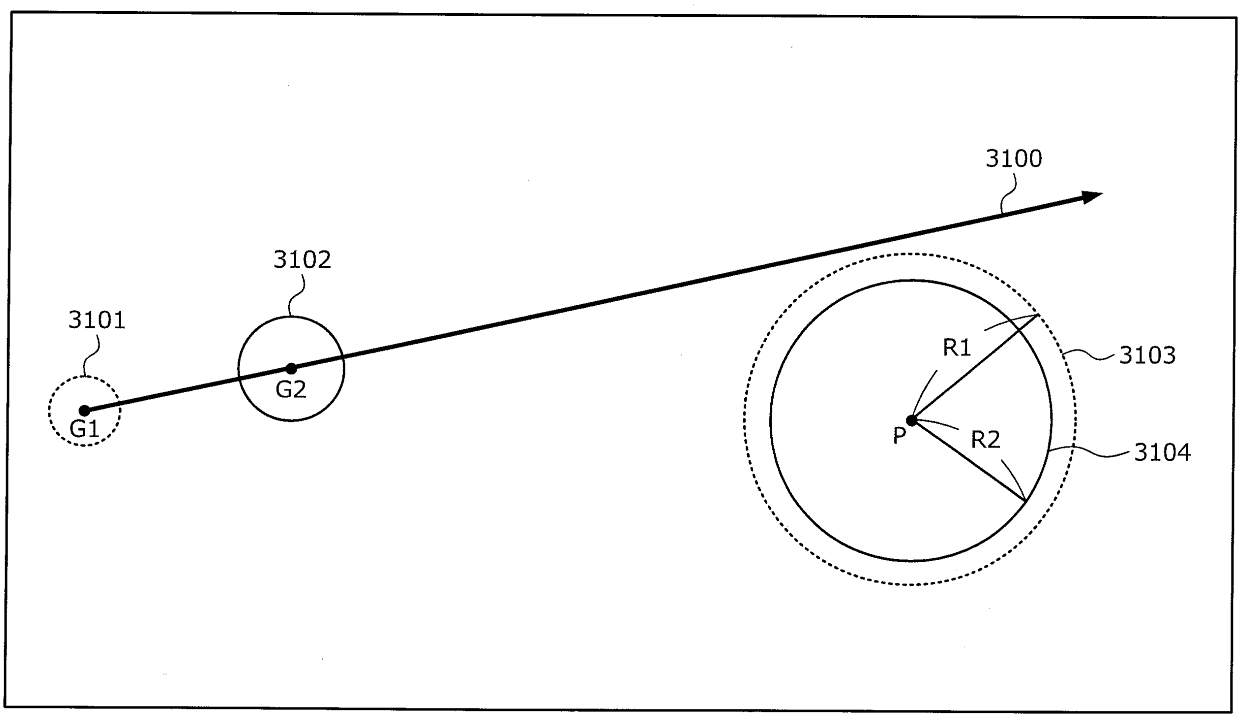

FIG.32

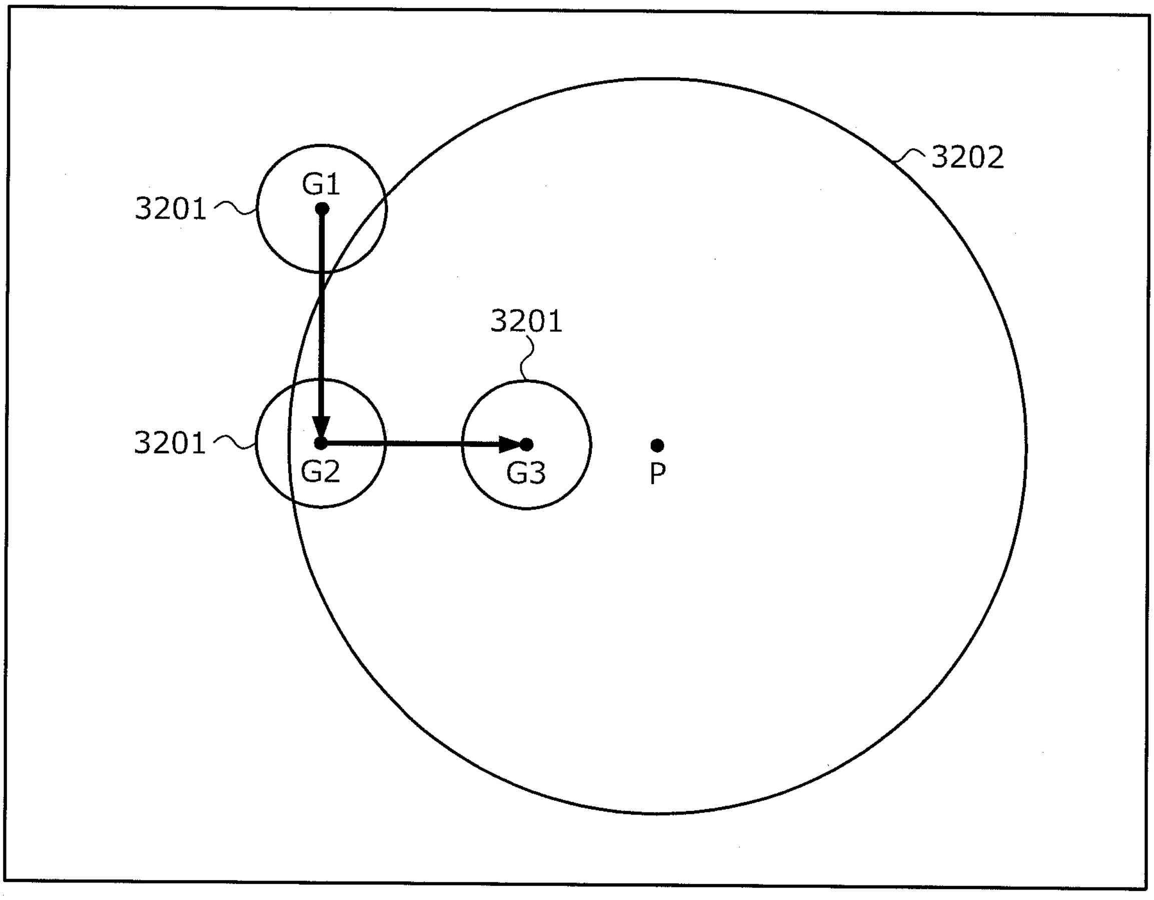

FIG.33

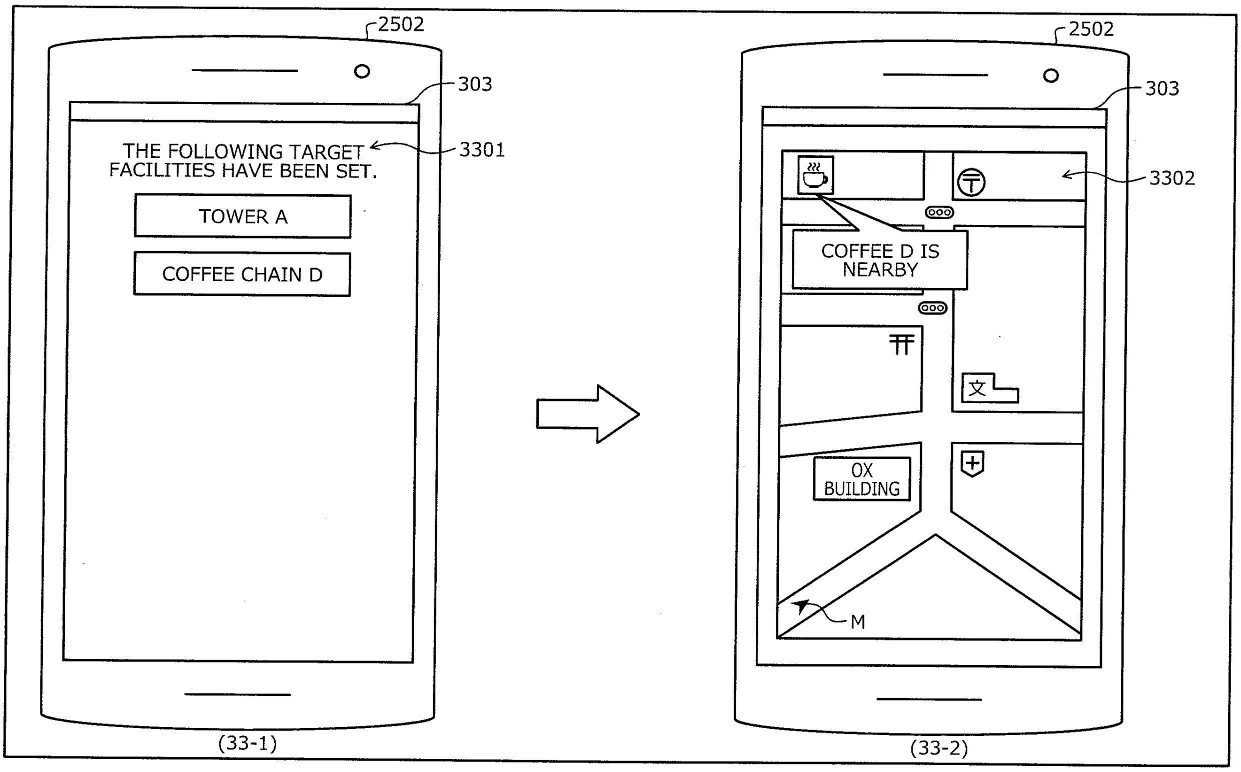
2502
303
THE FOLLOWING TARGET FACILITIES HAVE BEEN SET.
3301
TOWER A
COFFEE CHAIN D
(33-1)
2502
303
3302
COFFEE D IS NEARBY
OX BUILDING
M
(33-2)

FIG.34

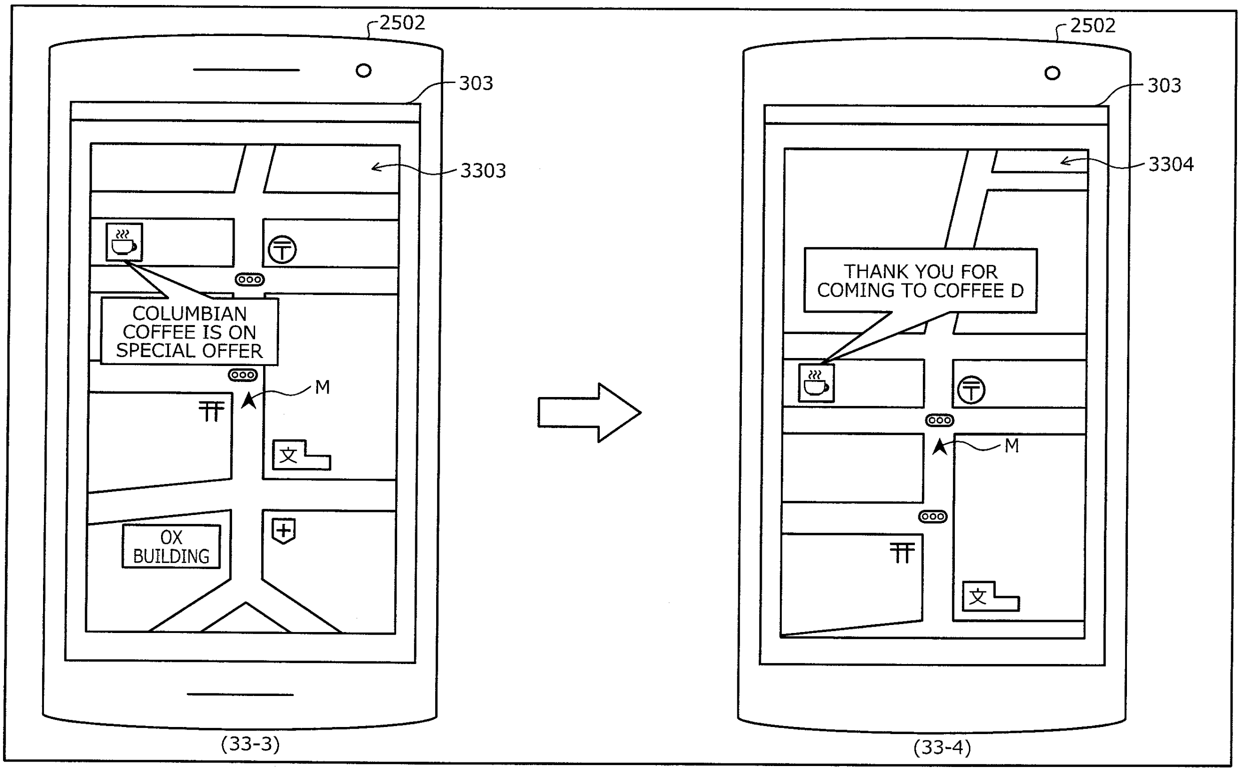
2502
303
3303
COLUMBIAN COFFEE IS ON SPECIAL OFFER
M
OX BUILDING
(33-3)
2502
303
3304
THANK YOU FOR COMING TO COFFEE D
M
(33-4)

FIG.35

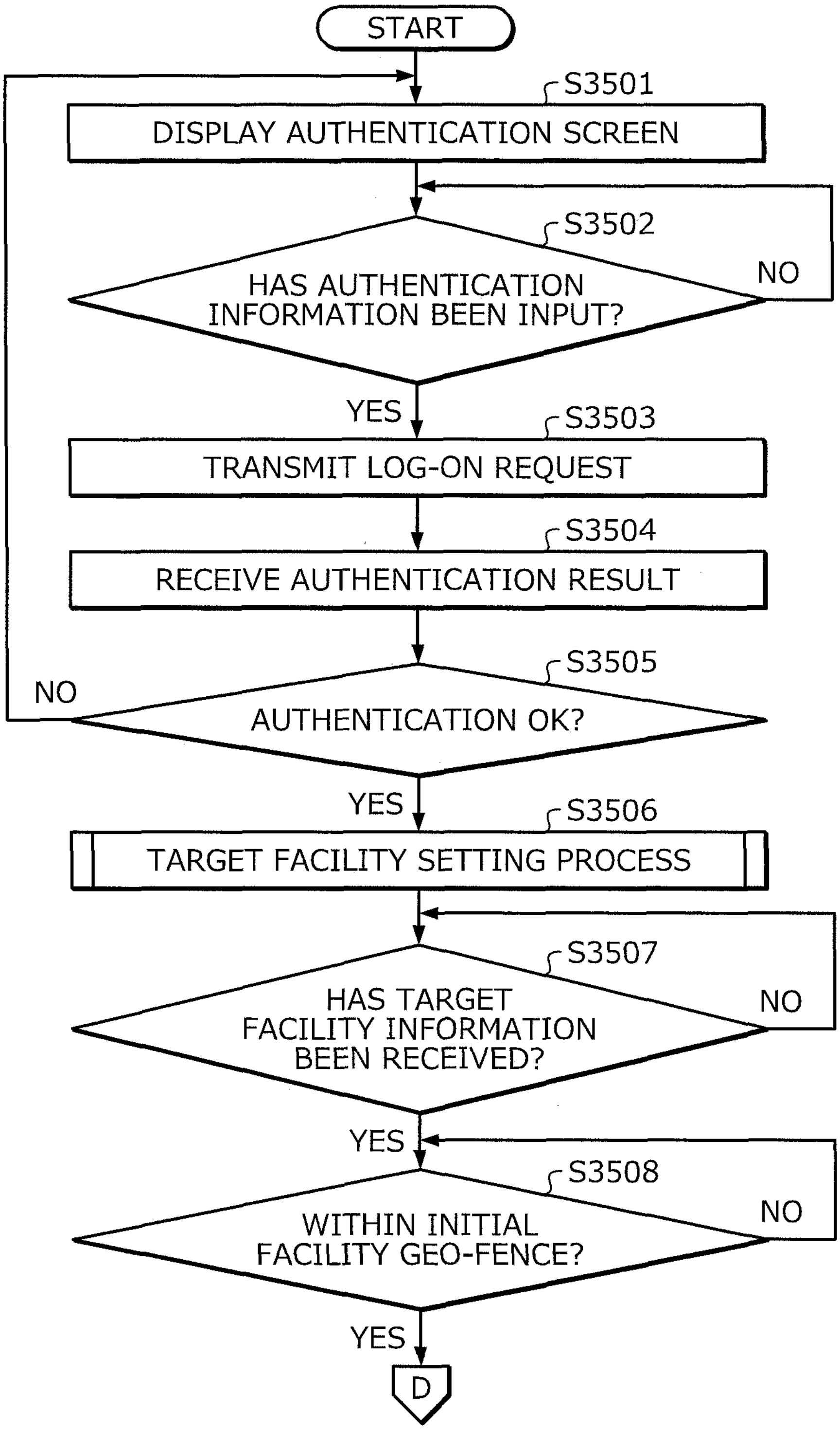
START
S3501
DISPLAY AUTHENTICATION SCREEN
S3502
HAS AUTHENTICATION INFORMATION BEEN INPUT?
NO
YES
S3503
TRANSMIT LOG-ON REQUEST
S3504
RECEIVE AUTHENTICATION RESULT
S3505
AUTHENTICATION OK?
NO
YES
S3506
TARGET FACILITY SETTING PROCESS
S3507
HAS TARGET FACILITY INFORMATION BEEN RECEIVED?
NO
YES
S3508
WITHIN INITIAL FACILITY GEO-FENCE?
NO
YES
D

FIG.36

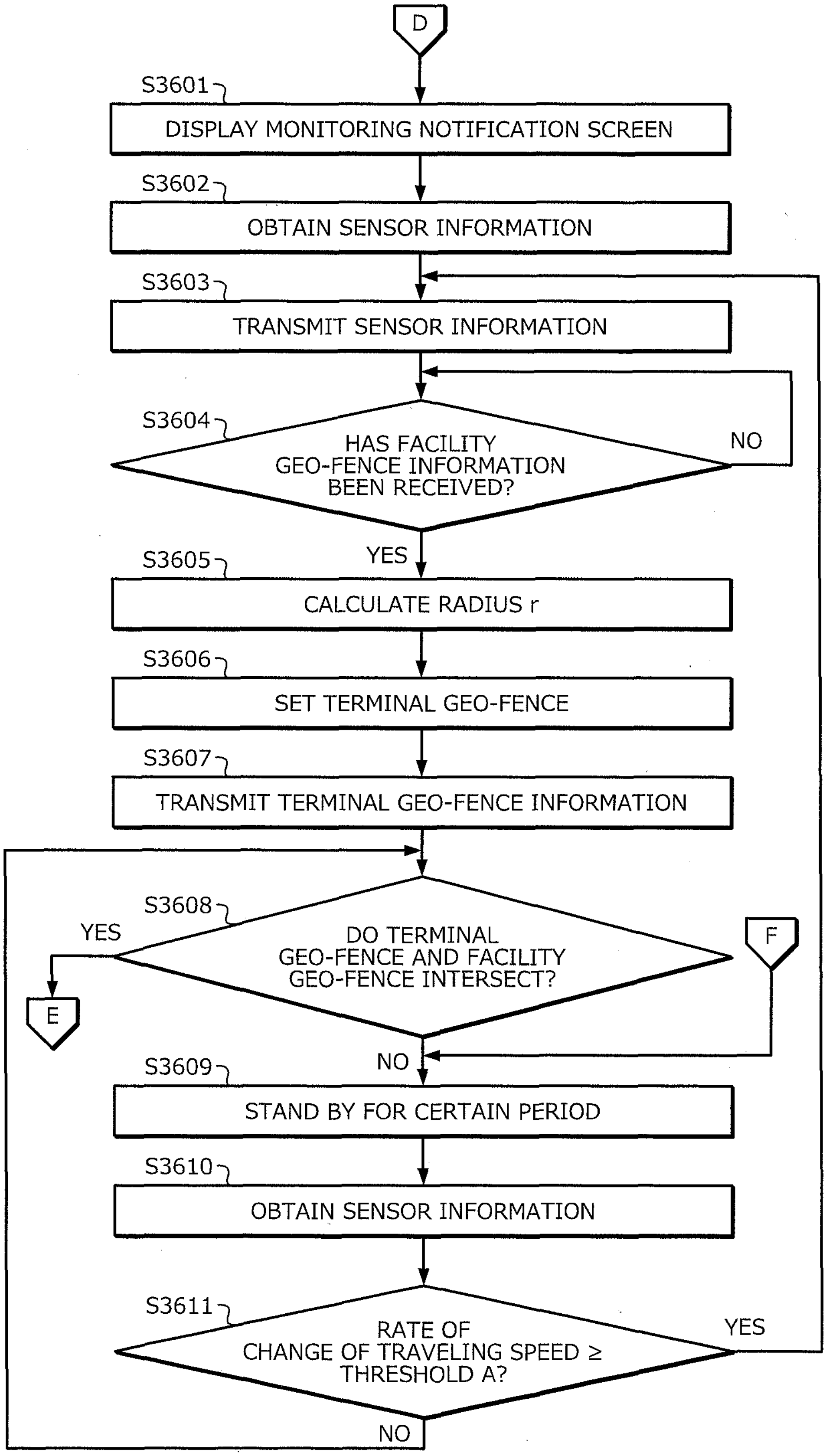
D
S3601
DISPLAY MONITORING NOTIFICATION SCREEN
S3602
OBTAIN SENSOR INFORMATION
S3603
TRANSMIT SENSOR INFORMATION
S3604
HAS FACILITY GEO-FENCE INFORMATION BEEN RECEIVED?
NO
YES
S3605
CALCULATE RADIUS r
S3606
SET TERMINAL GEO-FENCE
S3607
TRANSMIT TERMINAL GEO-FENCE INFORMATION
S3608
DO TERMINAL GEO-FENCE AND FACILITY GEO-FENCE INTERSECT?
YES
E
F
NO
S3609
STAND BY FOR CERTAIN PERIOD
S3610
OBTAIN SENSOR INFORMATION
S3611
RATE OF CHANGE OF TRAVELING SPEED ≥ THRESHOLD A?
YES
NO

FIG.37

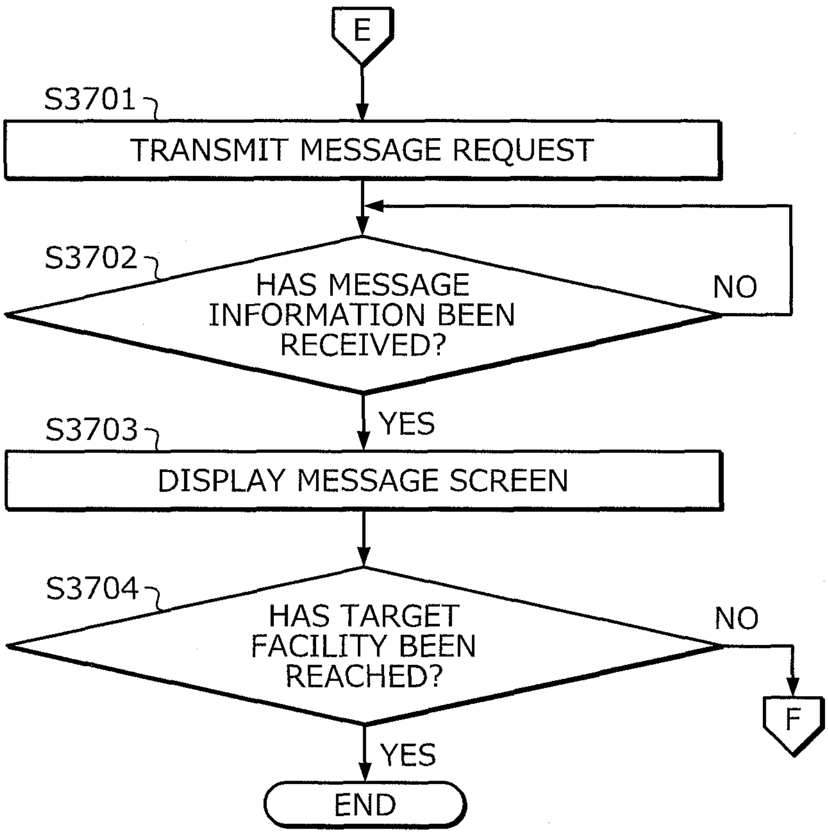
E
S3701
TRANSMIT MESSAGE REQUEST
S3702
HAS MESSAGE INFORMATION BEEN RECEIVED?
NO
YES
S3703
DISPLAY MESSAGE SCREEN
S3704
HAS TARGET FACILITY BEEN REACHED?
NO
F
YES
END

FIG.38

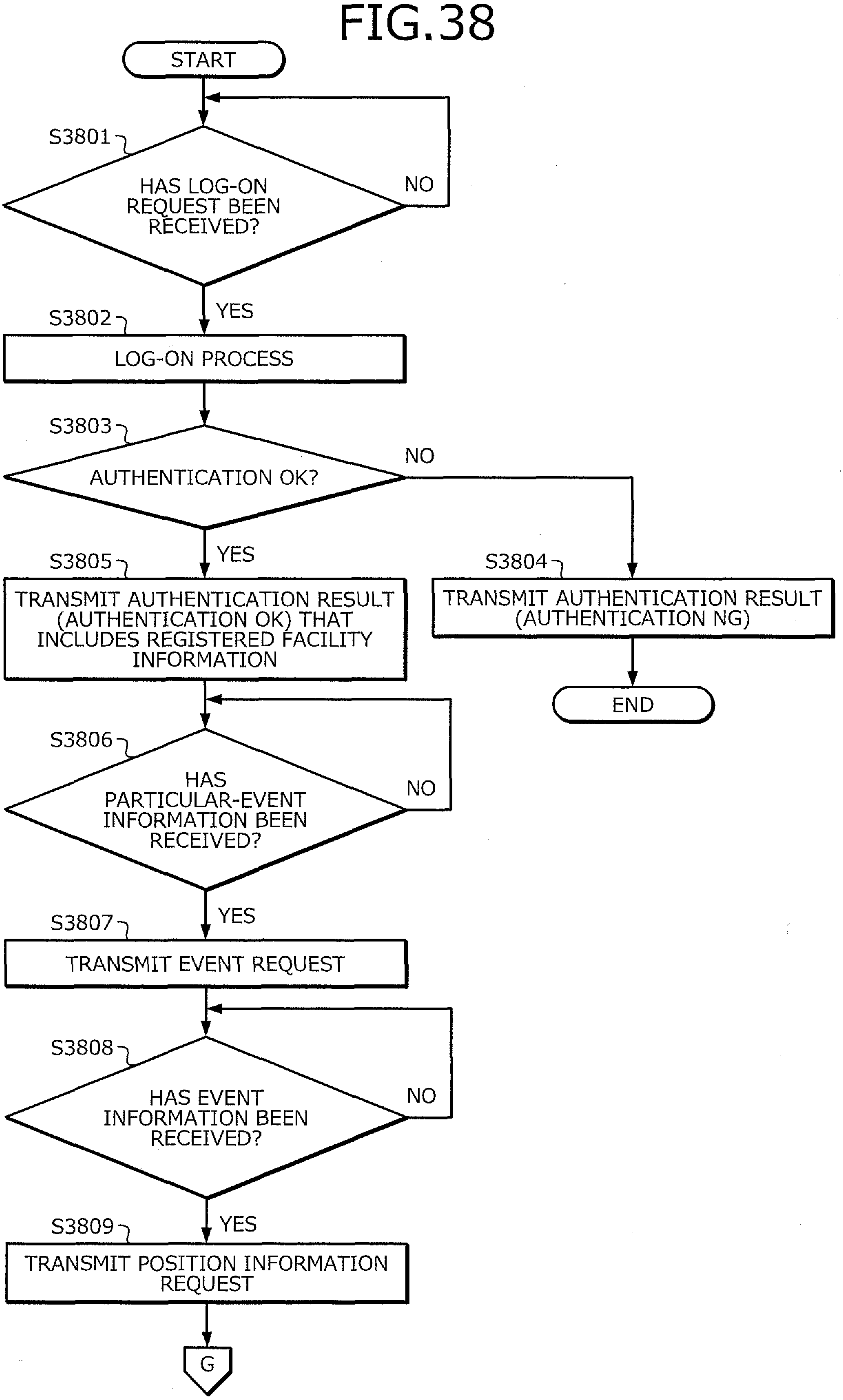
START
S3801
HAS LOG-ON REQUEST BEEN RECEIVED?
NO
YES
S3802
LOG-ON PROCESS
S3803
AUTHENTICATION OK?
NO
YES
S3805
TRANSMIT AUTHENTICATION RESULT (AUTHENTICATION OK) THAT INCLUDES REGISTERED FACILITY INFORMATION
S3804
TRANSMIT AUTHENTICATION RESULT (AUTHENTICATION NG)
END
S3806
HAS PARTICULAR-EVENT INFORMATION BEEN RECEIVED?
NO
YES
S3807
TRANSMIT EVENT REQUEST
S3808
HAS EVENT INFORMATION BEEN RECEIVED?
NO
YES
S3809
TRANSMIT POSITION INFORMATION REQUEST
G

FIG.39

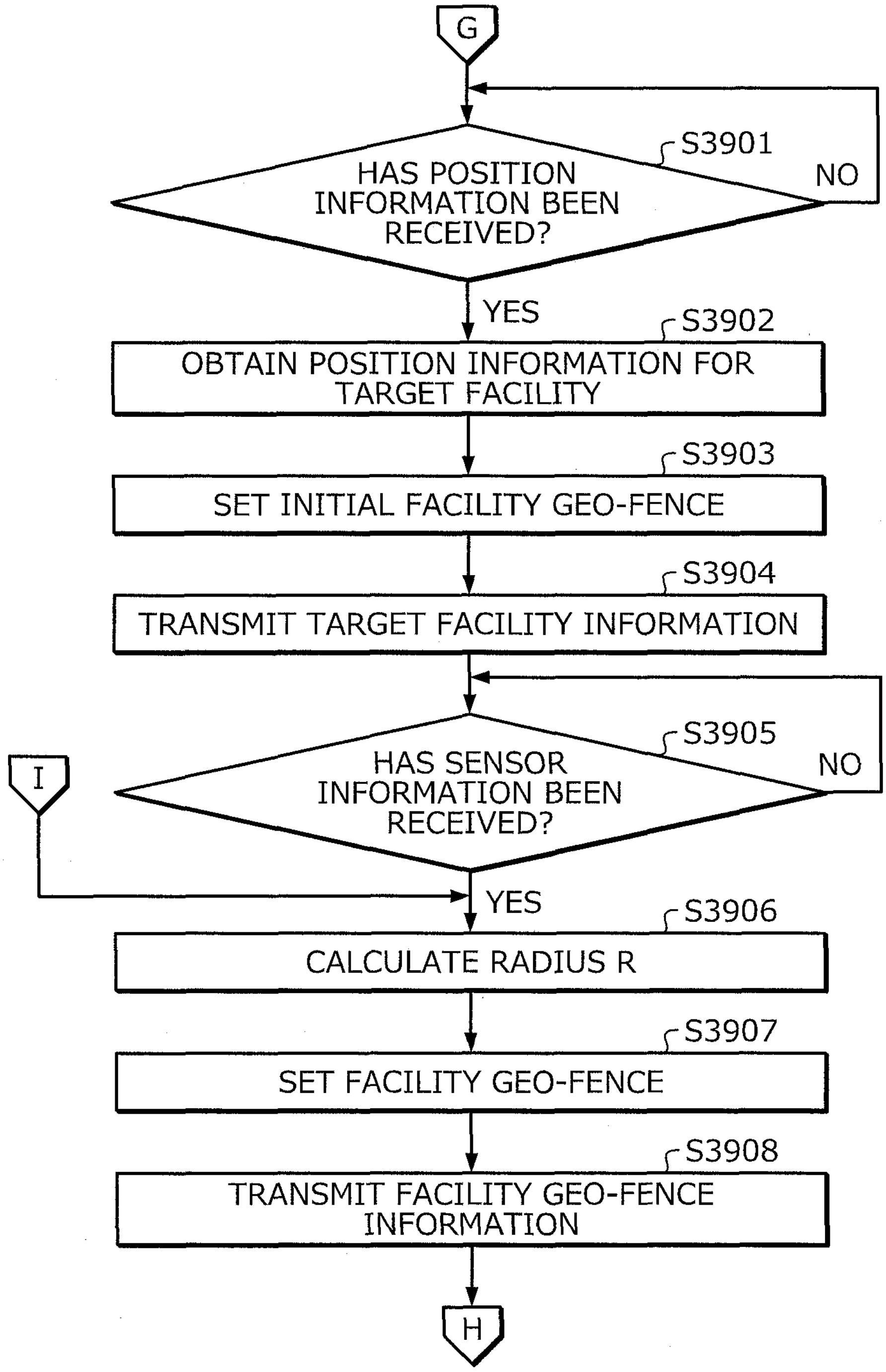
G
S3901
HAS POSITION INFORMATION BEEN RECEIVED?
NO
YES
S3902
OBTAIN POSITION INFORMATION FOR TARGET FACILITY
S3903
SET INITIAL FACILITY GEO-FENCE
S3904
TRANSMIT TARGET FACILITY INFORMATION
S3905
HAS SENSOR INFORMATION BEEN RECEIVED?
NO
I
YES
S3906
CALCULATE RADIUS R
S3907
SET FACILITY GEO-FENCE
S3908
TRANSMIT FACILITY GEO-FENCE INFORMATION
H

FIG.40

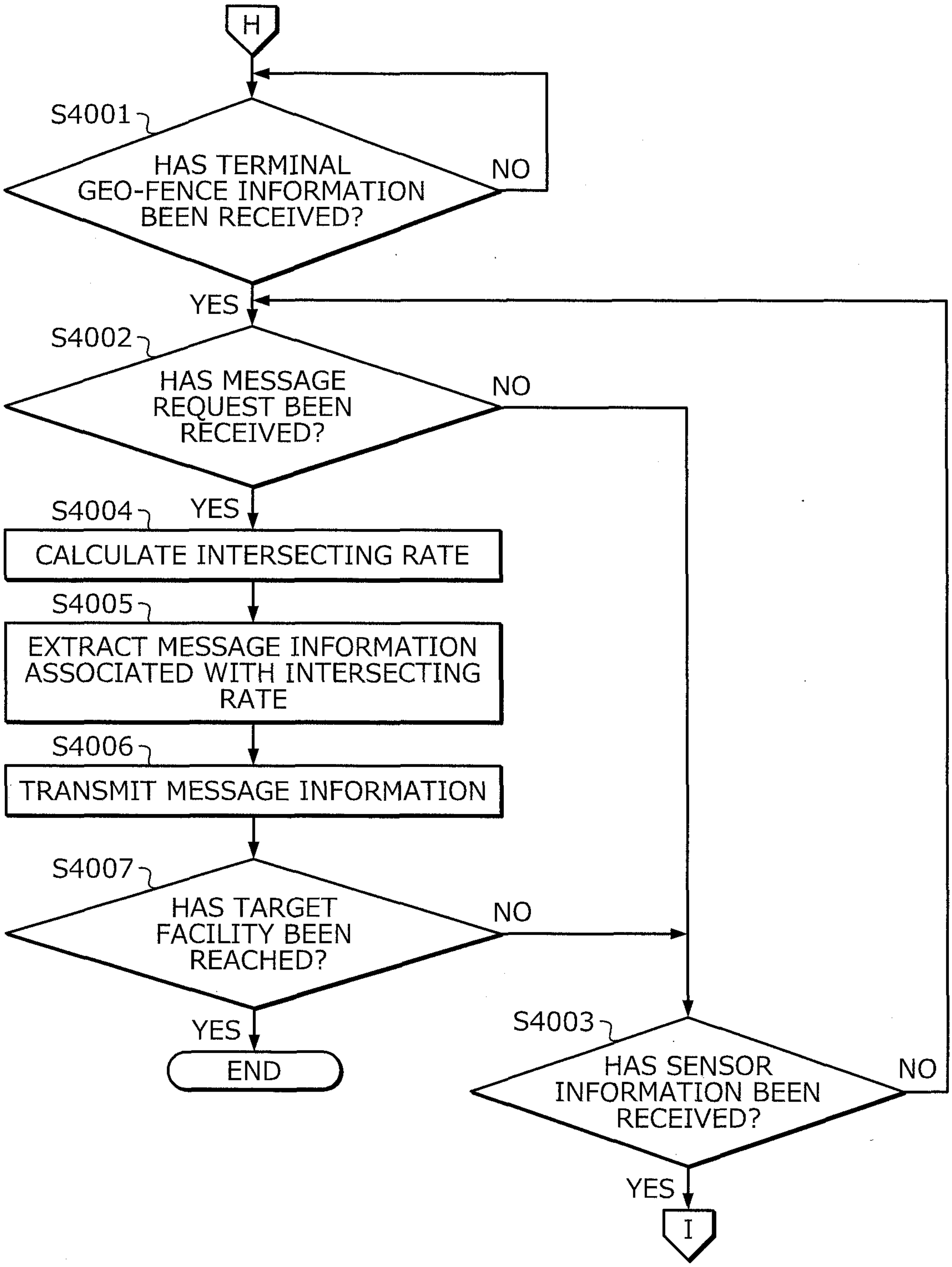
H
S4001
HAS TERMINAL GEO-FENCE INFORMATION BEEN RECEIVED?
NO
YES
S4002
HAS MESSAGE REQUEST BEEN RECEIVED?
NO
YES
S4004
CALCULATE INTERSECTING RATE
S4005
EXTRACT MESSAGE INFORMATION ASSOCIATED WITH INTERSECTING RATE
S4006
TRANSMIT MESSAGE INFORMATION
S4007
HAS TARGET FACILITY BEEN REACHED?
NO
YES
END
S4003
HAS SENSOR INFORMATION BEEN RECEIVED?
NO
YES
I

**INTERNATIONAL SEARCH REPORT**

International application No.
PCT/JP2015/065812

A. CLASSIFICATION OF SUBJECT MATTER
*G06F17/30*(2006.01)i

According to International Patent Classification (IPC) or to both national classification and IPC

B. FIELDS SEARCHED

Minimum documentation searched (classification system followed by classification symbols)
G06F17/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2002-032375 A (Sharp Corp.),<br>31 January 2002 (31.01.2002),<br>claims 9, 10, 13; paragraph [0066]; fig. 10<br>(Family: none) | 1-4,6,8<br>5,7,9-14 |
| A | JP 2003-244738 A (NEC Software Chubu, Ltd.),<br>29 August 2003 (29.08.2003),<br>entire text; all drawings<br>(Family: none) | 1-14 |
| A | JP 11-051666 A (Mitsubishi Electric Corp.),<br>26 February 1999 (26.02.1999),<br>entire text; all drawings<br>(Family: none) | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 June 2015 (26.06.15) | 07 July 2015 (07.07.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/065812

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-279438 A (Nippon Hoso Kyokai), 27 September 2002 (27.09.2002), entire text; all drawings (Family: none) | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014510429 W
- JP 2013246113 A
- JP 2014013586 A
- JP 2012505481 W